# EUROPEAN PATENT SPECIFICATION

(11) **EP 4 535 767 B1**
(45) Date of publication and mention of the grant of the patent: **02.12.2026**
(21) Application number: 23835638.0
(22) Date of filing: 16.03.2023
(51) Int. Cl.: H04M 1/02, F16C 11/04, G06F 1/16

(54) **FOLDABLE ELECTRONIC DEVICE**
FALTBARE ELEKTRONISCHE VORRICHTUNG
DISPOSITIF ÉLECTRONIQUE PLIABLE

(30) Priority: 04.07.2022 KR 20220082120; 08.08.2022 KR 20220098552
(43) Date of publication of application: 09.04.2025
(73) Proprietor: Samsung Electronics Co., Ltd., Suwon-si, Gyeonggi-do 16677 (KR)
(72) Inventor: KIM, Jongkeun, Suwon-si, Gyeonggi-do 16677 (KR); KIM, Jongyoon, Suwon-si, Gyeonggi-do 16677 (KR); KIM, Hyungsoo, Suwon-si, Gyeonggi-do 16677 (KR); PARK, Daehyeong, Suwon-si, Gyeonggi-do 16677 (KR)
(74) Representative: HGF
(86) International application number: PCT/KR2023/003520
(87) International publication number: WO 2024/010168

(56) References cited:
- CN-A- 112 911 033
- KR-A- 20190 097 898
- KR-A- 20200 126 524
- KR-A- 20210 068 880
- US-B1- 10 036 188

## Description

### FOLDABLE ELECTRONIC DEVICE

### [Technical Field]

The present disclosure relates to a foldable electronic device.

### [Background Art]

When a foldable electronic device switches from an unfolded state to a folded state, an area of the flexible display module, which corresponds to a folding portion of the foldable electronic device, may be transformed and disposed from an unfolded state to a bent state.

The information described above may be provided as the related art for the purpose of enhancing the understanding of the present disclosure. No assertion or determination is made with respect to the applicability of any of the above-mentioned as the prior art related to the present disclosure.

Document KR 2020 0126524 A discloses, according to its abstract, the objective of providing a hinge structure capable of optimizing a structure arrangement associated with hinge operations and an electronic device including the same. According to various examples, the hinge structure comprises: a first rotary bracket (211) for rotating about a first virtual axis (11) within a first range; a second rotary bracket (212) for rotating about a second virtual axis (12) within a second range; a fixing bracket (213) on which the first rotary bracket and the second rotary bracket are fixed; a first rotary member for rotating around a first rotary shaft and a second rotary member for rotating around a second rotary shaft; a first arm unit (221) including a first basic body (221_1), a first connection unit (221_2) connected to the first rotary bracket, a first insertion unit (221_3) of which one side is inserted into the first rotary member, and a first rotary cam (221_4) arranged adjacent to the first insertion unit; a second arm unit (222) including a second basic body (222_1), a second connection unit (222_2) connected to the second rotary bracket, a second insertion unit (222_3) of which one side is inserted into the second rotary member (232), and a second rotary cam (222_4) arranged adjacent to the second insertion unit; a cam unit (241) having irregularities corresponding to the first rotary cam and the second rotary cam; a first elastic body (242a) which is inserted into the first rotary member and supports at least one side of the cam unit toward the first arm unit; a second elastic body (242b) which is inserted into the second rotary member and supports at least the other side of the cam unit toward the second arm unit; and a support bracket (243) to support the first elastic body and the second elastic body.

### [Disclosure of Invention]

### [Technical Problem]

When the foldable electronic device switches from the unfolded state to the folded state, bending stress may occur in the area of the flexible display module that corresponds to the folding portion of the foldable electronic device.

Embodiments of the present disclosure may provide a foldable electronic device capable of reducing bending stress applied to the area of the flexible display module that corresponds to the folding portion of the foldable electronic device.

Technical problems to be solved by the present disclosure are not limited to the above-mentioned technical problems, and other technical problems, which are not mentioned above, may be understood from the following descriptions by those skilled in the art to which the present disclosure pertains.

### [Solution to Problem]

The scope of protection conferred is determined from the claims.

Disclosed herein is that a foldable electronic device includes a first housing and a second housing. The foldable electronic device includes a hinge module configured to connect the first housing and the second housing. The hinge module includes a first part configured to be rotatable about a first rotation axis. The first part includes a first pin rail. The hinge module includes a second part configured to be rotatable about a second rotation axis. The second rotation axis is parallel to a first rotation axis and positioned to be spaced apart from the first rotation axis. The hinge module includes a first bracket connected to the first part and the second part. The first bracket is fixed to the first housing. The hinge module includes a first pin disposed in the second part and provided in parallel with the second rotation axis. The first pin is inserted into the first pin rail. The first part and the first bracket are connected to each other and configured to be slidable in the first linear direction. The second part and the first bracket are connected to each other and configured to be slidable in the second linear direction different from the first linear direction. When the angle between the first housing and the second housing is changed, the first part and the first bracket mutually slide, and the second part and the first bracket mutually slide. When the angle between the first housing and the second housing is changed, a force or motion is transmitted between the first part and the second part by the interaction between the first pin rail and the first pin.

### [Advantageous Effects of Invention]

The foldable electronic device according to various embodiments of the present disclosure may reduce bending stress on the area of the flexible display module that corresponds to the hinge part. It is possible to reduce buckling occurring on the area of the flexible display module corresponding to the hinge part when the foldable electronic device switches from the unfolded state to the folded state.

Other effects, which may be obtained or expected by the various embodiments of the present disclosure, will be directly or implicitly disclosed in the detailed description on the embodiments of the present disclosure.

### [Brief Description of Drawings]

The above and other aspects, features, and advantages of specific embodiments of the present disclosure will become clearer from the following detailed description, which is provided together with the accompanying drawings.
FIG. 1 is a block diagram of an electronic device in a network environment according to an embodiment of the present disclosure.
FIG. 2 is a view illustrating a foldable electronic device in an unfolded state according to an embodiment of the present disclosure.
FIG. 3 is a view illustrating the foldable electronic device in a folded state according to the embodiment of the present disclosure.
FIG. 4 is a partially exploded perspective view of the foldable electronic device in the unfolded state according to the embodiment of the present disclosure.
FIG. 5 is a view illustrating a foldable housing of the foldable electronic device in the unfolded state according to the embodiment of the present disclosure.
FIG. 6 is a view illustrating a state in which a first plate and a second plate are separated in the foldable housing according to the embodiment of the present disclosure.
FIG. 7 is a cross-sectional view illustrating the unfolded state of the foldable electronic device according to the embodiment of the present disclosure.
FIG. 8 is a cross-sectional view illustrating the folded state of the foldable electronic device according to the embodiment of the present disclosure.
FIG. 9 is an exploded perspective view illustrating a first hinge module and a perspective view illustrating the first plate and the second plate according to the embodiment of the present disclosure.
FIG. 10 is a perspective view of the first hinge module according to the embodiment of the present disclosure.
FIG. 11 is a partial perspective view of a hinge part and a view illustrating the foldable housing according to the embodiment of the present disclosure.
FIG. 12 is views illustrating a state in which a first part and a first sliding support element are coupled and a cross-sectional view taken along line D-D' and illustrating a state in which the first part and the first sliding support element are coupled according to the embodiment of the present disclosure.
FIG. 13 is views illustrating a state in which a third part and a second sliding support element are coupled and a cross-sectional view taken along line E-E' and illustrating a state in which the third part and the second sliding support element are coupled according to the embodiment of the present disclosure.
FIG. 14 is views illustrating a second part according to the embodiment of the present disclosure.
FIG. 15 is views illustrating a fourth part according to the embodiment of the present disclosure.
FIG. 16 is views illustrating a first bracket, a cross-sectional view taken along line F-F' and illustrating the first bracket, and a cross-sectional view taken along line G-G' and illustrating the first bracket according to the embodiment of the present disclosure.
FIG. 17 is views illustrating a second bracket, a cross-sectional view taken along line H-H' and illustrating the second bracket, and a cross-sectional view taken along line I-I' and illustrating the second bracket according to the embodiment of the present disclosure.
FIG. 18 is a cross-sectional view illustrating a first circular gear, a second circular gear, a third circular gear, and a fourth circular gear according to the embodiment of the present disclosure.
FIG. 19 is a view illustrating the first hinge module in the unfolded state of the foldable electronic device, a cross-sectional view taken along line J-J' and illustrating the first hinge module, a cross-sectional view taken along line K-K' and illustrating the first hinge module, a cross-sectional view taken along line L-L' and illustrating the first hinge module, and a cross-sectional view taken along line M-M' and illustrating the first hinge module according to the embodiment of the present disclosure.
FIG. 20 is a partial perspective view illustrating the hinge part in the folded state of the foldable electronic device according to the embodiment of the present disclosure.
FIG. 21 is a view illustrating the first hinge module, a cross-sectional view taken along line N-N' and illustrating the first hinge module, a cross-sectional view taken along line O-O' and illustrating the first hinge module, and a cross-sectional view taken along line P-P' and illustrating the first hinge module according to the embodiment of the present disclosure.
FIG. 22 is a perspective view of the foldable housing and a view illustrating the foldable housing in the foldable electronic device in the unfolded state, a perspective view of the foldable housing and a view illustrating the foldable housing in the foldable electronic device in an intermediate state, and a perspective view of the foldable housing and a view illustrating the foldable housing in the foldable electronic device in the folded state according to the embodiment of the present disclosure.
FIG. 23 is a cross-sectional view of the foldable electronic device in the unfolded state, a cross-sectional view of the foldable electronic device in the intermediate state, and a cross-sectional view of the foldable electronic device in the folded state according to the embodiment of the present disclosure.
FIG. 24 is a cross-sectional view illustrating the unfolded state of the foldable electronic device according to various embodiments of the present disclosure.
FIG. 25 is a cross-sectional view illustrating the folded state of the foldable electronic device according to various embodiments of the present disclosure.

### [Mode for the Invention]

Hereinafter, various example embodiments of the disclosure disclosed herein will be described in greater detail with reference to the accompanying drawings.

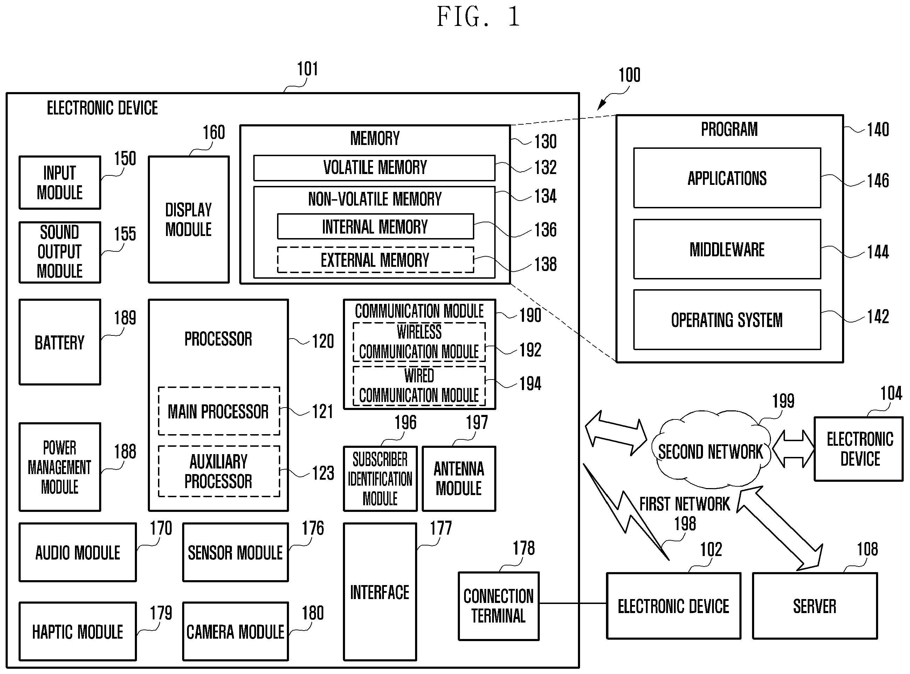

FIG. 1 is a block diagram of an electronic device 101 in a network environment 100 according to an embodiment of the disclosure.

Referring to FIG. 1, the electronic device 101 in the network environment 100 may communicate with an external electronic device 102 via a first network 198 (e.g., a short-range wireless communication network), or at least one of an external electronic device 104 or a server 108 via a second network 199 (e.g., a long-range wireless communication network). The electronic device 101 may communicate with the external electronic device 104 via the server 108. The electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, and/or an antenna module 197. In some embodiments of the disclosure, at least one (e.g., the connection terminal 178) of the components may be omitted from the electronic device 101, or one or more other components may be added in the electronic device 101. In some embodiments of the disclosure, some of the components may be implemented as single integrated circuitry. For example, the sensor module 176, the camera module 180, or the antenna module 197 may be implemented as embedded in single component (e.g., the display module 160).

The processor 120 may execute, for example, software (e.g., a program 140) to control at least one other component (e.g., a hardware or software component) of the electronic device 101 coupled with the processor 120, and may perform various data processing or computation. As at least part of the data processing or computation, the processor 120 may load a command or data received from another component (e.g., the sensor module 176 or the communication module 190) in a volatile memory 132, process the command or the data stored in the volatile memory 132, and store resulting data in a non-volatile memory 134. The processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. Additionally or alternatively, the auxiliary processor 123 may be adapted to consume less power than the main processor 121, or to be specific to a specified function. The auxiliary processor 123 may be implemented as separate from, or as part of the main processor 121.

The auxiliary processor 123 may control, for example, at least some of functions or states related to at least one component (e.g., the display module 160, the sensor module 176, or the communication module 190) among the components of the electronic device 101, instead of the main processor 121 while the main processor 121 is in an inactive (e.g., a sleep) state, or together with the main processor 121 while the main processor 121 is in an active state (e.g., executing an application). The auxiliary processor 123 (e.g., an ISP or a CP) may be implemented as part of another component (e.g., the camera module 180 or the communication module 190) functionally related to the auxiliary processor 123. According to an embodiment of the disclosure, the auxiliary processor 123 (e.g., a neural network processing device) may include a hardware structure specified for processing an artificial intelligence model. The artificial intelligence model may be created through machine learning. Such learning may be performed, for example, in the electronic device 101 itself on which the artificial intelligence model is performed, or may be performed through a separate server (e.g., the server 108). The learning algorithms may include, for example, supervised learning, unsupervised learning, semi-supervised learning, or reinforcement learning, but is not limited thereto. The artificial intelligence model may include a plurality of artificial neural network layers. The artificial neural network may be any of a deep neural network (DNN), a convolutional neural network (CNN), a recurrent neural network (RNN), a restricted Boltzmann machine (RBM), a deep belief network (DBN), a bidirectional recurrent DNN (BRDNN), a deep Q-network, or a combination of two or more of the above-mentioned networks, but is not limited the above-mentioned examples. In addition to the hardware structure, the artificial intelligence model may additionally or alternatively include a software structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 and/or the non-volatile memory 134.

The program 140 may be stored in the memory 130 as software, and may include, for example, an operating system (OS) 142, middleware 144, and/or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record, and the receiver may be used for incoming calls. The receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. The display module 160 may include touch circuitry (e.g., a touch sensor) adapted to detect a touch, or sensor circuitry (e.g., a pressure sensor) adapted to measure the intensity of force incurred by the touch.

The audio module 170 may convert a sound into an electrical signal and vice versa. The audio module 170 may obtain the sound via the input module 150, or output the sound via the sound output module 155 or a headphone of an external electronic device (e.g., the external electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. The sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the external electronic device 102) directly (e.g., wiredly) or wirelessly. The interface 177 may include, for example, a high-definition multimedia interface (HDMI), a universal serial bus (USB) interface, a secure digital (SD) card interface, and/or an audio interface.

The connecting terminal 178 may include a connector via which the electronic device 101 may be physically connected with the external electronic device (e.g., the external electronic device 102). The connecting terminal 178 may include, for example, an HDMI connector, a USB connector, an SD card connector, and/or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. The haptic module 179 may include, for example, a motor, a piezoelectric element, or an electric stimulator.

The camera module 180 may capture a still image or moving images. The camera module 180 may include one or more lenses, image sensors, ISPs, or flashes.

The power management module 188 may manage power supplied to or consumed by the electronic device 101. The power management module 188 may be implemented as at least part of, for example, a power management integrated circuit (PMIC).

The battery 189 may supply power to at least one component of the electronic device 101. The battery 189 may include, for example, a primary cell which is not rechargeable, a secondary cell which is rechargeable, and/or a fuel cell.

The communication module 190 may support establishing a direct (e.g., wired) communication channel or a wireless communication channel between the electronic device 101 and the external electronic device (e.g., the external electronic device 102, the external electronic device 104, or the server 108) and performing communication via the established communication channel. The communication module 190 may include one or more CPs that are operable independently from the processor 120 (e.g., the AP) and supports a direct (e.g., wired) communication or a wireless communication. The communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BLUETOOTH, wireless-fidelity (Wi-Fi) direct, or IR data association (IrDA)) or the second network 199 (e.g., a long-range communication network, such as a legacy cellular network, a 5^{th} generation (5G) network, a next generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network, after a 4^{th} generation (4G) network, and next-generation communication technology, e.g., new radio (NR) access technology. The NR access technology may support high-speed transmission of high-capacity data (i.e., enhanced mobile broadband (eMBB)), minimization of terminal power and connection of multiple terminals (massive machine type communications (mMTC)), or high reliability and low latency (ultra-reliable and low-latency communications (URLLC)). The wireless communication module 192 may support a high-frequency band (e.g., a mmWave band) to achieve, for example, a high data transmission rate. The wireless communication module 192 may support various technologies for securing performance in a high-frequency band, such as beamforming, massive multiple-input and multiple-output (MIMO), full-dimensional MIMO (FD-MIMO), array antenna, analog beam-forming, or large-scale antenna. The wireless communication module 192 may support various requirements specified in the electronic device 101, an external electronic device (e.g., external the electronic device 104), or a network system (e.g., the second network 199). According to an embodiment of the disclosure, the wireless communication module 192 may support a peak data rate for implementing eMBB (e.g., 20Gbps or more), loss coverage for implementing mMTC (e.g., 164dB or less), or U-plane latency for realizing URLLC (e.g., 0.5ms or less for each of downlink (DL) and uplink (UL) or 1ms or less for round trip).

The antenna module 197 may transmit or receive a signal or power to or from the outside (e.g., the external electronic device) of the electronic device 101. The antenna module 197 may include an antenna including a radiating element including a conductive material or a conductive pattern formed in or on a substrate (e.g., a printed circuit board (PCB)). The antenna module 197 may include a plurality of antennas (e.g., an antenna array). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. Another component (e.g., a radio frequency integrated circuit (RFIC)) other than the radiating element may be additionally formed as part of the antenna module 197.

According to various embodiments of the disclosure, the antenna module 197 may form a mmWave antenna module. According to an embodiment of the disclosure, the mmWave antenna module may include a PCB, an RFIC that is disposed on or adjacent to a first surface (e.g., the bottom surface) of the PCB and is capable of supporting a predetermined high-frequency band (e.g., a mmWave band), and a plurality of antennas (e.g., array antennas) that is disposed on or adjacent to a second surface (e.g., the top surface or the side surface) of the PCB and is capable of transmitting or receiving a signal of the predetermined high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

Commands or data may be transmitted or received between the electronic device 101 and the external electronic device 104 via the server 108 coupled with the second network 199. Each of the external electronic devices 102 or 104 may be a device of a same type as, or a different type, from the electronic device 101. All or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide an ultra-low delay service using, for example, distributed computing or MEC. In another embodiment of the disclosure, the external electronic device 104 may include an internet of things (IoT) device. The server 108 may be an intelligent server using machine learning and/or neural networks. According to an embodiment of the disclosure, the external electronic device 104 or the server 108 may be included in the second network 199. The electronic device 101 may be applied to an intelligent service (e.g., smart home, smart city, smart car, or healthcare) based on 5G communication technology or IoT-related technology.

An electronic device according to an embodiment of the disclosure may be one of various types of electronic devices. The electronic devices may include a portable communication device (e.g., a smartphone), a computer device, a portable multimedia device, a portable medical device, a camera, a wearable device, or a home appliance. However, the electronic device is not limited to any of those described above.

Various embodiments of the disclosure and the terms used herein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). If an element (e.g., a first element) is referred to, with or without the term "operatively" or "communicatively," as "coupled with," "coupled to," "connected with," or "connected to" another element (e.g., a second element), the element may be coupled with the other element directly (e.g., wiredly), wirelessly, or via a third element.

The term "module" may include a unit implemented in hardware, software, or firmware, or any combination thereof, and may interchangeably be used with other terms, for example, "logic," "logic block," "part," or "circuitry". A module may be a single integral component, or a minimum unit or part thereof, adapted to perform one or more functions. For example, according to an embodiment of the disclosure, the module may be implemented in a form of an application-specific integrated circuit (ASIC).

Various embodiments as set forth herein may be implemented as software (e.g., the program 140) including one or more instructions that are stored in a storage medium (e.g., an internal memory 136 or an external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

A method according to an embodiment of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PLAYSTORE^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

Each component (e.g., a module or a program) of the above-described components may include a single entity or multiple entities. One or more of the above-described components may be omitted, or one or more other components may be added. Alternatively or additionally, a plurality of components (e.g., modules or programs) may be integrated into a single component. In such a case, the integrated component may perform one or more functions of each of the plurality of components in the same or similar manner as they are performed by a corresponding one of the plurality of components before the integration. Operations performed by the module, the program, or another component may be carried out sequentially, in parallel, repeatedly, or heuristically, or one or more of the operations may be executed in a different order or omitted, or one or more other operations may be added.

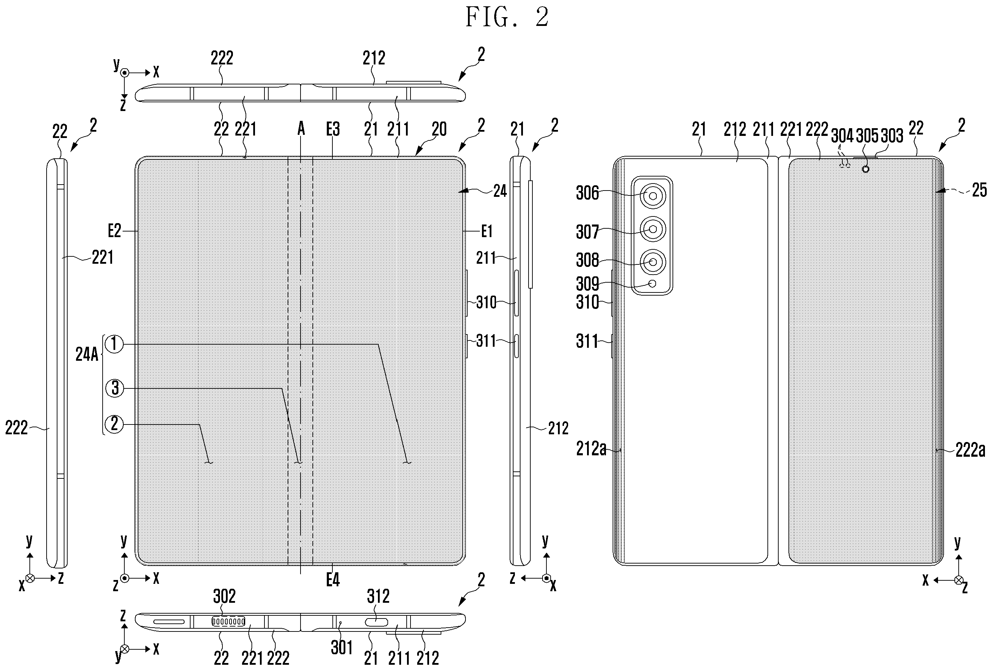

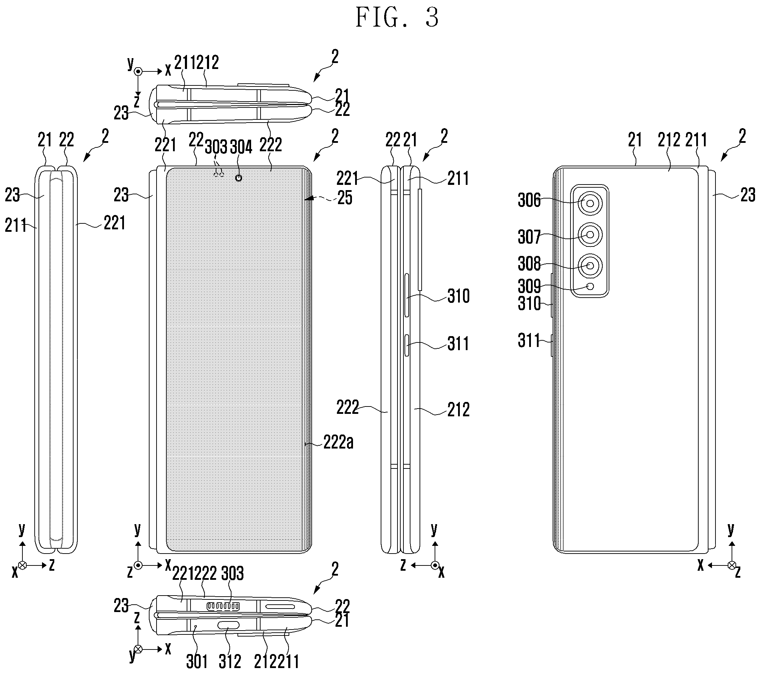

FIG. 2 is views illustrating a foldable electronic device 2 in an unfolded state (or a flat state) according to the embodiment of the present disclosure. FIG. 3 is views illustrating the foldable electronic device 2 in a folded state according to the embodiment of the present disclosure.

With reference to FIGS. 2 and 3, the foldable electronic device 2 may include a foldable housing 20, and a flexible display module 24 disposed in the foldable housing 20.

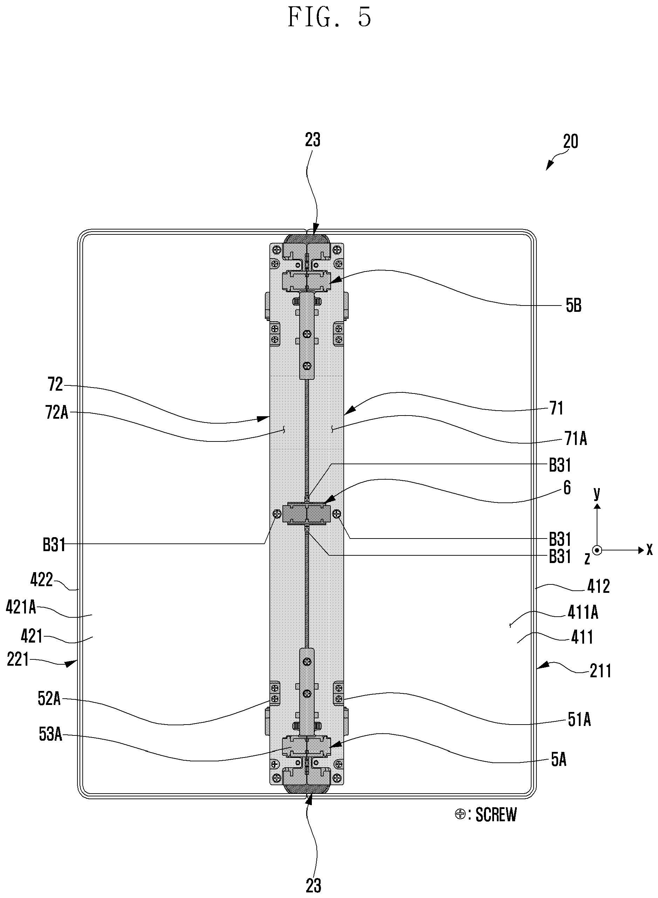

According to the embodiment, the foldable housing 20 may include a first housing (or a first housing part or a first housing structure) 21, a second housing (or a second housing part or a second housing structure) 22, a hinge housing 23, and/or a hinge part. The first housing 21 and the second housing 22 may be connected by the hinge part and rotate about the hinge part relative to each other. The hinge part may include one or more hinge modules (or hinge assemblies) (e.g., a first hinge module 5A or a second hinge module 5B in FIG. 5).

According to the embodiment, a display area 24A of the flexible display module 24 is an active area of the flexible display module 24 that may display images. The display area 24A may include a first display area (or a first active area or a first screen area) ①, a second display area (or a second active area or a second screen area) ②, and a third display area (or a third active area or a third screen area) ③ configured to connect the first display area ① and the second display area ②. The first display area ① may be positioned to correspond to the first housing 21. The second display area ② may be positioned to correspond to the second housing 22. The third display area ③ may be positioned to correspond to the hinge part. The first display area ① may be disposed on the first housing 21, and a shape of the first display area ① may be maintained by being supported by the first housing 21. The second display area ② may be disposed on the second housing 22, and a shape of the second display area ② may be maintained by being supported by the second housing 22. For example, the first display area ① and the second display area ② may be provided substantially flat. The unfolded state (see FIG. 2) of the foldable electronic device 2 may be a state in which the third display area ③ is disposed substantially flat. In the unfolded state of the foldable electronic device 2, the first display area ① and the second display area ② may define an angle of about 180 degrees, and the display area 24A including the first display area ①, the second display area ②, and the third display area ③ may be provided (or disposed) in the form of a substantially flat surface. The third display area ③, which connects the first display area ① and the second display area ②, may be disposed flat because of a relative position between the first display area ① disposed on the first housing 21 and the second display area ② disposed on the second housing 22 in the unfolded state of the foldable electronic device 2. In the unfolded state of the foldable electronic device 2, the third display area ③ may be pulled from two opposite sides by the first display area ① and the second display area ②, and a pulling force may be provided to dispose the third display area ③ flat and reduce damage to the third display area ③. In the unfolded state of the foldable electronic device 2, the third display area ③ is pulled by the first display area ① and the second display area ②, such that stress may be reduced, and the third display area ③ may have an extended width so that the third display area ③ may be disposed flat. In the unfolded state of the foldable electronic device 2, the hinge part may support the third display area ③. Even in case that an external force (e.g., external pressure such as a touch input made by a user's finger or a touch input made by an electronic pen) is applied to the third display area ③ in the unfolded state of the foldable electronic device 2, the third display area ③ may be maintained to be flat by being supported by the hinge part without sagging. The illustrated coordinate axes are illustrated based on the first housing 21. For example, a +z-axis direction may be interpreted as a direction in which a flat surface provided by the flat first display area ① is directed.

According to the embodiment, the foldable electronic device 2 may be provided in an in-folding manner so that the display area 24A of the flexible display module 24 is folded inward. FIG. 3 illustrates a fully folded state of the foldable electronic device 2 in which the first housing 21 and the second housing 22 are disposed so as not to become closer to each other any further. In the fully folded state of the foldable electronic device 2, the first display area ① and the second display area ② may be positioned to face each other, and the third display area ③ may be disposed in a bent shape. In the fully folded state of the foldable electronic device 2, an angle between the first housing 21 and the second housing 22 (or an angle between the first display area ① and the second display area ②) may be about 0 to about 10 degrees, and the display area 24A may be substantially invisible. Although not illustrated, the intermediate state of the foldable electronic device 2 may be a state between the unfolded state and the fully folded state, or a state in which the foldable electronic device 2 is less folded than in the fully folded state. In the intermediate state in which an angle between the first housing 21 and the second housing 22 is a predetermined angle or more, it is possible to provide a use environment in which the user may use the display area 24A without substantial difficulty. Hereinafter, 'the folded state of the foldable electronic device 2' disclosed in the disclosure may refer to the fully folded state as opposed to the intermediate state that is a less folded state.

According to the embodiment, in the unfolded state (see FIG. 2) of the foldable electronic device 2, the display area 24A of the flexible display module 24 may be symmetric with respect to a centerline A of the foldable electronic device 2. In the unfolded state of the foldable electronic device 2, the centerline A may correspond to a middle portion of a width of the third display area ③ extending from a first boundary between the first display area ① and the third display area ③ to a second boundary between the second display area ② and the third display area ③. In the folded state (see FIG. 3) of the foldable electronic device 2, the third display area ③ disposed in a bent shape may be substantially symmetric with respect to the centerline A of the foldable electronic device 2. In the unfolded state of the foldable electronic device 2, the display area 24A may have a substantially rectangular shape. The display area 24A may include a first edge E1, a second edge E2, a third edge E3, and a fourth edge E4. The first edge E1 and the second edge E2 may be substantially parallel to the centerline A. The third edge E3 may connect one end of the first edge E1 and one end of the second edge E2, and the fourth edge E4 may connect the other end of the first edge E1 and the other end of the second edge E2. The first display area ① may include the first edge E1, a part of the third edge E3, and a part of the fourth edge E4. The second display area ② may include the second edge E2, a part of the third edge E3, and a part of the fourth edge E4. The third display area ③ may include a part of the third edge E3 and a part of the fourth edge E4. In the folded state of the foldable electronic device 2, the first edge E1 and the second edge E2 may be aligned to overlap each other. In the folded state of the foldable electronic device 2, a part of the third edge E3 included in the first display area ① and a part of the third edge E3 included in the second display area ② may be aligned to overlap each other. In the folded state of the foldable electronic device 2, a part of the fourth edge E4 included in the first display area ① and a part of the fourth edge E4 included in the second display area ② may be aligned to overlap each other.

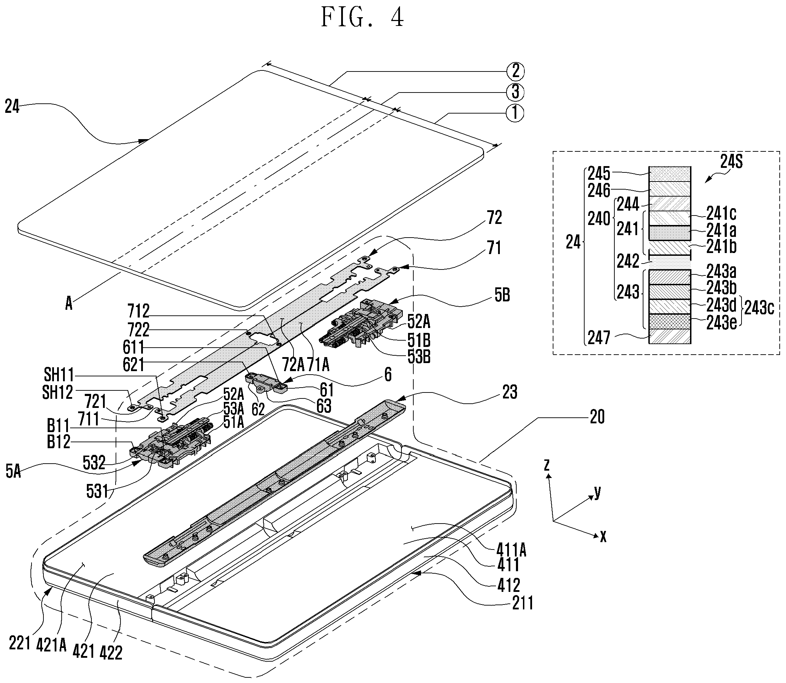

According to the embodiment, the first housing 21 may include a first frame (or a first frame structure or a first framework) 211 and/or a first cover 212 disposed on the first frame 211. The first frame 211 may include a first side (or a first lateral member, a first lateral structure, or a first lateral bezel structure) (e.g., a first side 412 in FIG. 4). The first side may be disposed along the edge of the first display area ① of the flexible display module 24. The first side may provide a first side surface of the foldable electronic device 2 corresponding to the first display area ① of the foldable electronic device 2. The first frame 211 may include a first support part (e.g., a first support part 411 in FIG. 4) extending from the first side or connected to the first side. The first display area ① may be disposed on the first support part, and the first support part may support the first display area ①. The first display area ① and the first cover 212 may be positioned to be opposite to each other with the first support part of the first frame 211 interposed therebetween. The first side of the first frame 211 may be disposed to surround at least a part of a space between the first display area ① and the first cover 212. The first display area ① may provide one surface of an outer surface of the foldable electronic device 2, and the first cover 212 may provide the other surface of the outer surface of the foldable electronic device 2 that is directed in a direction substantially opposite to the first display area ①. Various electrical constituent elements (or electronic components), such as a printed circuit board or a battery, may be disposed on the first support part and provided between the first support part of the first frame 211 and the first cover 212.

According to the embodiment, the second housing 22 may include a second frame (or a second frame structure or a second framework) 221, and/or a second cover 222 disposed on the second frame 221. The second frame 221 may include a second side (or a second lateral member, a second lateral structure, or a second lateral bezel structure) (e.g., a second side 422 in FIG. 4). The second side may be disposed along the edge of the second display area ② of the flexible display module 24. The second side may provide a second side surface of the foldable electronic device 2 corresponding to the second display area ② of the foldable electronic device 2. In the folded state (see FIG. 3) of the foldable electronic device 2, the first side of the first frame 211 and the second side of the second frame 221 may be aligned to overlap each other. The second frame 221 may include a second support part (e.g., a second support part 421 in FIG. 4) extending from the second side or connected to the second side. The second display area ② may be disposed on the second support part, and the second support part may support the second display area ②. The second display area ② and the second cover 222 may be positioned to be opposite to each other with the first support part of the second frame 221 interposed therebetween. The second side of the second frame 221 may be disposed to surround at least a part of a space between the second display area ② and the second cover 222. The second display area ② may provide one surface of an outer surface of the foldable electronic device 2, and the second cover 222 may provide the other surface of the outer surface of the foldable electronic device 2 that is directed in a direction substantially opposite to the second display area ②. Various electrical constituent elements (or electronic components), such as a printed circuit board or a battery, may be disposed on may be disposed on the second support part and provided between the second support part of the second frame 221 and the second cover 222.

According to the embodiment, the hinge housing (or a hinge cover) 23 may be coupled to the hinge part that connects the first frame 211 and the second frame 221. When the foldable electronic device 2 switches from the unfolded state (see FIG. 2) to the folded state (see FIG. 3), the relative position between the first housing 21 and the second housing 22 connected to each other by the hinge part is changed, and the state of the hinge part coupled to the hinge housing 23 is changed, such that a gap between the first housing 21 and the second housing 22 may be opened at a side opposite to the third display area ③, and the hinge housing 23 may be exposed to the outside through the opened gap. In the folded state of the foldable electronic device 2, the hinge housing 23 may be a part of an external appearance that covers the interior of the foldable electronic device 2 through the opened gap between the first housing 21 and the second housing 22. The hinge housing 23 may be exposed to a larger degree in the folded state in FIG. 3 than in the intermediate state. When the foldable electronic device 2 switches from the folded state to the unfolded state, the relative position between the first housing 21 and the second housing 22 connected to each other by the hinge part is changed, and the state of the hinge part coupled to the hinge housing 23 is changed, such that the gap between the first housing 21 and the second housing 22 may be closed at the side opposite to the third display area ③, and the hinge housing 23 may be positioned in the internal space, which is made by a combination of the first housing 21 and the second housing 22, without being exposed to the outside.

According to the embodiment, the foldable electronic device 2 may include a display 25 positioned between the second frame 221 and the second cover 222. A flexible display included in the flexible display module 24 may be interpreted as a 'first display', and the display 25 may be interpreted as a 'second display'. The second cover 222 may be substantially transparent, and the display 25 may be visible through the second cover 222. The foldable electronic device 2 may be configured to display images by means of the display 25 instead of the flexible display module 24 in the folded state.

According to the embodiment, the first cover 212 may include a first curved surface area 212a curved toward the first display area ① and extending seamlessly while corresponding to the first edge E1 of the display area 24A. The second cover 222 may include a second curved surface area 222a curved toward the second display area ② and extending seamlessly while corresponding to the second edge E2 of the display area 24A. The first curved surface area 212a and the second curved surface area 222a may be provided symmetrically to be opposite to each other in the unfolded state or the folded state (see FIG. 3) of the foldable electronic device 2 (see FIG. 2), thereby contributing to an aesthetic external appearance. In the embodiment, the display 25 may be a flexible display that may be disposed to be curved along the second curved surface area 222a of the second cover 222 while corresponding to the second curved surface area 222a. In various embodiments, the first cover 212 may be provided to be substantially flat without the first curved surface area 212a. In various embodiments, the second cover 222 may be provided to be substantially flat without the second curved surface area 222a. In this case, the display 25 may be a substantially rigid display.

According to the embodiment, the foldable electronic device 2 may include at least one of one or more audio modules (e.g., the audio module 170 in FIG. 1), one or more sensor modules (e.g., the sensor module 176 in FIG. 1), one or more camera modules (e.g., the camera module 180 in FIG. 1), one or more light-emitting modules, one or more input modules (e.g., the input module 150 in FIG. 1), and/or one or more connection terminal modules (e.g., the interface 177 or the connection terminal 178 in FIG. 1). In various embodiments, the foldable electronic device 2 may exclude at least one of the constituent elements or further include other constituent elements. The positions or number of constituent elements included in the foldable electronic device 2 may be variously implemented without being limited to the illustrated examples.

For example, any one of the one or more audio modules may include a microphone positioned in the foldable electronic device 2 while corresponding to a microphone hole 301 provided in an external appearance of the foldable electronic device 2. In the illustrated example, the microphone hole 301 may be provided at the first side of the first frame 211, and the microphone may be positioned in the internal space of the first housing 21. The positions or number of microphones and microphone holes may be variously implemented without being limited to the illustrated example. In various embodiments, the foldable electronic device 2 may include a plurality of microphones utilized to detect a direction of sound.

For example, any one of the one or more audio modules may include a first speaker for multimedia playback (or recording playback) positioned in the foldable electronic device 2 while corresponding to a first speaker hole 302 provided in the external appearance of the foldable electronic device 2. In the illustrated example, the first speaker hole 302 may be provided at the second side of the second frame 221, and the first speaker may be positioned in the internal space of the second housing 22. For example, any one of the one or more audio modules may include a second telephone speaker (e.g., a telephone receiver) positioned in the foldable electronic device 2 while corresponding to a second speaker hole (e.g., a receiver hole) 303 provided in the external appearance of the foldable electronic device 2. In the illustrated example, the second speaker hole 303 may be provided in the second frame 221 and disposed adjacent to the second cover 222, and the second speaker may be positioned in the internal space of the second housing 22. The positions or number of speakers and speaker holes may be variously implemented without being limited to the illustrated example. In various embodiments, the microphone hole and the speaker hole may be implemented as a single hole. In various embodiments, a piezoelectric speaker having no speaker hole may be provided.

For example, one or more sensor modules may generate electrical signals or data values corresponding to an internal operating state of the foldable electronic device 2 or an external environment state. In the embodiment, any one of the one or more sensor modules may include an optical sensor 304 positioned in the internal space of the second housing 22 while corresponding to the second cover 222. The optical sensor 304 may be aligned with and positioned in an opening provided in the display 25 or at least partially inserted into the opening. The external light may reach the optical sensor through the openings provided in the second cover 222 and the display 25. The optical sensor 304 may include, for example, a proximity sensor or an illumination sensor. The number or positions of optical sensors may be variously implemented without being limited to the illustrated example.

According to various embodiments, the optical sensor 304 may overlap at least a part of a display area of the display 25 and be positioned in the internal space of the second housing 22 when viewed from above the second cover 222. In this case, the sensing function of the optical sensor 304 may be performed in a state in which the optical sensor 304 or the position of the optical sensor 304 is not visually distinguished (or exposed) or visible. In the embodiment, the optical sensor 304 may be provided on a rear surface of the display 25 or provided below (or beneath) the display 25, and the optical sensor 304 or the position of the optical sensor 304 may not be visually distinguished (or exposed). In various embodiments, the optical sensor 304 may be aligned with or positioned in a recess provided in the rear surface of the display 25 or at least partially inserted into the recess. A partial area of the display 25, which at least partially overlaps the optical sensor 304, may include a pixel structure and/or a wiring structure different from those in another area. For example, a partial area of the display 25, which at least partially overlaps the optical sensor 304, may have a different pixel density compared to other areas. The pixel structure and/or wiring structure, which is formed in the partial area of the display 25 at least partially overlapping the optical sensor 304, may reduce a loss of light between the outside and the optical sensor 304. As another example, a plurality of pixels may not be disposed in the partial area of the display 25 that at least partially overlaps the optical sensor 304.

According to various embodiments, the sensor is not limited to the optical sensor 304 such as a proximity sensor or an illuminance sensor. Various other sensors may be positioned to correspond to the opening provided in the display 25, positioned on the rear surface of the display 25, or positioned below the display 25. For example, an optical, electrostatic, or ultrasonic biosensor (e.g., a fingerprint sensor) may be positioned to correspond to the opening provided in the display 25, positioned on the rear surface of the display 25, or positioned below the display 25.

According to various embodiments, various sensors may be positioned to correspond to the opening provided in the flexible display module 24, positioned on the rear surface of the flexible display module 24, or positioned below the flexible display module 24.

According to various embodiments, the foldable electronic device 2 may include various other sensors (e.g., a gesture sensor, a gyro sensor, a barometric pressure sensor, a magnetic sensor, an acceleration sensor, a grip sensor, a color sensor, an infrared (IR) sensor, a temperature sensor, or a humidity sensor), and the positions of the sensors may be variously determined.

According to the embodiment, the one or more camera modules may include one or more lenses, an image sensor, and/or an image signal processor. For example, the one or more camera modules may include a first camera module 305, a second camera module 306, a third camera module 307, and/or a fourth camera module 308.

According to the embodiment, the first camera module 305 may be positioned in the internal space of the second housing 22 while corresponding to the second cover 222. The first camera module 305 may be aligned with and positioned in an opening provided in the display 25 or at least partially inserted into the opening. The external light may reach the first camera module 305 through the openings of the second cover 222 and the display 25. The opening of the display 25, which is aligned with or overlaps the first camera module 305, may be provided in the form of a through-hole, as in the illustrated example. In various embodiments, the opening of the display 25, which is aligned with or overlaps the first camera module 305, may be provided in the form of a notch.

According to various embodiments, the camera module 305 may overlap at least a part of the display area of the display 25 and be positioned in the internal space of the second housing 22 when viewed from above the second cover 222. In this case, the image capturing function of the first camera module 305 may be performed in the state in which the first camera module 305 or the position of the first camera module 305 is not visually distinguished (or exposed) or visible. In the embodiment, the first camera module 305 may be provided on the rear surface of the display 25 or provided below (or beneath) the display 25, and the first camera module 305 or the position of the first camera module 305 may not be visually distinguished (or exposed) or visible. In various embodiments, the first camera module 305 may be positioned to be aligned with the recess provided in the rear surface of the display 25 or at least partially inserted into the recess. For example, the first camera module 305 may include a hidden display rear surface camera (e.g., an under-display camera (UDC)). A partial area of the display 25, which at least partially overlaps the first camera module 305, may include a pixel structure and/or a wiring structure different from those in another area. For example, a partial area of the display 25, which at least partially overlaps the first camera module 305, may have a different pixel density compared to other areas. The pixel structure and/or wiring structure, which is formed in the partial area of the display 25 at least partially overlapping the first camera module 305, may reduce a loss of light between the outside and the optical sensor. As another example, the plurality of pixels may not be disposed in the partial area of the display 25 that at least partially overlaps the first camera module 305.

According to the embodiment, the second camera module 306, the third camera module 307, or the fourth camera module 308 may be positioned in the internal space of the first housing 21 while corresponding to the first cover 212. The first cover 212 may include a camera cover portion (e.g., a camera deco portion) disposed to correspond to the second camera module 306, the third camera module 307, and the fourth camera module 308. The camera cover portion may include a camera hole (or a light transmission area) provided to correspond to the second camera module 306, a camera hole (or a light transmission area) provided to correspond to the third camera module 307, and a camera hole (or a light transmission area) provided to correspond to the fourth camera module 308. The number or positions camera modules provided to correspond to a first cover 212 may be variously implemented without being limited to the illustrated example. The second camera module 306, the third camera module 307, and the fourth camera module 308 may have different attributes (e.g., view angles) or functions. The second camera module 306, the third camera module 307, and the fourth camera module 308 may provide different view angles (or a lens with different view angles), and the foldable electronic device 2 may selectively use the corresponding camera module on the basis of the user's selection related to the view angle. Any one of the second camera module 306, the third camera module 307, and the fourth camera module 308 may include a wide-angle camera module, a telephoto camera module, a color camera module, a monochrome camera module, or an infrared (IR) camera module (e.g., a time-of-flight (TOF) camera module or a structured light camera module). In various embodiments, the IR camera module may be operated as at least a part of the sensor module.

According to the embodiment, any one of the one or more light-emitting modules may include a flash 309 positioned in the internal space of the first housing 21 while corresponding to a flash hole (or a light transmission area) provided in the camera cover portion of the first cover 212. The flash 309 may include light sources for the second camera module 306, the third camera module 307, and/or the fourth camera module 308. For example, the flash 309 may include a light-emitting diode (LED) or a xenon lamp.

According to various embodiments, any one (e.g., an LED, an IR LED, or a xenon lamp) of the one or more light-emitting modules may be configured to provide state information on the foldable electronic device 2 in the form of light. In various embodiments, the light-emitting module may provide a light source that operates in conjunction with an operation of the first camera module 305.

According to the embodiment, the one or more key input modules may include a first key input device 310 or a second key input device 311. In the illustrated example, the first key input device 310 or the second key input device 311 may be positioned in an opening provided at the first side of the first frame 211. The positions or number of input modules may be variously implemented without being limited to the illustrated example. In various embodiments, the foldable electronic device 2 may not include some or all of the key input devices, and the key input devices, which are not included, may be implemented as soft keys by means of the flexible display module 24 or the display 25. In various embodiments, the input module or the key input device may include at least one sensor module.

For example, any one of the one or more connection terminal modules (or connector modules or interface terminal modules) may include a connector (or an interface terminal) positioned in the foldable electronic device 2 while corresponding to a connector hole 312 formed in the external appearance of the foldable electronic device 2. In the illustrated example, the connector hole 312 may be provided at the first side of the first frame 211. The positions or number of connection terminal modules may vary without being limited to the illustrated example. The foldable electronic device 2 may transmit and/or receive power and/or data to and/or from an external electronic device electrically coupled to the connector. In the embodiment, the connector may include a USB connector or an HDMI connector. In various embodiments, any one of the one or more connection terminal modules may include an audio connector (e.g., a headphone connector or an ear set connector) positioned, and a connector hole provided in the external appearance of the foldable electronic device 2 while corresponding to the audio connector. In various embodiments, any one of one or more connection terminal modules may include a memory card connector positioned in the foldable electronic device 2, and a connector hole formed in the external appearance of the foldable electronic device 2 while corresponding to the memory card connector.

According to various embodiments, the foldable electronic device 2 may include a detachable pen input device (e.g., an electronic pen, a digital pen, or a stylus pen) (not illustrated). For example, the pen input device may be implemented to be inserted into the internal space of the first housing 21 or the second housing 22. In another example, the pen input device may be attached to or detached from the hinge housing 23. The hinge housing 23 may include a recess, and the pen input device may be fitted into the recess.

The foldable electronic device 2 may further include various constituent elements in accordance with the provided form. All the constituent elements cannot be enumerated because the constituent element is variously deformed in accordance with the tendency of convergence of the foldable electronic device 2. However, the foldable electronic device 2 may further additionally include a constituent element equal in level to the above-mentioned constituent elements. In various embodiments, particular components may be excluded from the components or substituted with other components in accordance with the provided form.

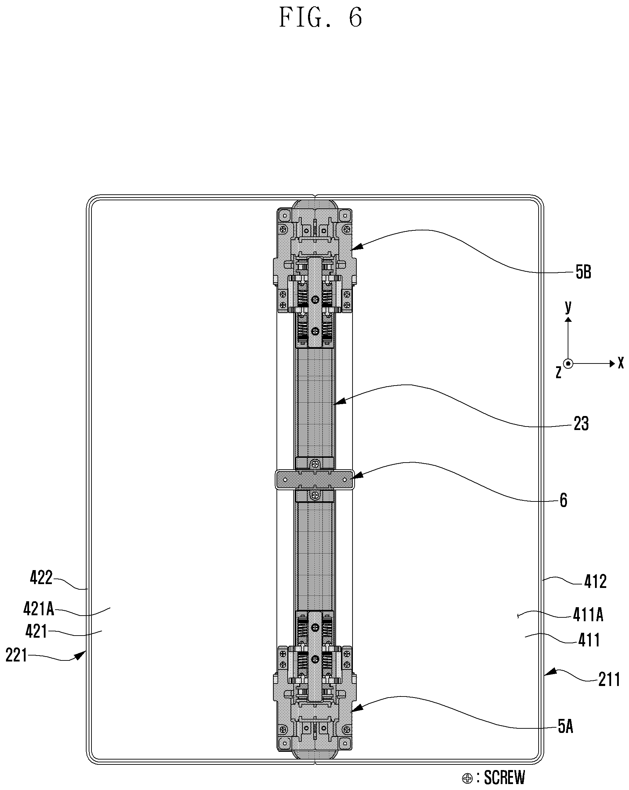

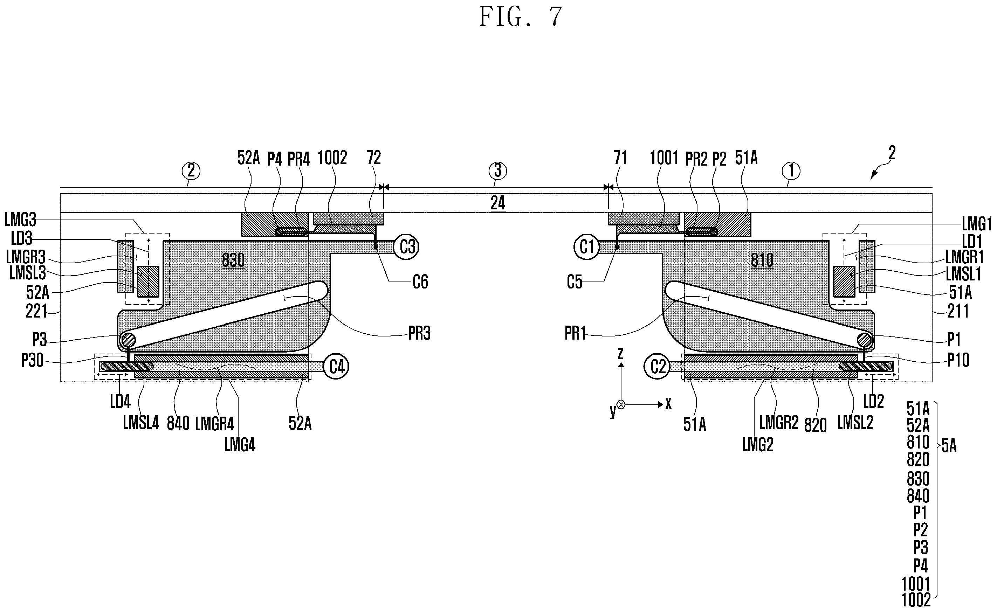

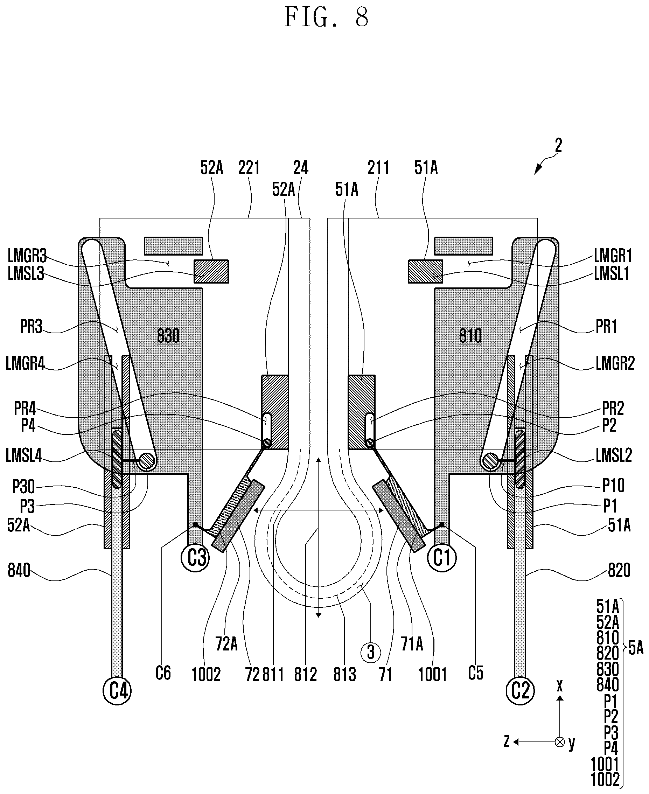

FIG. 4 is a partially exploded perspective view of the foldable electronic device 2 in the unfolded state according to the embodiment of the present disclosure. FIG. 5 is a view illustrating the foldable housing 20 of the foldable electronic device 2 in the unfolded state according to the embodiment of the present disclosure. FIG. 6 is a view illustrating a state in which a first plate 71 and a second plate 72 are separated in the foldable housing 20 according to the embodiment of the present disclosure. FIG. 7 is a cross-sectional view illustrating the unfolded state of the foldable electronic device 2 according to the embodiment of the present disclosure. FIG. 8 is a cross-sectional view illustrating the folded state of the foldable electronic device 2 according to the embodiment of the present disclosure.

With reference to FIGS. 4, 5, and 6, the foldable electronic device 2 may include the flexible display module 24 and the foldable housing 20.

According to the embodiment, the foldable housing 20 may include the first frame 211, the second frame 221, the first hinge module (or a first hinge assembly) 5A, the second hinge module (or a second hinge assembly) 5B, a guide rail assembly 6, the hinge housing 23, the first plate 71, and/or the second plate 72.

According to the embodiment, the first frame 211 may include the first support part 411 and the first side 412. The first frame 211 may be provided as an integrated form including the first support part 411 and the first side 412. The first support part 411 may be an internal structure positioned in the foldable electronic device 2 while corresponding to the first housing 21 and referred to as various other terms such as a 'first bracket (bracket),' a 'first support body,' a 'first support member,' or a 'first support structure', in various embodiments. The second frame 221 may include the second support part 421 and the second side 422. The second frame 221 may be provided as an integrated form including the second support part 421 and the second side 422. The second support part 421 may be an internal structure positioned in the foldable electronic device 2 while corresponding to the second housing 22 and referred to as various other terms such as a 'second bracket,' a 'second support body,' a 'second support member,' or a 'second support structure', in various embodiments. At least a part of the first frame 211 and/or at least a part of the second frame 221 may be made of a metallic material and/or a nonmetallic material (e.g., polymer). Electrical constituent elements (or electronic components) or various members related to the electrical constituent elements may be disposed on the first frame 211 or the first support part 411 or supported by the first frame 211 or the first support part 411. For example, the first support part 411 may include a first support area 411A directed toward the first display area ①, and a third support area (not illustrated) directed in a direction substantially opposite to the first support area 411A. The first display area ① of the flexible display module 24 may be disposed in the first support area 411A of the first support part 411. The second support part 421 may include a second support area 421A directed toward the second display area ②, and a fourth support area (not illustrated) directed in a direction substantially opposite to the second support area 421A. The second display area ② of the flexible display module 24 may be disposed in the second support area 421A of the second support part 421. The first display area ① may be disposed on the first support part 411, and the second display area ② may be disposed on the second support part 421 by means of various adhesive materials (or bonding materials) such as a thermally reactive adhesive material (or a thermally reactive bonding material), a photoreactive adhesive material (or a photoreactive bonding material), a general adhesive agent (or a general bonding agent), and/or a double-sided tape.

According to the embodiment, the term 'hinge part' mentioned in the description described with reference to FIGS. 2 and 3 may include the first plate 71, the second plate 72, the first hinge module 5A, the second hinge module 5B, the guide rail assembly 6, and/or the hinge housing 23. In the unfolded state of the foldable electronic device 2, the hinge part may support the third display area ③ of the flexible display module 24.

According to various embodiments, the foldable electronic device 2 may include a first inner support body (not illustrated) positioned in the internal space of the first housing 21 (see FIG. 2) while corresponding to the first cover 212 (see FIG. 2) (or facing the first cover 212). For example, the first inner support body may cover and protect constituent elements, such as a printed circuit board, disposed between the first support part 411 and the first cover 212. In various embodiments, the first inner support body may include a nonmetallic material, and a conductive pattern, which is used as an antenna radiator, may be disposed on the first inner support body. The first frame 211 may be referred to as a 'first front casing (front case)', and the first inner support body may be referred to as a 'first rear casing (rear case)'.

According to various embodiments, the foldable electronic device 2 may include a second inner support body (not illustrated) positioned in the internal space of the second housing 22 (see FIG. 2) while corresponding to the second cover 222 (see FIG. 2) (or facing the second cover 222). For example, the second inner support body may cover and protect constituent elements, such as a printed circuit board, disposed between the second support part 421 and the second cover 222. The second frame 221 may be referred to as a 'second front casing', and the second inner support body may be referred to as a 'second rear casing'.

According to the embodiment, with reference to a cross-sectional view 24S of the flexible display module 24, the flexible display module 24 may include a flexible display 240, a transparent cover 245, an optically transparent adhesive member (or an optically transparent bonding member) 246, and/or a support sheet 247. For example, the flexible display 240 may be coupled to the transparent cover 245 by means of the optically transparent adhesive member 246 (e.g., optical clear adhesive (OCA), optical clear resin (OCR), or super view resin (SVR)). The transparent cover 245 (e.g., a window) may cover the flexible display 240 and protect the flexible display 240 from the outside. The transparent cover 245 may be provided in the form of a thin film (e.g., a thin-film layer) having flexibility. For example, the transparent cover 245 may include a plastic film (e.g., a polyimide (PI) film) or a thin-film glass (e.g., ultrathin glass (UTG)). In any embodiment, the transparent cover 245 may include a plurality of layers. For example, the transparent cover 245 may have a shape in which various coating layers are disposed on a plastic film or a thin-film glass. For example, the transparent cover 245 may have a shape in which at least one protective layer or coating layer including a polymer material (e.g., PET (polyester), PI (polyimide), or TPU (thermoplastic polyurethane)) is disposed on a plastic film or thin-film glass. In any embodiment, the transparent cover 245 and the optically transparent adhesive member 246 may be defined or interpreted as a part of the flexible display 240. In any embodiment, the transparent cover 245 may be interpreted as a part of the foldable housing 20 (see FIG. 2) instead of the flexible display module 24. For example, the flexible display 240 may include a display panel 241, a base film 242, a lower panel 243, and/or an optical layer 244. The display panel 241 may be positioned between the optical layer 244 and the base film 242. The base film 242 may be positioned between the display panel 241 and the lower panel 243. The optical layer 244 may be positioned between the optically transparent adhesive member 246 and the display panel 241. Various polymer adhesive materials (or adhesive members) or various bonding materials (or bonding members) may be disposed between the display panel 241 and the base film 242, between the base film 242 and the lower panel 243, and/or between the display panel 241 and the optical layer 244. For example, the display panel 241 may include a light-emitting layer 241a, a thin film transistor (TFT) film (or a TFT substrate) 241b, and/or an encapsulation layer (e.g., a thin-film encapsulation (TFE) layer) 241c. For example, the light-emitting layer 241a may include a plurality of pixels implemented by light-emitting elements such as organic light-emitting diodes (OLEDs) or micro LEDs. The light-emitting layer 241a may be disposed on the TFT film 241b by depositing (evaporating) organic materials. The TFT film 241b may be positioned between the light-emitting layer 241a and the base film 242. The TFT film 241b may refer to a film structure in which at least one TFT is disposed on a flexible substrate (e.g., a polyimide (PI) film) by a series of processes such as deposition, patterning, and/or etching. At least one TFT may turn on or off the pixel or adjust brightness of the pixel by controlling electric current in respect to the light-emitting element of the light-emitting layer 241a. For example, at least one TFT may be implemented as an a-Si (amorphous silicon) TFT, an LCP (liquid crystalline polymer) TFT, an LTPO (low-temperature polycrystalline oxide) TFT, or an LTPS (low-temperature polycrystalline silicon) TFT. In the embodiment, the display panel 241 may include a storage capacitor. The storage capacitor may maintain a voltage signal in the pixel, maintain a voltage applied to the pixel in a single frame, or reduce a change in gate voltage of the TFT caused by leakage current (leakage) for a light-emitting time. A routine (e.g., initialization or data write) for controlling at least one TFT may allow the storage capacitor to maintain the voltage applied to the pixel at a predetermined time interval. In the embodiment, the display panel 241 may be implemented by an OLED, and the encapsulation layer 241c may cover the light-emitting layer 241a. The organic material and the electrode of the OLED, which emit light, are very sensitive to oxygen and/or moisture and may lose the light-emitting characteristics. In order to reduce or prevent the loss of the light-emitting characteristics, the encapsulation layer 241c may seal the light-emitting layer 241a so that oxygen and/or moisture is not introduced into the OLED. The base film 242 may include a flexible film made of polymer or plastic such as polyimide or polyester (PET). The base film 242 may serve to support and protect the display panel 241. In any embodiment, the base film 242 may be called a 'protective film,' a 'back film,' or a backplate. The lower panel 243 may include a plurality of layers for various functions. Various polymer adhesive members (or bonding members) (not illustrated) may be disposed between the plurality of layers included in the lower panel 243. For example, the lower panel 243 may include a light-blocking layer 243a, a buffer layer 243b, and/or a lower layer 243c. The light-blocking layer 243a may be positioned between the base film 242 and the buffer layer 243b. The buffer layer 243b may be positioned between the light-blocking layer 243a and the lower layer 243c. The light-blocking layer 243a may block at least a part of light introduced from the outside. For example, the light-blocking layer 243a may include an embossed layer. The embossed layer may be a black layer including an unevenness pattern. The buffer layer 243b may mitigate external impact applied to the flexible display 240. For example, the buffer layer 243b may include a sponge layer or a cushion layer. The lower layer 243c may diffuse, disperse, or dissipate heat generated from the foldable electronic device 2 or the flexible display 240. The lower layer 243c may absorb or block electromagnetic waves. The lower layer 243c may mitigate external impact applied to the foldable electronic device 2 or the flexible display 240. For example, the lower layer 243c may include a composite sheet 243d or a copper sheet 243e. In the embodiment, the composite sheet 243d may be a sheet made by combining and processing layers or sheets having different properties. For example, the composite sheet 243d may include at least one of polyimide and graphite. The composite sheet 243d may be substituted with a single sheet including a single material (e.g., polyimide or graphite). The composite sheet 243d may be positioned between the buffer layer 243b and the copper sheet 243e. The copper sheet 243e may be substituted with various other metal sheets. In any the embodiment, at least a part of the lower layer 243c may be configured as a conductive member (e.g., metal plate) and assist in reinforcing the rigidity of the foldable electronic device 2. The at least a part of the second layer may be used to block peripheral noise and disperse heat discharged from a peripheral heat dissipation component (e.g., a display drive circuit) (e.g., a display drive integrated circuit (DDI)). For example, the conductive member may include at least one of copper (Cu), aluminum (Al), SUS (stainless steel), and CLAD (e.g., a stack member in which SUS and Al are alternately disposed). The lower layer 243c may include various layers for various other functions. In any embodiments (not illustrated), at least one of additional polymer layers (e.g., layers including PI, PET, or TPU) may be further disposed on the rear surface of the display panel 241 in addition to the base film 242. In any embodiment, at least one of the plurality of layers (e.g., the light-blocking layer 243a, the buffer layer 243b, the composite sheet 243d, and the copper sheet 243e) included in the lower panel 243 may be excluded. In any embodiment, the arrangement order of the plurality of layers included in the lower panel 243 may be variously changed without being limited to the illustrated embodiment. For example, the optical layer 244 may include a polarizing layer (a polarizing layer or polarizer), or a phase delay layer (a retardation layer or retarder). The polarizing layer and phase delay layer may improve outdoor visibility of the screen. For example, the optical layer 244 may selectively transmit light that is generated from a light source of the display panel 241 and vibrates in a predetermined direction. In any embodiment, the polarizing layer and the phase delay layer may be combined to provide a single layer, and this layer may be interpreted as a 'circularly polarized light layer'. The optically transparent adhesive member 246 may be positioned between the transparent cover 245 and the optical layer 244. In any embodiment, the polarizing layer (or the circularly polarized light layer) may be excluded. In this case, the black PDL (pixel define layer) and/or a color filter for substituting for the polarizing layer may be provided. The foldable electronic device 2 may include a touch detection circuit (e.g., a touch sensor) (not illustrated). The touch detection circuit may be implemented as a transparent conductive layer (or film) based on various electrically conductive materials such as ITO (indium tin oxide). In the embodiment, the touch detection circuit may be disposed between the transparent cover 245 and the optical layer 244 (e.g., add-on type). In another embodiment, the touch detection circuit may be disposed between the optical layer 244 and the display panel 241 (e.g., on-cell type). In another embodiment, the display panel 241 may include a touch detection circuit or a touch detection function (e.g., in-cell type). In any embodiment, the display panel 241 may be based on OLEDs and include the encapsulation layer 241c disposed between the light-emitting layer 241a and the optical layer 244. The encapsulation layer 241c may serve as a pixel protection layer for protecting the plurality of pixels of the light-emitting layer 241a. In the embodiment (not illustrated), the flexible display 240 may be a touch detection circuit provided between the encapsulation layer 241c and the optical layer 244 and disposed on the encapsulation layer 241c and include a conductive pattern such as a metal mesh (e.g., an aluminum metal). For example, to correspond to the curved flexible display 240, the metal mesh may have higher durability than the transparent conductive layer implemented by ITO. In any embodiment, the flexible display 240 may further include a pressure sensor (not illustrated) capable of measuring intensity (pressure) of a touch. The plurality of layers included in the display panel 241 or the lower panel 243, the layered structure thereof, or the stacking order may be variously implemented. The flexible display 240 may be implemented by excluding some of the constituent elements or adding other constituent elements in accordance with the tendency of the provided form or convergence.

According to the embodiment, the support sheet (or a support plate or a support layer) 247 may be disposed on the rear surface of the flexible display 240. The rear surface of the flexible display 240 may refer to a surface positioned opposite to a surface through which light is emitted from the display panel 241 including the plurality of pixels. The support sheet 247 may cover at least a part of the lower panel 243 of the flexible display 240 and be disposed on (e.g., attached to) the rear surface of the lower panel 243. The support sheet 247 may be coupled to the lower panel 243 by means of an adhesive material (or a bonding material). For example, an adhesive material (or a bonding material) between the flexible display 240 and the support sheet 247 may include a thermally reactive adhesive material (or a thermally reactive bonding material), a photoreactive adhesive material (or a photoreactive bonding material), a general adhesive agent (or a general bonding agent), or a double-sided tape. As another example, an adhesive material (or a bonding material) may include various polymers such as triazine thiol, dithiodipyridine, or silane-based compound or an organic adhesive material (or an organic bonding material) such as sealant. The support sheet 247 may contribute to improving the durability (e.g., reinforcing the rigidity) of the flexible display module 24. The support sheet 247 may reduce a degree to which a load or stress, which may occur when the foldable housing 20 (see FIG. 2) is folded, affects the flexible display module 24 (or the flexible display 240). The support sheet 247 may reduce or prevent damage to the flexible display module 24 caused by a force transmitted when the foldable housing 20 is folded. In the embodiment, the support sheet 247 may include a metallic material. For example, the support sheet 247 may include stainless steel. The support sheet 247 may include various other metallic materials. In various embodiments, the support sheet 247 may include engineering plastic.

According to the embodiment, the support sheet 247 may include a lattice structure (not illustrated) that overlaps at least a part of the third display area ③ of the flexible display module 24. For example, the lattice structure may include a plurality of openings (or slits) provided in the support sheet 247. The lattice structure may refer to a pattern structure in which the plurality of openings is regularly arranged. The plurality of openings may be periodically formed and have substantially the same shape, and the plurality of openings may be arranged repeatedly at predetermined intervals. The lattice structure may reduce the deterioration in flexibility of the third display area ③. In various embodiments, the lattice structure including the plurality of openings may be referred to as other terms such as an 'opening pattern,' a 'hole pattern,' or a 'lattice pattern'. In various embodiments, the support sheet 247 may include a recess pattern (not illustrated) that may be substituted for the lattice structure and include a plurality of recesses. For example, the recess pattern may refer to a pattern structure in which the plurality of recesses is regularly arranged and provided in a first surface of the support sheet 247, which faces the lower panel 243 of the flexible display 240, or a second surface of the support sheet 247 that is positioned at a side opposite to the first surface. In various embodiments, the lattice structure or the recess pattern may expand to a portion of the support sheet 247 that corresponds to the first area ① and/or the second area ② of the flexible display module 24. In various embodiments, the support sheet 247 including the lattice structure or the recess pattern may have a plurality of layers, or the conductive member corresponding to the support sheet 247 may have a plurality of layers.

According to various embodiments, the support sheet 247 may reduce electromagnetic interference (EMI) related to the flexible display 240. In any embodiment, the support sheet 247 may diffuse or display heat dispersed from the heat-radiating component (e.g., the display drive circuit such as a display drive integrated circuit (DDI) or a DDI chip).

According to various embodiments, the support sheet 247 may be excluded.

According to various embodiments, the support sheet 247 may be interpreted as an element provided separately from the flexible display module 24.

According to the embodiment, the first hinge module 5A, the second hinge module 5B, and the guide rail assembly 6 may connect the first frame 211 and the second frame 221. The first frame 211 and the second frame 221 may be rotatably connected to each other by means of the first hinge module 5A, the second hinge module 5B, and the guide rail assembly 6. The first hinge module 5A, the second hinge module 5B, and the guide rail assembly 6 may be disposed along the centerline A of the foldable electronic device 2, and the guide rail assembly 6 may be positioned between the first hinge module 5A and the second hinge module 5B. In the embodiment, the guide rail assembly 6 may be disposed to correspond to a center between the first hinge module 5A and the second hinge module 5B (e.g., a point on the centerline A disposed at substantially the same distance from the first hinge module 5A and the second hinge module 5B).

According to the embodiment, for example, the first hinge module 5A may include a first bracket 51A, a second bracket 52A, and/or a bracket connection part 53A. The first bracket 51A may be disposed in or coupled to the first support area 411A of the first frame 211 by screw-fastening. In order to implement the screw-fastening, the first bracket 51A may include one or more screw holes, and the first support area 411A may include one or more screw fastening portions aligned to correspond to the one or more screw holes of the first bracket 51A in a one-to-one manner. The screw fastening portion may be a boss including female threads corresponding to male threads of a screw. The first bracket 51A of the first hinge module 5A and the first support area 411A of the first frame 211 may be shaped to be fitted with each other so that the first bracket 51A of the first hinge module 5A and the first support area 411A of the first frame 211 may be stably coupled to each other. The second bracket 52A may be disposed in or coupled to the second support area 421A of the second frame 221 by screw-fastening. In order to implement the screw-fastening, the second bracket 52A may include one or more screw holes, and the second support area 421A may include one or more screw fastening portions aligned to correspond to the one or more screw holes of the second bracket 52A in a one-to-one manner. The second bracket 52A of the first hinge module 5A and the second support area 421A of the second frame 221 may be shaped to be fitted with each other so that the second bracket 52A of the first hinge module 5A and the second support area 421A of the second frame 221 may be stably coupled to each other. The bracket connection part 53A may connect the first bracket 51A and the second bracket 52A. The first bracket 51A and the second bracket 52A may rotate relative to the bracket connection part 53A.

According to the embodiment, the bracket connection part 53A may be configured such that the first frame 211, to which the first bracket 51A is fixed, and the second frame 221, to which the second bracket 52A is fixed, may rotate at the same angle in opposite directions. The bracket connection part 53A may be configured such that the first frame 211, to which the first bracket 51A is fixed, and the second frame 221, to which the second bracket 52A is fixed, may be rotated by at least one predetermined angle and maintained. For example, the bracket connection part 53A may have a free-stop function. The bracket connection part 53A may be configured to provide a force that enables the first frame 211, to which the first bracket 51A is fixed, and the second frame 221, to which the second bracket 52A is fixed, to rotate relative to each other.

For example, the second hinge module 5B may be provided to be substantially identical to the first hinge module 5A and include a first bracket 51B, a second bracket 52B, and/or a bracket connection part 53B. In the embodiment, the second hinge module 5B may be disposed in the foldable electronic device 2 in a direction opposite to the direction in which the first hinge module 5A is disposed. The first bracket 51B of the second hinge module 5B may be disposed in or coupled to the second support area 421A of the second frame 221, and the second bracket 52B of the second hinge module 5B may be disposed in or coupled to the first support area 411A of the first frame 211.

According to the embodiment, the first hinge module 5A, the second hinge module 5B, and the guide rail assembly 6 may be coupled to the hinge housing 23 by screws. The hinge housing 23 may be connected to the first frame 211 and the second frame 221 by means of the first hinge module 5A, the second hinge module 5B, and the guide rail assembly 6. In order to implement the screw-fastening, the bracket connection part 53A of the first hinge module 5A may include one or more screw holes, and the hinge housing 23 may include one or more screw fastening portions aligned to correspond to the one or more screw holes of the bracket connection part 53A in a one-to-one manner. In order to implement the screw-fastening, the bracket connection part 53B of the second hinge module 5B may include one or more screw holes, and the hinge housing 23 may include one or more screw fastening portions aligned to correspond to the one or more screw holes of the bracket connection part 53B in a one-to-one manner. In order to implement the screw-fastening, the guide rail assembly 6 may include one or more screw holes, and the hinge housing 23 may include one or more screw fastening portions aligned to correspond to the one or more screw holes of the guide rail assembly 6 in a one-to-one manner.

According to the embodiment, the first plate 71 may be positioned to correspond to the first frame 211, and the second plate 72 may be positioned to correspond to the second frame 221. The first plate 71 and the second plate 72 may each have a shape in which a first width in the direction (e.g., the y-axis direction) of the centerline A is relatively larger than a second width in a direction perpendicular to the above-mentioned direction, and the first plate 71 and the second plate 72 may overlap the first hinge module 5A, the second hinge module 5B, and/or the guide rail assembly 6. The first plate 71 and the second plate 72 may be coupled to the first hinge module 5A, the second hinge module 5B, and the guide rail assembly 6.

According to the embodiment, the first plate 71 may be coupled to the bracket connection part 53A of the first hinge module 5A by screws while corresponding to the first bracket 51A of the first hinge module 5A. In order to implement the screw-fastening, the first plate 71 may include a first screw hole SH11, and the bracket connection part 53A may include a first screw fastening portion B11 aligned to correspond to the first screw hole SH11. A portion of the first plate 71, which corresponds to the bracket connection part 53A of the first hinge module 5A, and the bracket connection part 53A may be shaped to be fitted with each other so that the portion of the first plate 71 and the bracket connection part 53A may be stably coupled to each other. For example, the fitting between the first plate 71 and the bracket connection part 53A may be variously implemented as a recess provided in the bracket connection part 53A to allow the first plate 71 to be stably disposed, and/or a hole 711 of the first plate 71 and a protruding portion 531 provided on the bracket connection part 53A and configured to be inserted into the hole 711. The second plate 72 may be coupled to the bracket connection part 53A of the first hinge module 5A by screws while corresponding to the second bracket 52A of the first hinge module 5A. In order to implement the screw-fastening, the second plate 72 may include a second screw hole SH12, and the bracket connection part 53A may include a second screw fastening portion B12 aligned to correspond to the second screw hole SH12. A portion of the second plate 72, which corresponds to the bracket connection part 53A of the first hinge module 5A, and the bracket connection part 53A may be shaped to be fitted with each other so that the portion of the second plate 72 and the bracket connection part 53A may be stably coupled to each other. For example, the fitting between the second plate 72 and the bracket connection part 53A may be variously implemented as a recess provided in the bracket connection part 53A to allow the second plate 72 to be stably disposed, and/or a hole 721 of the second plate 72 and a protruding portion 532 provided on the bracket connection part 53A and configured to be inserted into the hole 721. In the embodiment, the first plate 71 and the second plate 72 may be provided to be substantially symmetric with respect to the centerline A of the foldable electronic device 2.

According to the embodiment, the first plate 71 may be coupled to the second hinge module 5B in substantially the same manner as the coupling between the first plate 71 and the first hinge module 5A. The second plate 72 may be coupled to the second hinge module 5B in substantially the same manner as the coupling between the second plate 72 and the first hinge module 5A. The first plate 71 may be coupled to the bracket connection part 53B of the second hinge module 5B while corresponding to the second bracket 52B of the second hinge module 5B. The second plate 72 may be coupled to the bracket connection part 53B of the second hinge module 5B while corresponding to the first bracket 51B of the second hinge module 5B.

According to the embodiment, the first plate 71 may include a first surface 71A, and a third surface (not illustrated) directed in a direction opposite to the first surface 71A. The second plate 72 may include a second surface 72A, and a fourth surface (not illustrated) directed in a direction opposite to the second surface 72A. The first surface 71A and the second surface 72A may be positioned to correspond to the third display area ③ of the flexible display module 24. In the unfolded state (see FIG. 2) of the foldable electronic device 2, the first surface 71A of the first plate 71 and the second surface 72B of the second plate 72 may support the third display area ③. The first surface 71A of the first plate 71 may include a flat surface capable of supporting one side area of the third display area ③ based on the centerline A of the foldable electronic device 2 in the unfolded state of the foldable electronic device 2. The second surface 72A of the second plate 72 may include a flat surface capable of supporting the other side area of the third display area ③ based on the centerline A of the foldable electronic device 2 in the unfolded state of the foldable electronic device 2. In the unfolded state of the foldable electronic device 2, the first surface 71A of the first plate 71 and the second surface 72A of the second plate 72 may substantially define an angle of about 180 degrees and be disposed without a substantial height difference. Even in case that an external force (e.g., external pressure such as a touch input made by a user's finger or a touch input made by an electronic pen) is applied to the third display area ③ in the unfolded state of the foldable electronic device 2, the third display area ③ may be maintained to be flat by being supported by the first plate 71 and the second plate 72 without sagging.

According to the embodiment, the guide rail assembly 6 may include a first slider 61, a second slider 62, and a guide rail 63. The guide rail 63 may be disposed on or coupled to the hinge housing 23. The hinge housing 23 may include a recess provided in the other surface opposite to one surface exposed to the outside in the folded state (see FIG. 3) of the foldable electronic device 2, and the guide rail 63 may be disposed in the recess of the hinge housing 23 by screw-fastening. The first slider 61 may be disposed on the guide rail 63 so as to be slidable relative to the guide rail 63 and coupled to the first plate 71 by a screw. In order to implement the screw-fastening, the first plate 71 may include a screw hole 712, and the first slider 61 may include a screw fastening portion 611 corresponding to the screw hole 712. The second slider 62 may be disposed on the guide rail 63 so as to be slidable relative to the guide rail 63 and coupled to the second plate 72 by a screw. In order to implement the screw-fastening, the second plate 72 may include a screw hole 722, and the second slider 62 may include a screw fastening portion 621 corresponding to the screw hole 722. The guide rail 63 may include a first guide rail in a sliding pair relationship with the first slider 61, and a second guide rail in a sliding pair relationship with the second slider 62. When an angle between the first frame 211 and the second frame 221 is changed, the position of the first plate 71 relative to the first frame 211 and the position of the second plate 72 relative to the second frame 221 are changed by operations (or state changes) of the first hinge module 5A and the second hinge module 5B. Therefore, in response to this configuration, the first guide rail may be configured to guide a route along which the first slider 61 coupled to the first plate 71 moves relative to the guide rail 63, and the second guide rail may be configured to guide a route along which the second slider 62 coupled to the second plate 72 moves relative to the guide rail 63. The structure, in which the guide rail assembly 6 disposed between the first hinge module 5A and the second hinge module 5B is coupled to the first plate 71 and the second plate 72, may reduce or prevent a phenomenon in which the first plate 71 and the second plate 72 are lifted.

According to the embodiment, when the foldable electronic device 2 switches from the unfolded state (see FIG. 2) to the folded state (see FIG. 3), the hinge part may be configured to provide a space in which the third display area ③ of the flexible display module 24 may be disposed in a bent shape that may reduce bending stress. When the foldable electronic device 2 switches from the unfolded state to the folded state, the hinge part may be configured to provide a space in which the third display area ③ may be disposed in a bent shape that may reduce buckling. In the embodiment, when the foldable electronic device 2 switches from the unfolded state to the folded state, the third display area ③ may be disposed in a water droplet shape or a dumbbell shape that may reduce damage or permanent deformation. In the folded state of the foldable electronic device 2, based on a neutral plane 813 (see FIG. 8), the third display area ③ may be disposed in a bent shape in which a collision (e.g., bending stress) between compressive stress occurring in one side area of the third display area ③ and tensile stress occurring in one side area of the third display area ③ may be reduced.

With reference to FIGS. 4, 7, and 8, the foldable electronic device 2 may include the flexible display module 24, the first frame 211, the second frame 221, the first hinge module 5A, the first plate 71, and/or the second plate 72. In the embodiment, the first hinge module 5A may include the first bracket 51A, the second bracket 52A, a first part 810, a second part 820, a third part 830, a fourth part 840, a first pin P1, a second pin P2, a third pin P3, a fourth pin P4, a first connection part 1001, and/or a second connection part 1002. The bracket connection part 53A (see FIG. 4) may include the first part 810, the second part 820, the third part 830, the fourth part 840, the first connection part 1001, the second connection part 1002, the first pin P1, the second pin P2, the third pin P3, and/or the fourth pin P4.

According to the embodiment, the first hinge module 5A may include a first rotation axis (axis of rotation) C1 and a second rotation axis C2 for implementing a mutual rotational motion between the first bracket 51A and the bracket connection part 53A. The first rotation axis C1 and the second rotation axis C2 may be substantially parallel to the centerline A of the foldable electronic device 2 and positioned to be spaced apart from each other. The first part 810 of the bracket connection part 53A may be connected to the first bracket 51A and configured to be rotatable about the first rotation axis C1. The first part 810 of the bracket connection part 53A may be slidably connected to the first bracket 51A and configured to be linearly movable relative to the first bracket 51A in a first linear direction LD1. The second part 820 of the bracket connection part 53A may be connected to the first bracket 51A and configured to be rotatable about the second rotation axis C2. The second part 820 of the bracket connection part 53A may be slidably connected to the first bracket 51A and configured to be linearly movable relative to the first bracket 51A in a second linear direction LD2 different from the first linear direction LD1. The first linear direction LD1 may be perpendicular to the first rotation axis C1 or the centerline A of the foldable electronic device 2, and the second linear direction LD2 may be perpendicular to the second rotation axis C2 or the centerline A of the foldable electronic device 2. In the embodiment, the second linear direction LD2 may be substantially parallel to a direction in which the first display area ① of the flexible display module 24 extends flat when viewed in the direction of the centerline A of the foldable electronic device 2 (e.g., when viewed in the y-axis direction).

According to the embodiment, the first hinge module 5A may include a third rotation axis C3 and a fourth rotation axis C4 for implementing a mutual rotational motion between the second bracket 52A and the bracket connection part 53A. The third rotation axis C3 and the fourth rotation axis C4 may be substantially parallel to the centerline A (see FIG. 4) of the foldable electronic device 2 and positioned to be spaced apart from each other. The third part 830 of the bracket connection part 53A may be connected to the second bracket 52A and configured to be rotatable about the third rotation axis C3. The third part 830 of the bracket connection part 53A may be slidably connected to the second bracket 52A and configured to be linearly movable relative to the second bracket 52A in a third linear direction LD3. The fourth part 840 of the bracket connection part 53A may be connected to the second bracket 52A and configured to be rotatable about the fourth rotation axis C4. The fourth part 840 of the bracket connection part 53A may be slidably connected to the second bracket 52A and configured to be linearly movable relative to the second bracket 52A in a fourth linear direction LD4 different from the third linear direction LD3. The third linear direction LD3 may be perpendicular to the third rotation axis C3 or the centerline A of the foldable electronic device 2, and the fourth linear direction LD4 may be perpendicular to the fourth rotation axis C4 or the centerline A of the foldable electronic device 2. In the embodiment, the fourth linear direction LD4 may be substantially parallel to a direction in which the second display area ② of the flexible display module 24 extends flat when viewed in the direction of the centerline A of the foldable electronic device 2 (e.g., when viewed in the y-axis direction).

According to the embodiment, the first hinge module 5A may include a first linear motion guide LMG1 so that the first part 810 and the first bracket 51A may mutually slide (e.g., mutually linearly move) in the first linear direction LD1. For example, the first linear motion guide LMG1 may include a first linear motion guide rail LMGR1 included in the first part 810, and a first linear motion slider LMSL1 included in the first bracket 51A. The first part 810 and the first bracket 51A may be stably connected to each other and configured to be slidable in the first linear direction LD1 by means of a combination (e.g., a sliding pair) of the first linear motion guide rail LMGR1 and the first linear motion slider LMSL1. For example, the first linear motion guide rail LMGR1 may be a through-hole of the first part 810 in which the first linear motion slider LMSL1 is positioned. The first linear motion slider LMSL1 may be a first protruding portion of the first bracket 51A inserted into the first linear motion guide rail LMGR1. A degree to which the first linear motion slider LMSL1 is inserted into the first linear motion guide rail LMGR1 may vary depending on a position at which the first part 810 and the first bracket 51A are mutually slid in the first linear direction LD1. The first linear motion guide LMG1 including the first linear motion slider LMSL1 and the first linear motion guide rail LMGR1 may enable the linear motion of the first part 810 relative to the first bracket 51A fixed to the first frame 211 but substantially hinder a rotational motion of the first part 810 relative to the first bracket 51A.

According to the embodiment, the first hinge module 5A may include a second linear motion guide LMG2 so that the second part 820 and the first bracket 51A may mutually slide (e.g., mutually linearly move) in the second linear direction LD2. For example, the second linear motion guide LMG2 may include a second linear motion guide rail LMGR2 included in the first bracket 51A, and a second linear motion slider LMSL2 included in the second part 820. The second part 820 and the first bracket 51A may be stably connected to each other and configured to be slidable in the second linear direction LD2 by means of a combination (e.g., a sliding pair) of the second linear motion guide rail LMGR2 and the second linear motion slider LMSL2. For example, the second linear motion guide rail LMGR2 may be a slit of the first bracket 51A in which the second linear motion slider LMSL2 is positioned. The second linear motion slider LMSL2 may be a second protruding portion of the second part 820 inserted into the second linear motion guide rail LMGR2. A position of the second linear motion slider LMSL2 on the second linear motion guide rail LMGR2 may vary depending on a position at which the second part 820 and the first bracket 51A are mutually slid in the second linear direction LD2. The second linear motion guide LMG2 including the second linear motion slider LMSL2 and the second linear motion guide rail LMGR2 may enable the linear motion of the second part 820 relative to the first bracket 51A fixed to the first frame 211 but substantially hinder a rotational motion of the second part 820 relative to the first bracket 51A.

According to the embodiment, the first hinge module 5A may include a third linear motion guide LMG3 so that the third part 830 and the second bracket 52A may mutually slide (e.g., mutually linearly move) in the third linear direction LD3. The first part 810, the third part 830, the first linear motion guide LMG1, and the third linear motion guide LMG3 may be provided symmetrically with respect to the centerline A of the foldable electronic device 2. The third linear motion guide LMG3 may include a third linear motion guide rail LMGR3 included in the third part 830, and a third linear motion slider LMSL3 included in the second bracket 52A. The third part 830 and the second bracket 52A may be stably connected to each other and configured to be slidable in the third linear direction LD3 by means of a combination (e.g., a sliding pair) of the third linear motion guide rail LMGR3 and the third linear motion slider LMSL3. For example, the third linear motion guide rail LMGR3 may be a through-hole of the third part 830 in which the third linear motion slider LMSL3 is positioned. The third linear motion slider LMSL3 may be a third protruding portion of the second bracket 52A inserted into the third linear motion guide rail LMGR3. A degree to which the third linear motion slider LMSL3 is inserted into the third linear motion guide rail LMGR3 may vary depending on a position at which the third part 830 and the second bracket 52A are mutually slid in the third linear direction LD3. The third linear motion guide LMG3 including the third linear motion slider LMSL3 and the third linear motion guide rail LMGR3 may enable the linear motion of the third part 830 relative to the second bracket 52A fixed to the second frame 221 but substantially hinder a rotational motion of the third part 830 relative to the second bracket 52A.

According to the embodiment, the first hinge module 5A may include a fourth linear motion guide LMG4 so that the fourth part 840 and the second bracket 52A may mutually slide (e.g., mutually linearly move) in the fourth linear direction LD4. The second part 820, the fourth part 840, the second linear motion guide LMG2, and the fourth linear motion guide LMG4 may be provided symmetrically with respect to the centerline A of the foldable electronic device 2. The fourth linear motion guide LMG4 may include a fourth linear motion guide rail LMGR4 included in the second bracket 52A, and a fourth linear motion slider LMSL4 included in the fourth part 840. The fourth part 840 and the second bracket 52A may be stably connected to each other and configured to be slidable in the fourth linear direction LD4 by means of a combination (e.g., a sliding pair) of the fourth linear motion guide rail LMGR4 and the fourth linear motion slider LMSL4. For example, the fourth linear motion guide rail LMGR4 may be a slit of the second bracket 52A in which the fourth linear motion slider LMSL4 is positioned. The fourth linear motion slider LMSL4 may be a fourth protruding portion of the fourth part 840 inserted into the fourth linear motion guide rail LMGR4. A position of the fourth linear motion slider LMSL4 on the fourth linear motion guide rail LMGR4 may vary depending on a position at which the fourth part 840 and the second bracket 52A are mutually slid in the fourth linear direction LD4. The fourth linear motion guide LMG4 including the fourth linear motion slider LMSL4 and the fourth linear motion guide rail LMGR4 may enable the linear motion of the fourth part 840 relative to the second bracket 52A fixed to the second frame 221 but substantially hinder a rotational motion of the fourth part 840 relative to the second bracket 52A.

According to the embodiment, the first pin P1 may be connected to the second linear motion slider LMSL2 of the second part 820. The second linear motion slider LMSL2 may include a first pinhole corresponding to the first pin P1, and the first pin P1 may be positioned to penetrate the first pinhole. The first pin P1 coupled to the second linear motion slider LMSL2 of the second part 820 may be disposed and maintained to be substantially parallel to the first rotation axis C1. In order to assist in understanding the embodiment, reference numeral 'P10' refers to a state in which the first pin P1 and the second linear motion slider LMSL2 are connected. The first part 810 may include a first pin rail PR1 with a slit shape. The first pin P1 may be positioned (or inserted) into the first pin rail PR1. The first part 810 and the second part 820 may be connected by the first pin rail PR1 and the first pin P1. When an angle between the first frame 211 and the second frame 221 is changed, a first mutual linear motion (or first mutual sliding) between the first part 810 and the first bracket 51A may be performed by means of the first linear motion guide LMG1, and a second mutual linear motion (or second mutual sliding) between the second part 820 and the first bracket 51A may be performed by means of the second linear motion guide LMG2. The first mutual linear motion and the second mutual linear motion may be performed in conjunction with each other by the transmission of a force or a motion made by the interaction between the first pin rail PR1 and the first pin P1. The conjunction of the first mutual linear motion and the second mutual linear motion may be interpreted as the transmission of the force or motion or the conjunction between the first part 810, the second part 820, and the first frame 211 to which the first bracket 51A is fixed.

According to the embodiment, the third pin P3 may be connected to the fourth linear motion slider LMSL4 of the fourth part 840. The fourth linear motion slider LMSL4 may include a third pinhole corresponding to the third pin P3, and the third pin P3 may be positioned to penetrate the third pinhole. The third pin P3 coupled to the fourth linear motion slider LMSL4 of the fourth part 840 may be disposed and maintained to be substantially parallel to the third rotation axis C3. In order to assist in understanding the embodiment, reference numeral 'P30' refers to a state in which the third pin P3 and the fourth linear motion slider LMSL4 are connected. The third part 830 may include a third pin rail PR3 with a slit shape. The third pin P3 may be positioned (or inserted) into the third pin rail PR3. The third part 830 and the fourth part 840 may be connected by the third pin rail PR3 and the third pin P3. The pin-rail structure including the third pin P3 and the third pin rail PR3 may be provided substantially symmetrically with the pin-rail structure including the first pin P1 and the first pin rail PR1 with respect to the centerline A of the foldable electronic device 2. When the angle between the first frame 211 and the second frame 221 is changed, a third mutual linear motion (or third mutual sliding) between the third part 830 and the second bracket 52A may be performed by means of the third linear motion guide LMG3, and a fourth mutual linear motion (or fourth mutual sliding) between the fourth part 840 and the second bracket 52A may be performed by means of the fourth linear motion guide LMG4. The third mutual linear motion and the fourth mutual linear motion may be performed in conjunction with each other by the transmission of a force or a motion made by the interaction between the third pin rail PR3 and the third pin P3. The conjunction of the third mutual linear motion and the fourth mutual linear motion may be interpreted as the transmission of the force or motion or the conjunction between the third part 830, the fourth part 840, and the second frame 221 to which the second bracket 52A is fixed.

According to the embodiment, the pin-rail structure including the first pin P1 and the first pin rail PR1 and the pin-rail structure including the third pin P3 and the third pin rail PR3 enable smooth and soft operations between the first bracket 51A, the bracket connection part 53A, the second bracket 52A, and the bracket connection part 53A when the angle between the first frame 211 and the second frame 221 is changed, which may improve the switching operability when the user allows the foldable electronic device 2 to switch between the folded state and the unfolded state.

According to the embodiment, the first connection part 1001 may connect the first bracket 51A and the first part 810. The first connection part 1001 may rotate relative to the first part 810 about a fifth rotation axis C5 parallel to the first rotation axis C1. For example, the fifth rotation axis C5 may be provided by a shaft or pin that connects the first connection part 1001 and the first part 810. The second pin P2 may be disposed in the first connection part 1001. For example, the first connection part 1001 may include a pinhole corresponding to the second pin P2, and the second pin P2 may be positioned to penetrate the pinhole. The second pin P2 coupled to the first connection part 1001 may be disposed and maintained to be substantially parallel to the fifth rotation axis C5 (or the first rotation axis C1). The second pin P2 may be substantially parallel to the fifth rotation axis C5 and positioned to be spaced apart from the fifth rotation axis C5. In any embodiment, the first connection part 1001 may be provided in the form including the second pin P2. The first bracket 51A may include a second pin rail PR2 with a recess or slit shape while corresponding to the second pin P2. The second pin P2 may be positioned (or inserted) into the second pin rail PR2. When the angle between the first frame 211 and the second frame 221 is changed, the first part 810 may be moved in the first linear direction LD1 relative to the first bracket 51A, and the first connection part 1001 may be rotated about the fifth rotation axis C5 relative to the first part 810 by the interaction between the second pin P2 and the second pin rail PR2. When the angle between the first frame 211 and the second frame 221 is changed, the position of the second pin P2 with respect to the second pin rail PR2 may vary depending on the linear motion of the first part 810 relative to the first bracket 51A.

According to the embodiment, the second connection part 1002 may connect the second bracket 52A and the third part 830. The second connection part 1002 may rotate relative to the third part 830 about a sixth rotation axis C6 parallel to the third rotation axis C3. For example, the sixth rotation axis C6 may be provided by a shaft or pin that connects the second connection part 1002 and the third part 830. The fourth pin P4 may be disposed in the second connection part 1002. For example, the second connection part 1002 may include a pinhole corresponding to the fourth pin P4, and the fourth pin P4 may be positioned to penetrate the pinhole. The fourth pin P4 coupled to the second connection part 1002 may be disposed and maintained to be substantially parallel to the sixth rotation axis C6 (or the third rotation axis C3). The fourth pin P4 may be substantially parallel to the sixth rotation axis C6 and positioned to be spaced apart from the sixth rotation axis C6. In any embodiment, the first connection part 1001 may be provided in the form including the second pin P2. The second bracket 52A may include a fourth pin rail PR4 with a recess or slit shape while corresponding to the fourth pin P4. The fourth pin P4 may be positioned (or inserted) into the fourth pin rail PR4. When the angle between the first frame 211 and the second frame 221 is changed, the third part 830 may be moved in the third linear direction LD3 relative to the second bracket 52A, and the second connection part 1002 may be rotated about the sixth rotation axis C6 relative to the third part 830 by the interaction between the fourth pin P4 and the fourth pin rail PR4. When the angle between the first frame 211 and the second frame 221 is changed, the position of the fourth pin P4 with respect to the fourth pin rail PR4 may vary depending on the linear motion of the third part 830 relative to the second bracket 52A. The pin-rail structure including the fourth pin P4 and the fourth pin rail PR4 corresponding to the fourth pin P4 may be provided substantially symmetrically with the pin-rail structure including the second pin P2 and the second pin rail PR2 corresponding to the second pin P2 with respect to the centerline A (see FIG. 2) of the foldable electronic device 2.

According to the embodiment, the first plate 71 may be coupled to the first connection part 1001. In order to implement the screw-fastening, the first plate 71 may include the first screw hole SH11 (see FIG. 4), and the first connection part 1001 may include the first screw fastening portion B11 (see FIG. 4) aligned to correspond to the first screw hole SH11. The first connection part 1001 may include the protruding portion 531 (see FIG. 4) fitted with the hole 711 (see FIG. 4) of the first plate 71.

According to the embodiment, the second plate 72 may be coupled to the second connection part 1002. In order to implement the screw-fastening, the second plate 72 may include the second screw hole SH12 (see FIG. 4), and the second connection part 1002 may include a second screw fastening portion B11 (see FIG. 4) aligned to correspond to the second screw hole SH12. The second connection part 1002 may include the protruding portion 532 (see FIG. 4) fitted with the hole 721 (see FIG. 4) of the second plate 72.

According to the embodiment, when the foldable electronic device 2 switches between the unfolded state (see FIG. 2) and the folded state (see FIG. 3), the rotational motion of the first part 810 about the first rotation axis C1, the linear motion between the first part 810 and the first bracket 51A, the rotational motion of the second part 820 about the second rotation axis C2, the linear motion between the second part 820 and the first bracket 51A, and the motion of the first connection part 1001 connecting the first part 810 and the first bracket 51A may be performed. When the foldable electronic device 2 switches between the unfolded state and the folded state, the rotational motion of the third part 830 about the third rotation axis C3, the linear motion between the third part 830 and the second bracket 52A, the rotational motion of the fourth part 840 about the fourth rotation axis C4, the linear motion between the fourth part 840 and the second bracket 52A, and the motion of the second connection part 1002 connecting the third part 830 and the second bracket 52A may be performed.

According to the embodiment, when the foldable electronic device 2 switches from the unfolded state to the folded state, the first rotation axis C1 and the second rotation axis C2 may be positioned to be further spaced apart from the first frame 211, to which the first bracket 51A is fixed, than in the unfolded state of the foldable electronic device 2. When the foldable electronic device 2 switches from the unfolded state to the folded state, the first part 810 may be retracted and positioned with respect to the first bracket 51A in a direction opposite to the direction toward the third display area ③ of the flexible display module 24. When the foldable electronic device 2 switches from the unfolded state to the folded state, the third rotation axis C3 and the fourth rotation axis C4 may be positioned to be further spaced apart from the second frame 221, to which the second bracket 52A is fixed, than in the unfolded state of the foldable electronic device 2. When the foldable electronic device 2 switches from the unfolded state to the folded state, the third part 830 may be retracted and positioned with respect to the second bracket 52A in the direction opposite to the direction toward the third display area ③ of the flexible display module 24. When the foldable electronic device 2 switches from the unfolded state to the folded state, the first plate 71 and the second plate 72 may be positioned to face each other and be spaced apart from each other. When the foldable electronic device 2 switches from the unfolded state to the folded state, the first plate 71, which is coupled to the first connection part 1001, may be disposed to be inclined with respect to the first bracket 51A by the retraction of the first part 810 relative to the first bracket 51A and the motion of the first connection part 1001 connecting the first part 810 and the first bracket 51A so as not to interfere with the third display area ③ of the flexible display module 24 in comparison with the unfolded state of the foldable electronic device 2. When the foldable electronic device 2 switches from the unfolded state to the folded state, the second plate 72, which is coupled to the second connection part 1002, may be disposed to be inclined with respect to the second bracket 52A by the retraction of the third part 830 relative to the second bracket 52A and the motion of the second connection part 1002 connecting the third part 830 and the second bracket 52A so as not to interfere with the third display area ③ of the flexible display module 24 in comparison with the unfolded state of the foldable electronic device 2. When the foldable electronic device 2 switches from the unfolded state to the folded state, a space width in a first direction 811 between the first plate 71 and the second plate 72 may be provided to allow the third display area ③ to be disposed in a bent shape that may reduce bending stress and/or buckling. In the folded state of the foldable electronic device 2, the space between the first plate 71 and the second plate 72 may be provided in a shape widened in a direction toward the hinge housing 23 (see FIG. 4). When the foldable electronic device 2 switches from the unfolded state to the folded state, the first rotation axis C1 and the second rotation axis C2 become distant from the first frame 211 on which the first display area ① is disposed, and the third rotation axis C3 and the fourth rotation axis C4 become distant from the second frame 221 on which the second display area ② is disposed, such that a portion of the bracket connection part 53A (see FIG. 4), which is connected to the hinge housing 23, may be positioned to be distant from the structure, in which the first frame 211 and the second frame 221 face each other, in a second direction 812 perpendicular to the first direction 811. The portion of the bracket connection part 53A (see FIG. 4), which is connected to the hinge housing 23, may be a central portion including the constituent elements of the bracket connection part 53A to which the first part 810, the second part 820, the third part 830, and the fourth part 840 are connected. When the foldable electronic device 2 switches from the unfolded state to the folded state, the portion (e.g., the central portion) of the bracket connection part 53A (see FIG. 4), which is connected to the hinge housing 23, is positioned to be distant from the structure, in which the first frame 211 and the second frame 221 face each other, in the second direction 812, such that the space width in the second direction 812 may be provided to allow the third display area ③ to be disposed in a bent shape that may reduce bending stress and/or buckling.

According to the embodiment, when the foldable electronic device 2 switches from the unfolded state to the folded state, the portion (e.g., the central portion) of the bracket connection part 53A (see FIG. 4), which is connected to the hinge housing 23, is positioned to be distant from the structure, in which the first frame 211 and the second frame 221 face each other, in the second direction 2712, such that the hinge housing 23 may be exposed to the outside through an opened gap between the first housing 21 and the second housing 22 while reducing a gap between the hinge housing 23 and the first housing 21 and a gap between the hinge housing 23 and the second housing 22, as illustrated in FIG. 3.

According to the embodiment, when the foldable electronic device 2 switches from the folded state to the unfolded state, the first plate 71 and the second plate 72 may be positioned to support the third display area ③ of the flexible display module 24 by the change in relative position between the first frame 211 and the second frame 221 and by the first hinge module 5A and the second hinge module 5B that operate to correspond to the change in relative position between the first frame 211 and the second frame 221.

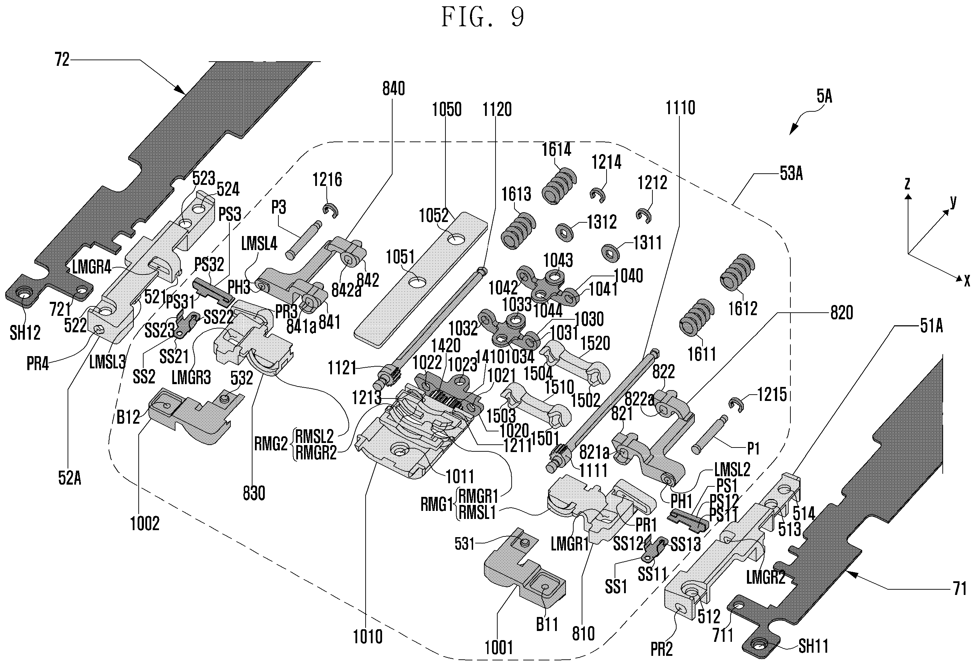

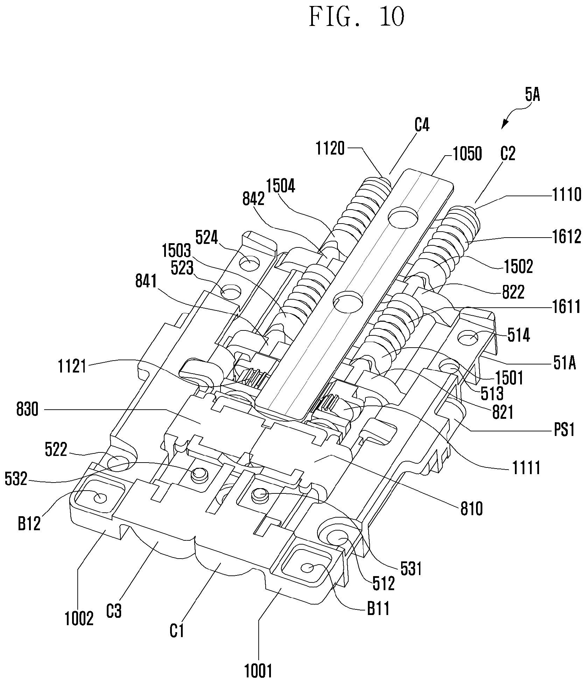

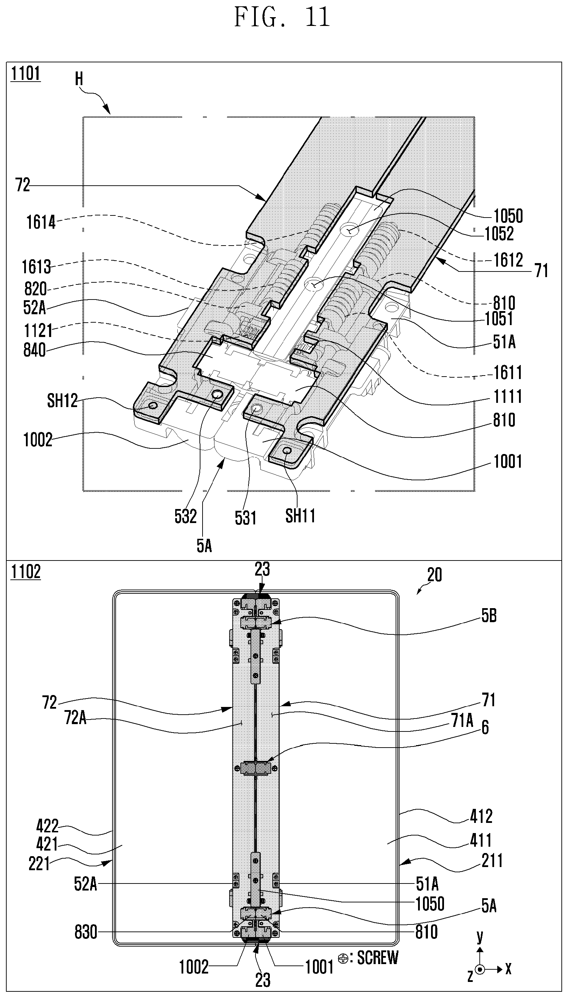

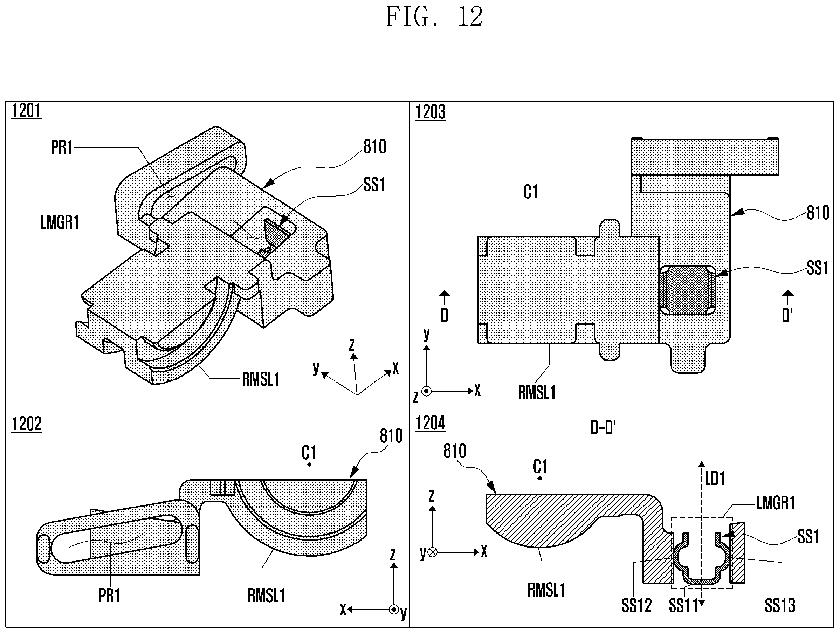

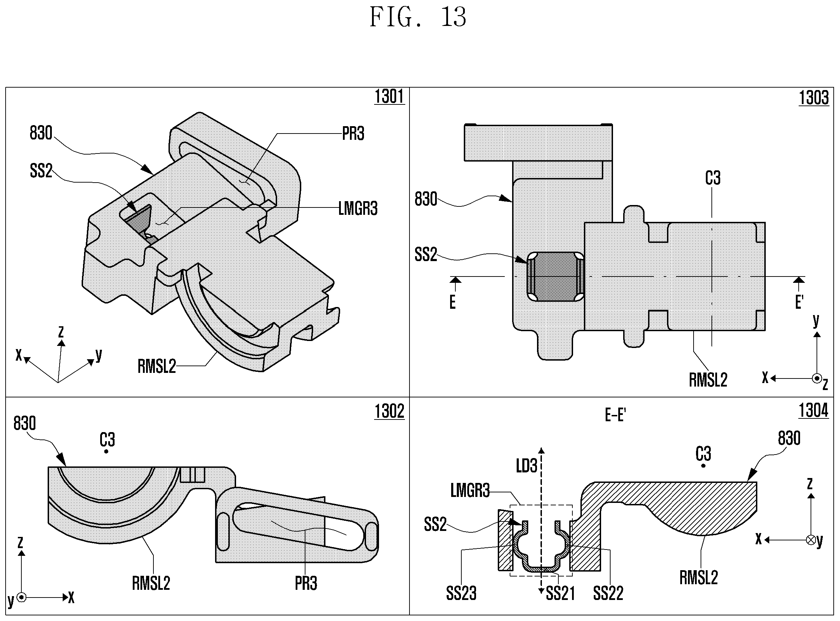

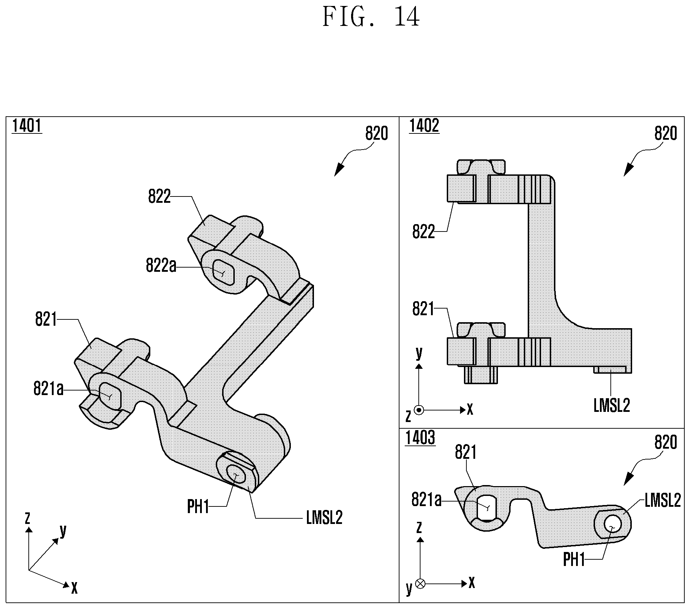

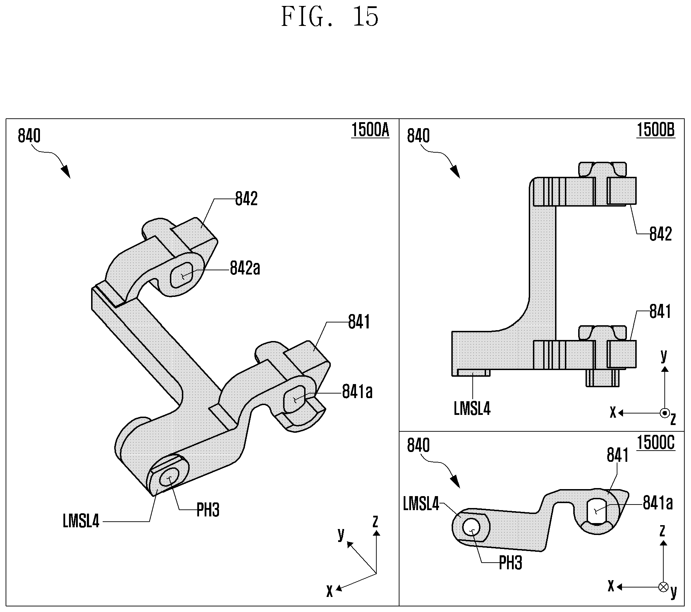

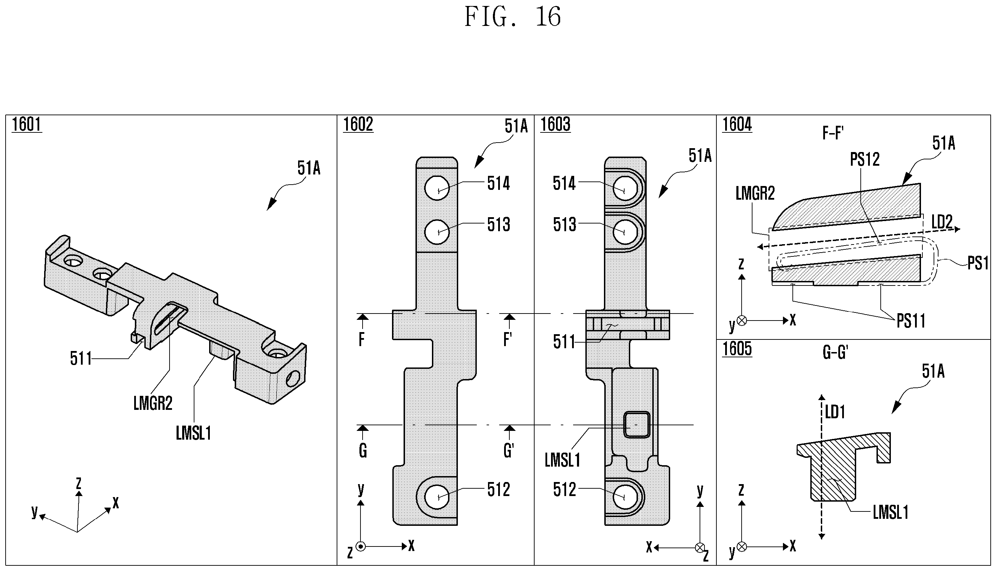

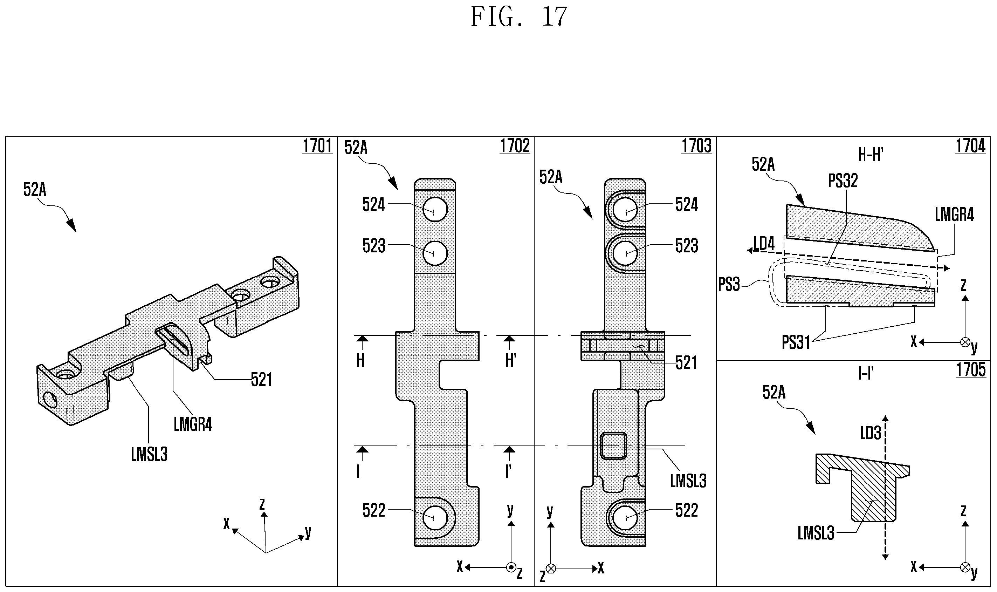

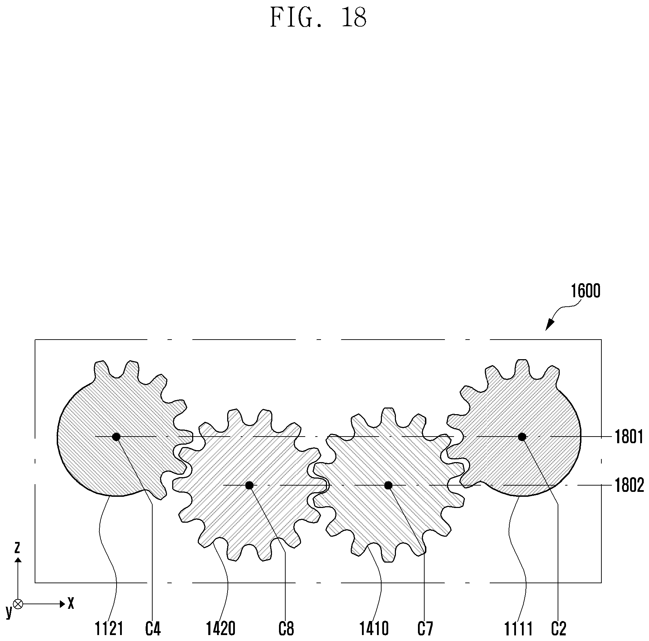

FIG. 9 is an exploded perspective view illustrating the first hinge module 5A and a perspective view illustrating the first plate 71 and the second plate 72 according to the embodiment of the present disclosure. FIG. 10 is a perspective view of the first hinge module 5A according to the embodiment of the present disclosure. FIG. 11 is a partial perspective view 1101 of a hinge part H and a view 1102 illustrating the foldable housing 20 according to the embodiment of the present disclosure. FIG. 12 is views 1201, 1202, and 1203 illustrating a state in which the first part 810 and a first sliding support element SS1 are coupled and a cross-sectional view 1204 taken along line D-D' and illustrating a state in which the first part 810 and the first sliding support element SS1 are coupled according to the embodiment of the present disclosure. FIG. 13 is views 1301, 1302, and 1303 illustrating a state in which the third part 830 and a second sliding support element SS2 are coupled and a cross-sectional view 1304 taken along line E-E' and illustrating a state in which the third part 830 and the second sliding support element SS2 are coupled according to the embodiment of the present disclosure. FIG. 14 are views 1401, 1402, and 1403 illustrating the second part 820 according to the embodiment of the present disclosure. FIG. 15 are views 1500A, 1500B, and 1500C illustrating the fourth part 840 according to the embodiment of the present disclosure. FIG. 16 is views 1601, 1602, and 1603 illustrating the first bracket 51A, a cross-sectional view 1604 taken along line F-F' and illustrating the first bracket 51A, and a cross-sectional view 1605 taken along line G-G' and illustrating the first bracket 51A according to the embodiment of the present disclosure. FIG. 17 is views 1701, 1702, and 1703 illustrating the second bracket 52A, a cross-sectional view 1704 taken along line H-H' and illustrating the second bracket 52A, and a cross-sectional view 1705 taken along line I-I' and illustrating the second bracket 52A according to the embodiment of the present disclosure. FIG. 18 is a cross-sectional view 1800 illustrating a first circular gear 1111, a second circular gear 1121, a third circular gear 1410, and a fourth circular gear 1420 according to the embodiment of the present disclosure.

With reference to FIGS. 9, 10, 11, 12, 13, 14, 15, 16, and 17, the first hinge module 5A may include the first bracket 51A, the second bracket 52A, the bracket connection part 53A, the first connection part 1001, and/or the second connection part 1002.

According to the embodiment, the first part 810 may be connected to the bracket connection part 53A and configured to be rotatable about the first rotation axis C1 relative to the bracket connection part 53A. The first rotation axis C1 is a central axis (e.g., a straight line serving as a rotation center) about which the first part 810 rotates, and the first rotation axis C1 may be provided by the portion where the first part 810 and the bracket connection part 53A are rotatably connected. The second part 820 may be connected to the bracket connection part 53A and configured to be rotatable about the second rotation axis C2 relative to the bracket connection part 53A. The second rotation axis C2 is a central axis about which the second part 820 rotates, and the second rotation axis C2 may be provided by the portion where the second part 820 and the bracket connection part 53A are rotatably connected. The first rotation axis C1 and the second rotation axis C2 may be substantially parallel to the centerline A (see FIG. 2) of the foldable electronic device 2 and positioned to be spaced apart from each other. The first part 810 and the second part 820 may be disposed to be spaced apart from each other in the direction (e.g., the y-axis direction) of the centerline A (see FIG. 2) of the foldable electronic device 2.

According to the embodiment, the third part 830 may be connected to the bracket connection part 53A and configured to be rotatable about the third rotation axis C3 relative to the bracket connection part 53A. The third rotation axis C3 is a central axis (e.g., a straight line serving as a rotation center) about which the third part 830 rotates, and the third rotation axis C3 may be provided by the portion where the third part 830 and the bracket connection part 53A are rotatably connected. The fourth part 840 may be connected to the bracket connection part 53A and configured to be rotatable about the fourth rotation axis C4 relative to the bracket connection part 53A. The fourth rotation axis C4 is a central axis about which the fourth part 840 rotates, and the fourth rotation axis C4 may be provided by the portion where the fourth part 840 and the bracket connection part 53A are rotatably connected. The third rotation axis C3 and the fourth rotation axis C4 may be substantially parallel to the centerline A (see FIG. 2) of the foldable electronic device 2 and positioned to be spaced apart from each other. The third part 830 and the fourth part 840 may be disposed to be spaced apart from each other in the direction (e.g., the y-axis direction) of the centerline A (see FIG. 2) of the foldable electronic device 2. The first part 810 and the third part 830 may be provided substantially symmetrically with respect to the centerline A (see FIG. 2) of the foldable electronic device 2. The second part 820 and the fourth part 840 may be provided substantially symmetrically with respect to the centerline A (see FIG. 2) of the foldable electronic device 2. The first rotation axis C1 of the first part 810 and the third rotation axis C3 of the third part 830 may be positioned substantially symmetrically with respect to the centerline A (see FIG. 2) of the foldable electronic device 2. The second rotation axis C2 of the second part 820 and the fourth rotation axis C4 of the fourth part 840 may be positioned substantially symmetrically with respect to the centerline A (see FIG. 2) of the foldable electronic device 2.

According to the embodiment, the first bracket 51A may be coupled to the first support part 411 (see FIG. 4) of the first frame 211 by screw-fastening. The first hinge module 5A may be connected to the first support part 411 (see FIG. 4) by means of the first bracket 51A. In order to implement the screw-fastening, the first bracket 51A may include a plurality of screw holes 512, 513, and 514, and the first support part 411 (see FIG. 4) may include a plurality of screw fastening portions aligned to correspond to the plurality of screw holes 512, 513, and 514 in a one-to-one manner. Because the first bracket 51A is fixed to the first support part 411 (see FIG. 4), the first frame 211 (see FIG. 4) may operate together with the first bracket 51A when the state of the foldable electronic device 2 is changed (e.g., switching between the unfolded state in FIG. 2 and the folded state in FIG. 3). The first part 810 and the second part 820 may be connected to the first bracket 51A and configured to be slidable relative to the first bracket 51A.

According to the embodiment, the second bracket 52A may be coupled to the second support part 421 (see FIG. 4) of the second frame 221 by screw-fastening. The first hinge module 5A may be connected to the second support part 421 (see FIG. 4) by means of the second bracket 52A. In order to implement the screw-fastening, the second bracket 52A may include a plurality of screw holes 522, 523, and 524, and the second support part 421 (see FIG. 4) may include a plurality of screw fastening portions aligned to correspond to the plurality of screw holes 522, 523, and 524 in a one-to-one manner. Because the second bracket 52A is fixed to the second support part 421 (see FIG. 4), the second frame 221 (see FIG. 4) may operate together with the second bracket 52A when the state of the foldable electronic device 2 is changed (e.g., switching between the unfolded state in FIG. 2 and the folded state in FIG. 3). In the embodiment, the first bracket 51A and the second bracket 52A may be provided substantially symmetrically with respect to the centerline A (see FIG. 2) of the foldable electronic device 2. The third part 830 and the fourth part 840 may be connected to the second bracket 52A and configured to be slidable relative to the second bracket 52A.

According to the embodiment, the bracket connection part 53A may include a first rotation support part (or a first rotation support member or a first rotation support element) 1010, a second rotation support part (or a second rotation support member or a second rotation support element) 1020, a third rotation support part (or a third rotation support member or a third rotation support element) 1030, a fourth rotation support part (or a fourth rotation support member or a fourth rotation support element) 1040, a cover 1050, a first shaft 1110, a second shaft 1120, a first snap ring 1211, a second snap ring 1212, a third snap ring 1213, a fourth snap ring 1214, a fifth snap ring 1215, a sixth snap ring 1216, a first washer 1311, a second washer 1312, the third circular gear 1410, the fourth circular gear 1420, a first cam 1510, a second cam 1520, a first compression spring 1611, a second compression spring 1612, a third compression spring 1613, a fourth compression spring 1614, the first pin P1, the third pin P3, a first pin support element (or a first pin support member) PS1, a third pin support element (or a third pin support member) PS3, the first sliding support element (or a first sliding support member) SS1, and/or the second sliding support element (or a second sliding support member) SS2.

According to the embodiment, the first rotation support part 1010 may be coupled to the hinge housing 23 (see FIG. 4) by screw-fastening. In order to implement the screw-fastening, the first rotation support part 1010 may include a screw hole 1011 provided in a central portion corresponding to the centerline A (see FIG. 2) of the foldable electronic device 2, and the hinge housing 23 may include a screw fastening portion aligned to correspond to the screw hole 1011. The first rotation support part 1010 may be provided substantially symmetrically with respect to the centerline A (see FIG. 2) of the foldable electronic device 2.

According to the embodiment, the first rotation support part 1010 may be connected to the first part 810 and the third part 830. The first hinge module 5A may include a first rotational motion guide RMG1 for implementing a mutual rotational motion between the first rotation support part 1010 and the first part 810. The first part 810 may softly and smoothly rotate relative to the first rotation support part 1010 by means of the first rotational motion guide RMG1. The first hinge module 5A may include a second rotational motion guide RMG2 for implementing a mutual rotational motion between the first rotation support part 1010 and the third part 830. The third part 830 may softly and smoothly rotate relative to the first rotation support part 1010 by means of the second rotational motion guide RMG2.

According to the embodiment, the first rotational motion guide RMG1 for implementing the mutual rotational motion between the first rotation support part 1010 and the first part 810 may include a first rotational motion guide rail RMGR1 included in the first rotation support part 1010, and a first rotational motion slider RMSL1 included in the first part 810 while corresponding to the first rotational motion guide rail RMGR1. The first rotational motion slider RMSL1 may be positioned in the first rotational motion guide rail RMGR1. The first rotational motion slider RMSL1 moves by being guided by the first rotational motion guide rail RMGR1, such that the first part 810 may rotate relative to the first rotation support part 1010. The first rotation axis C1 of the first part 810 may be provided substantially by a sliding pair including the first rotational motion slider RMSL1 and the first rotational motion guide rail RMGR1. The second rotational motion guide RMG2 for implementing the mutual rotational motion between the first rotation support part 1010 and the third part 830 may include a second rotational motion guide rail RMGR2 included in the first rotation support part 1010, and a second rotational motion slider RMSL2 included in the third part 830 while corresponding to the second rotational motion guide rail RMGR2. The second rotational motion slider RMSL2 may be positioned in the second rotational motion guide rail RMGR2. The second rotational motion slider RMSL2 moves by being guided by the second rotational motion guide rail RMGR2, such that the third part 830 may rotate relative to the first rotation support part 1010. The third rotation axis C3 of the third part 830 may be provided substantially by a sliding pair including the second rotational motion slider RMSL2 and the second rotational motion guide rail RMGR2.

According to the embodiment, the first rotational motion guide rail RMGR1 and the second rotational motion guide rail RMGR2 may be provided in the other surface of the first rotation support part 1010 that is opposite to one surface that faces the hinge housing 23 (see FIG. 4). The first rotational motion slider RMSL1 and the first rotational motion guide rail RMGR1 may be provided in curved shapes extending in the circumferential direction to implement a stable mutual rotational motion between the first part 810 and the first rotation support part 1010. A combination of the first rotational motion slider RMSL1 and the first rotational motion guide rail RMGR1 may be configured such that the first rotational motion slider RMSL1 does not depart from the first rotation support part 1010 while moving within a designated route range of the first rotational motion guide rail RMGR1. The second rotational motion slider RMSL2 and the second rotational motion guide rail RMGR2 may be provided in curved shapes extending in the circumferential direction to implement a stable mutual rotational motion between the third part 830 and the first rotation support part 1010. A combination of the second rotational motion slider RMSL2 and the second rotational motion guide rail RMGR2 may be configured such that the second rotational motion slider RMSL2 does not depart from the first rotation support part 1010 while moving within a designated route range of the second rotational motion guide rail RMGR2. The first rotational motion guide RMG1 and the second rotational motion guide RMG2 may be provided substantially symmetrically with respect to the centerline A (see FIG. 2) of the foldable electronic device 2.

According to various embodiments, the first part 810 and the first rotation support part 1010 may be rotatably connected to each other by means of a shaft or pin instead of the first rotational motion guide RMG1 without being limited to the illustrated example. The third part 830 and the first rotation support part 1010 may be rotatably connected to each other by means of a shaft or pin instead of the second rotational motion guide RMG2 without being limited to the illustrated example.

According to the embodiment, the second part 820 may include a first shaft connection part (or a first shaft connection arm or a first shaft arm) 821 and a second shaft connection part (or a second shaft connection arm or a second shaft arm) 822. The first shaft connection part 821 and the second shaft connection part 822 may be positioned to be spaced apart from each other in the direction (e.g., the y-axis direction) of the second rotation axis C2. The first shaft 1110 may be connected to the first shaft connection part 821 and the second shaft connection part 822 of the second part 820. The first shaft 1110 may be positioned to penetrate a shaft hole 821a provided in the first shaft connection part 821 and a shaft hole 822a provided in the second shaft connection part 822. The second rotation axis C2 of the second part 820 may be a central axis of the first shaft 1110. The first shaft connection part 821 and the second shaft connection part 822 may be fixed to the first shaft 1110, and the second part 820 may rotate together with the first shaft 1110 about the second rotation axis C2.

According to the embodiment, the fourth part 840 may include a third shaft connection part (or a third shaft connection arm or a third shaft arm) 841 and a fourth shaft connection part (or a fourth shaft connection arm or a fourth shaft arm) 842. The third shaft connection part 841 and the fourth shaft connection part 842 may be positioned to be spaced apart from each other in the direction (e.g., the y-axis direction) of the fourth rotation axis C4. The second shaft 1120 may be connected to the third shaft connection part 841 and the fourth shaft connection part 842 of the fourth part 840. The second shaft 1120 may be positioned to penetrate a shaft hole 841a provided in the third shaft connection part 841 and a shaft hole 842a provided in the fourth shaft connection part 842. The fourth rotation axis C4 of the fourth part 840 may be a central axis of the second shaft 1120. The third shaft connection part 841 and the fourth shaft connection part 842 may be fixed to the second shaft 1120, and the fourth part 840 may rotate together with the second shaft 1120 about the fourth rotation axis C4.

According to the embodiment, the second rotation support part 1020, the third rotation support part 1030, and the fourth rotation support part 1040 may fix the first shaft 1110 and the second shaft 1120 to predetermined positions. The second rotation support part 1020, the third rotation support part 1030, and the fourth rotation support part 1040 may support the first shaft 1110 so that the first shaft 1110 may rotate about the second rotation axis C2, and support the second shaft 1120 so that the second shaft 1120 may rotate about the fourth rotation axis C4. The second rotation support part 1020, the third rotation support part 1030, and the fourth rotation support part 1040 may be disposed to be spaced apart from one another in the direction (e.g., the y-axis direction) parallel to the second rotation axis C2 and the fourth rotation axis C4, and the third rotation support part 1030 may be positioned between the second rotation support part 1020 and the fourth rotation support part 1040. The first shaft 1110 may be positioned to penetrate a shaft hole 1021 provided in the second rotation support part 1020, a shaft hole 1031 provided in the third rotation support part 1030, and a shaft hole 1041 provided in the fourth rotation support part 1040. The second shaft 1120 may be positioned to penetrate a shaft hole 1022 provided in the second rotation support part 1020, a shaft hole 1032 provided in the third rotation support part 1030, and a shaft hole 1042 provided in the fourth rotation support part 1040. The second rotation support part 1020, the third rotation support part 1030, or the fourth rotation support part 1040 may be provided substantially symmetrically with respect to the centerline A (see FIG. 2) of the foldable electronic device 2.

According to the embodiment, the cover 1050 may be positioned to correspond to the centerline A (see FIG. 2) of the foldable electronic device 2 and coupled to the second rotation support part 1020, the third rotation support part 1030, and/or the fourth rotation support part 1040. In the unfolded state of the foldable electronic device 2, the cover 1050 may overlap the second rotation support part 1020, the third rotation support part 1030, and the fourth rotation support part 1040 when viewed from above the flexible display module 24.

According to the embodiment, the second rotation support part 1020, the third rotation support part 1030, or the fourth rotation support part 1040 may be coupled to the cover 1050 by screw-fastening. In order to implement the screw-fastening, the second rotation support part 1020 may include a screw hole 1023 provided in the central portion corresponding to the centerline A (see FIG. 2) of the foldable electronic device 2, and the cover 1050 may include a screw fastening portion (not illustrated) provided on a surface that faces the second rotation support part 1020 while corresponding to the screw hole 1023. In order to implement the screw-fastening, the third rotation support part 1030 may include a screw hole 103 provided in the central portion corresponding to the centerline A (see FIG. 2) of the foldable electronic device 2, and the cover 1050 may include a screw fastening portion (not illustrated) provided on the surface that faces the third rotation support part 1030 while corresponding to the screw hole 1033. In order to implement the screw-fastening, the fourth rotation support part 1040 may include a screw hole 1043 provided in the central portion corresponding to the centerline A (see FIG. 2) of the foldable electronic device 2, and the cover 1050 may include a screw fastening portion (not illustrated) provided on the surface that faces the fourth rotation support part 1040 while corresponding to the screw hole 1043.

According to the embodiment, the third rotation support part 1030 and the fourth rotation support part 1040 may be coupled to the hinge housing 23 by screw-fastening. In order to implement the screw-fastening, the third rotation support part 1030 may include a screw hole 1034 provided in the central portion corresponding to the centerline A (see FIG. 2) of the foldable electronic device 2, and the hinge housing 23 may include a screw fastening portion aligned to correspond to the screw hole 1034. In order to implement the screw-fastening, the fourth rotation support part 1040 may include a screw hole 1044 provided in the central portion corresponding to the centerline A (see FIG. 2) of the foldable electronic device 2, and the hinge housing 23 may include a screw fastening portion aligned to correspond to the screw hole 1044. The cover 1050 may include a through-hole 1051 aligned to correspond to the screw hole 1034 of the third rotation support part 1030, and a through-hole 1052 aligned to correspond to the screw hole 1034 of the fourth rotation support part 1040. The screw-fastening between the third rotation support part 1030 and the hinge cover 23 may be performed by a tool inserted into the through-hole 1051. The screw-fastening between the fourth rotation support part 1040 and the hinge cover 23 may be performed by a tool inserted into the through-hole 1052.

According to the embodiment, the first shaft 1110 may include the first circular gear 1111 positioned between the first rotation support part 1010 and the second rotation support part 1020. The second shaft 1120 may include the second circular gear 1121 positioned between the first rotation support part 1010 and the second rotation support part 1020. The first shaft 1110 including the first circular gear 1111 and the second shaft 1120 including the second circular gear 1121 may have substantially the same shape.

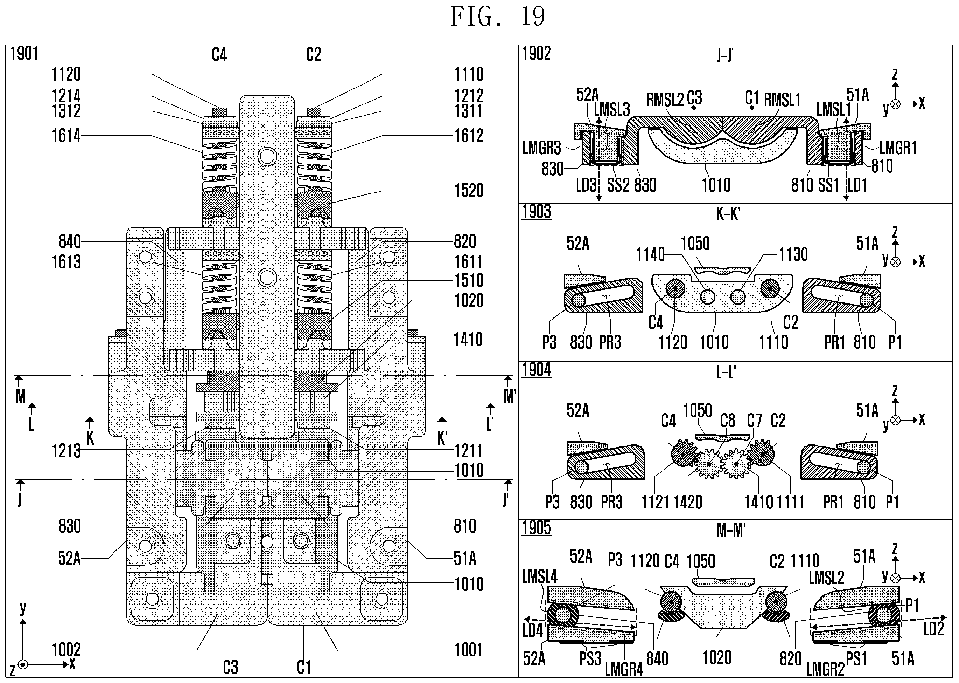

According to the embodiment, the third circular gear 1410 may be disposed on a third shaft (see a third shaft 1130 in FIG. 19). The third shaft may be parallel to the first shaft 1110 and the second shaft 1120. One end of the third shaft may be rotatably disposed in a shaft hole provided in the first rotation support part 1010, and the other end of the third shaft may be rotatably disposed in a shaft hole provided in the second rotation support part 1020. The fourth circular gear 1420 may be disposed on a fourth shaft (see a fourth shaft 1140 in FIG. 19). The fourth shaft may be parallel to the first shaft 1110 and the second shaft 1120. One end of the fourth shaft may be rotatably disposed in a shaft hole provided in the first rotation support part 1010, and the other end of the third shaft may be rotatably disposed in a shaft hole provided in the second rotation support part 1020. The third circular gear 1410 and the fourth circular gear 1420 may be positioned between the first rotation support part 1010 and the second rotation support part 1020. The third circular gear 1410 may engage with the first circular gear 1111 of the first shaft 1110. The fourth circular gear 1420 may engage with the second circular gear 1121 of the second shaft 1120. The third circular gear 1410 and the fourth circular gear 1420 may engage with each other. For example, the first circular gear 1111, the second circular gear 1121, the third circular gear 1410, and the fourth circular gear 1420 may each be a spur gear. When the second part 820 rotates about the rotation axis (e.g., the second rotation axis C2) of the first shaft 1110, the first circular gear 1111 of the first shaft 1110 may rotate in the same direction as the second part 820. When the fourth part 840 rotates about the rotation axis (e.g., the fourth rotation axis C4) of the second shaft 1120, the second circular gear 1121 of the second shaft 1120 may rotate in the same direction as the fourth part 840. When the first circular gear 1111 rotates in the first direction and the second circular gear 1121 rotates in the second direction opposite to the first direction, the third circular gear 1410 and the fourth circular gear 1420 may contribute to the transmission of a force (e.g., a rotational force) and the balance of a force between the first circular gear 1111 and the second circular gear 1121.

With reference to FIG. 18, the second rotation axis C2 of the first circular gear 1111 and the fourth rotation axis C4 of the second circular gear 1121 may be positioned substantially symmetrically with respect to the centerline A (see FIG. 2) of the foldable electronic device 2. The first circular gear 1111 and the second circular gear 1121 may have substantially the same shape. For example, the number of teeth of the first circular gear 1111 and the number of teeth of the second circular gear 1121 may be equal to each other. A seventh rotation axis C7 of the third circular gear 1410 and an eighth rotation axis C8 of the fourth circular gear 1420 may be positioned substantially symmetrically with respect to the centerline A (see FIG. 2) of the foldable electronic device 2. The third circular gear 1410 and the fourth circular gear 1420 may have substantially the same shape. For example, the number of teeth of the third circular gear 1410 and the number of teeth of the fourth circular gear 1420 may be equal to each other.

According to the embodiment, the third circular gear 1410 and the fourth circular gear 1420 may have substantially the same shape as the first circular gear 1111 and the second circular gear 1121. For example, the number of teeth of the first circular gear 1111, the number of teeth of the second circular gear 1121, the number of teeth of the third circular gear 1410, and the number of teeth of the fourth circular gear 1420 may be equal to one another.

According to various embodiments, the third circular gear 1410 and the fourth circular gear 1420 may be gears different in size from the first circular gear 1111 and the second circular gear 1121. For example, the third circular gear 1410 and the fourth circular gear 1420 may be gears smaller in size than the first circular gear 1111 and the second circular gear 1121 and smaller in number of teeth than the first circular gear 1111 and the second circular gear 1121. In another example, the third circular gear 1410 and the fourth circular gear 1420 may be gears larger in size than the first circular gear 1111 and the second circular gear 1121 and larger in number of teeth than the first circular gear 1111 and the second circular gear 1121.

According to the embodiment, an imaginary first straight line 1801, which passes through the second rotation axis C2 of the first circular gear 1111 and the fourth rotation axis C4 of the second circular gear 1121, may be positioned to be spaced apart from an imaginary second straight line 1802, which passes through the seventh rotation axis C7 of the third circular gear 1410 and the eighth rotation axis C8 of the fourth circular gear 1420, and substantially parallel to the imaginary second straight line 1802. In various embodiments, the first circular gear 1111, the second circular gear 1121, the third circular gear 1410, and the fourth circular gear 1420 may be positioned such that the first straight line 1801 and the second straight line 1802 are substantially consistent with each other.

According to the embodiment, the first circular gear 1111 may be provided in a shape in which a portion, which does not engage with the third circular gear 1410, excludes teeth to cope with the change in state of the foldable electronic device 2 (e.g., switching between the unfolded state in FIG. 2 and the folded state in FIG. 3). The second circular gear 1121 may be provided in a shape in which a portion, which does not engage with the fourth circular gear 1420, excludes teeth to cope with the change in state of the foldable electronic device 2 (e.g., switching between the unfolded state in FIG. 2 and the folded state in FIG. 3). The present disclosure is not limited to the illustrated example. The first circular gear 1111 or the second circular gear 1121 may be provided as a spur gear on which the third circular gear 1410 and the fourth circular gear 1420 are disposed.

According to the embodiment, the first cam 1510 may include a first cam gear 1501 corresponding to the first shaft connection part 821 of the second part 820, and a third cam gear 1503 corresponding to the third shaft connection part 841 of the fourth part 840. The first cam gear 1501 may include a shaft hole penetrated by the first shaft 1110. The third cam gear 1503 may include a shaft hole penetrated by the second shaft 1120. The second cam 1520 may include a second cam gear 1502 configured to correspond to the second shaft connection part 822 of the second part 820, and a fourth cam gear 1504 configured to correspond to the fourth shaft connection part 842 of the fourth part 840. The second cam gear 1502 may include a shaft hole penetrated by the first shaft 1110. The fourth cam gear 1504 may include a shaft hole penetrated by the second shaft 1120. The first cam gear 1501 of the first cam 1510 may be positioned between the first shaft connection part 821 and the second shaft connection part 822 of the second part 820. The second shaft connection part 822 of the second part 820 may be positioned between the first cam gear 1501 of the first cam 1510 and the second cam gear 1502 of the second cam 1520. The third cam gear 1503 of the first cam 1510 may be positioned between the third shaft connection part 841 and the fourth shaft connection part 842 of the fourth part 840. The fourth shaft connection part 842 of the fourth part 840 may be positioned between the third cam gear 1503 of the first cam 1510 and the fourth cam gear 1504 of the second cam 1520. The first cam gear 1501 may include a first back surface (tooth surface) having a concave-convex shape and facing the first shaft connection part 821, and the first shaft connection part 821 may include a second back surface having a concave-convex shape and facing the first back surface. The second cam gear 1502 may include a third back surface having a concave-convex shape and facing the second shaft connection part 822, and the second shaft connection part 822 may include a fourth back surface having a concave-convex shape and facing the third back surface. The third cam gear 1503 may include a fifth back surface having a concave-convex shape and facing the third shaft connection part 841, and the third shaft connection part 841 may include a sixth back surface having a concave-convex shape and facing the fifth back surface. The fourth cam gear 1504 may include a seventh back surface having a concave-convex shape and facing the fourth shaft connection part 842, and the fourth shaft connection part 842 may include an eighth back surface having a concave-convex shape and facing the seventh back surface.

According to the embodiment, the first rotation support part 1010 may include a recess in which the first snap ring 1211 (e.g., a first E-ring) is positioned, and the first snap ring 1211 may be fastened to one end of the first shaft 1110. The first snap ring 1211 may allow one end of the first shaft 1110 to be positioned on a designated portion on the first rotation support part 1010 without departing from the designated portion. The second snap ring 1212 (e.g., a second E-ring) may be fastened to the other end of the first shaft 1110. The first washer 1311 may be positioned to be penetrated by the first shaft 1110 and positioned between the second snap ring 1212 and the portion of the fourth rotation support part 1040 having the shaft hole 1041. The first shaft 1110 may be positioned to penetrate the first compression spring 1611, and the first compression spring 1611 may be elastically positioned between the first cam gear 1501 of the first cam 1510 and the second shaft connection part 822 of the second part 820. The first shaft 1110 may be positioned to penetrate the second compression spring 1612, and the second compression spring 1612 may be elastically positioned between the first washer 1311 supported on the second snap ring 1212 and the second cam gear 1502. With the elasticity of the first compression spring 1611 and the elasticity of the second compression spring 1612, the first cam gear 1501 and the first shaft connection part 821 may be elastically in contact with each other, and the second cam gear 1502 and the second shaft connection part 822 may be elastically in contact with each other.

According to the embodiment, the first rotation support part 1010 may include a recess in which the third snap ring 1213 (e.g., a third E-ring) is positioned, and the third snap ring 1213 may be fastened to one end of the second shaft 1120. The third snap ring 1213 may allow one end of the second shaft 1120 to be positioned on a designated portion on the first rotation support part 1010 without departing from the designated portion. The fourth snap ring 1214 (e.g., a fourth E-ring) may be fastened to the other end of the second shaft 1120. The second washer 1312 may be positioned to be penetrated by the second shaft 1120 and positioned between the fourth snap ring 1214 and the portion of the fourth rotation support part 1040 having the shaft hole 1042. The second shaft 1120 may be positioned to penetrate the third compression spring 1613, and the third compression spring 1613 may be elastically positioned between the third cam gear 1503 of the first cam 1510 and the fourth shaft connection part 842 of the fourth part 840. The second shaft 1120 may be positioned to penetrate the fourth compression spring 1614, and the fourth compression spring 1614 may be elastically positioned between the second washer 1312 supported on the fourth snap ring 1214 and the fourth cam gear 1504. With the elasticity of the third compression spring 1613 and the elasticity of the fourth compression spring 1614, the third cam gear 1503 and the third shaft connection part 841 may be elastically in contact with each other, and the fourth cam gear 1504 and the fourth shaft connection part 842 may be elastically in contact with each other.

According to the embodiment, the bracket connection part 53A may serve to provide a force for allowing the second part 820 and the fourth part 840 to rotate relative to each other. The bracket connection part 53A may serve to allow the second part 820 and the fourth part 840 to rotate by the same angle in opposite directions. The bracket connection part 53A may serve to allow the second part 820 and the fourth part 840 to be rotated by at least one designated angle and maintained (e.g., a free-stop function). The above-mentioned functions of the bracket connection part 53A may be provided by means of the interactions between the plurality of circular gears 1111, 1121, 1410, and 1420, the interaction between the first cam gear 1501 and the first shaft connection part 821 using the elasticity of the first compression spring 1611 and the elasticity of the second compression spring 1612, the interaction between the second cam gear 1502 and the second shaft connection part 822, the interaction between the third cam gear 1503 and the third shaft connection part 841 using the elasticity of the third compression spring 1613 and the elasticity of the fourth compression spring 1614, and the interaction between the fourth cam gear 1504 and the fourth shaft connection part 842. In various embodiments, the bracket connection part 53A may be interpreted as an 'actuator' of the first hinge module 5A. The first part 810 and the second part 820 are connected to the first bracket 51A and configured to be slidable relative to the first bracket 51A fixed to the first frame 211 (see FIG. 4), and the third part 830 and the fourth part 840 are connected to the second bracket 52A and configured to be slidable relative to the second bracket 52A fixed to the second frame 221 (see FIG. 4), such that the above-mentioned functions of the bracket connection part 53A may be substantially provided to the mutual rotational motion between the first frame 211 and the second frame 221.

According to the embodiment, the first hinge module 5A may include the first linear motion guide LMG1 (see FIG. 7) so that the first part 810 and the first bracket 51A may mutually slide (e.g., mutually linearly move) in the first linear direction LD1. The first linear motion guide LMG1 (see FIG. 7) may include the first linear motion guide rail LMGR1 included in the first part 810, and the first linear motion slider LMSL1 included in the first bracket 51A. The first linear motion guide rail LMGR1 may be provided on a portion of the first part 810 extending from the first rotational motion guide rail RMGR1. The first linear motion guide rail LMGR1 may be a through-hole of the first part 810 into which the first linear motion slider LMSL1 of the first bracket 51A is inserted, and the first linear motion guide rail LMGR1 may provide a route extending in the first linear direction LD1 when viewed in the direction (e.g., the y-axis direction) of the first rotation axis C1. The first linear motion slider LMSL1 may be the first protruding portion of the first bracket 51A inserted into the first linear motion guide rail LMGR1 of the first part 810 and have a shape extending in the first linear direction LD1 when viewed in the direction (e.g., the y-axis direction) of the first rotation axis C1. When the angle between the first frame 211 (see FIG. 4), to which the first bracket 51A is fixed, and the second frame 221 (see FIG. 4), to which the second bracket 52A is fixed, is changed, the first linear motion guide rail LMGR1 of the first part 810 and the first linear motion slider LMSL1 of the first bracket 51A may be mutually guided in the first linear direction LD1, and the relative position between the first linear motion guide rail LMGR1 and the first linear motion slider LMSL1 may be changed. With a combination (e.g., a sliding pair) of the first linear motion guide rail LMGR1 and the first linear motion slider LMSL1, the first part 810 and the first bracket 51A may be stably connected to each other and configured to be slidable in the first linear direction LD1. The combination of the first linear motion guide rail LMGR1 and the first linear motion slider LMSL1 may enable the mutual linear motion between the first part 810 and the first bracket 51A but substantially hinder the mutual rotational motion between the first part 810 and the first bracket 51A.

According to the embodiment, the first sliding support element SS1 may be positioned (inserted) into the first linear motion guide rail LMGR1 of the first part 810. The first linear motion slider LMSL1 of the first bracket 51A may be elastically supported by the first sliding support element SS1 and positioned in the first linear motion guide rail LMGR1 of the first part 810. The first linear motion guide rail LMGR1 and the first linear motion slider LMSL1 may be elastically connected by the first sliding support element SS1, and the first sliding support element SS1 may allow the first linear motion guide rail LMGR1 and the first linear motion slider LMSL1 to smoothly mutually slide while reducing mutual interference (e.g., frictional resistance). The first sliding support element SS1 may be a metal plate having a bent shape and capable of providing elasticity. For example, the first sliding support element SS1 may include a fixing portion SS11 coupled to the first part 810 by screw-fastening, one side extension portion SS12 extending from one side edge of the fixing portion SS11 and inserted into the first linear motion guide rail LMGR1, and the other side extension portion SS13 extending from the other side edge of the fixing portion SS11 and inserted into the first linear motion guide rail LMGR1. The first linear motion slider LMSL1 of the first bracket 51A may be positioned between one side extension portion SS12 and the other side extension portion SS13. One side extension portion SS12 and the other side extension portion SS13 may support an inner surface of the first linear motion guide rail LMGR1 and elastically press the first linear motion slider LMSL1.

According to the embodiment, the first hinge module 5A may include the second linear motion guide LMG2 (see FIG. 7) so that the second part 820 and the first bracket 51A may mutually slide (e.g., mutually linearly move) in the second linear direction LD2. The second linear motion guide LMG2 (see FIG. 7) may include the second linear motion guide rail LMGR2 included in the first bracket 51A, and the second linear motion slider LMSL2 included in the second part 820. The second linear motion guide rail LMGR2 may be a slit of the first bracket 51A into which the second linear motion slider LMSL2 of the second part 820 is inserted, and the second linear motion guide rail LMGR2 may provide a route extending in the second linear direction LD2 when viewed in the direction (e.g., the y-axis direction) of the second rotation axis C2. The second linear motion slider LMSL2 may be included in a portion of the second part 820 extending from the first shaft connection part 821 and the second shaft connection part 822. The second linear motion slider LMSL2 may be the second protruding portion of the second part 820 inserted into the second linear motion guide rail LMGR2 of the first bracket 51A. When the angle between the first frame 211 (see FIG. 4), to which the first bracket 51A is fixed, and the second frame 221 (see FIG. 4), to which the second bracket 52A is fixed, is changed, the second linear motion guide rail LMGR2 of the first bracket 51A and the second linear motion slider LMSL2 of the second part 820 may be mutually guided in the second linear direction LD2, and the relative position between the second linear motion guide rail LMGR2 and the second linear motion slider LMSL2 may be changed. With a combination (e.g., a sliding pair) of the second linear motion guide rail LMGR2 and the second linear motion slider LMSL2, the first bracket 51A and the second part 820 may be stably connected to each other and configured to be slidable in the second linear direction LD2. The combination of the second linear motion guide rail LMGR2 and the second linear motion slider LMSL2 may enable the mutual linear motion between the first bracket 51A and the second part 820 but substantially hinder the mutual rotational motion between the first bracket 51A and the second part 820.

According to the embodiment, the first hinge module 5A may include the third linear motion guide LMG3 (see FIG. 7) so that the third part 830 and the second bracket 52A may mutually slide (e.g., mutually linearly move) in the third linear direction LD3. The third linear motion guide LMG3 (see FIG. 7) may include the third linear motion guide rail LMGR3 included in the third part 830, and the third linear motion slider LMSL3 included in the second bracket 52A. The third linear motion guide rail LMGR3 may be provided on a portion of the third part 830 extending from the second rotational motion guide rail RMGR2. The third linear motion guide rail LMGR3 may be a through-hole of the third part 830 into which the third linear motion slider LMSL3 of the second bracket 52A is inserted, and the third linear motion guide rail LMGR3 may provide a route extending in the third linear direction LD3 when viewed in the direction (e.g., the y-axis direction) of the third rotation axis C3. The third linear motion slider LMSL3 may be the third protruding portion of the second bracket 52A inserted into the third linear motion guide rail LMGR3 of the third part 830 and have a shape extending in the third linear direction LD3 when viewed in the direction (e.g., the y-axis direction) of the third rotation axis C3. When the angle between the first frame 211 (see FIG. 4), to which the first bracket 51A is fixed, and the second frame 221 (see FIG. 4), to which the second bracket 52A is fixed, is changed, the third linear motion slider LMSL3 of the second bracket 52A and the third linear motion guide rail LMGR3 may be mutually guided in the third linear direction LD3, and the relative position between the third linear motion guide rail LMGR3 and the third linear motion slider LMSL3 may be changed. With a combination (e.g., a sliding pair) of the third linear motion guide rail LMGR3 and the third linear motion slider LMSL3, the third part 830 and the second bracket 52A may be stably connected to each other and configured to be slidable in the third linear direction LD3. The combination of the third linear motion guide rail LMGR3 and the third linear motion slider LMSL3 may enable the mutual linear motion between the third part 830 and the second bracket 52A but substantially hinder the mutual rotational motion between the third part 830 and the second bracket 52A.

According to the embodiment, the second sliding support element SS2 may be positioned (inserted) into the third linear motion guide rail LMGR3 of the third part 830. The third linear motion slider LMSL3 of the second bracket 52A may be elastically supported by the second sliding support element SS2 and positioned in the third linear motion guide rail LMGR3 of the third part 830. The third linear motion guide rail LMGR3 and the third linear motion slider LMSL3 may be elastically connected by the second sliding support element SS2, and the second sliding support element SS2 may allow the third linear motion guide rail LMGR3 and the third linear motion slider LMSL3 to smoothly mutually slide while reducing mutual interference (e.g., frictional resistance). The second sliding support element SS2 may be a metal plate having a bent shape and capable of providing elasticity. For example, the second sliding support element SS2 may include a fixing portion SS21 coupled to the third part 830 by screw-fastening, one side extension portion SS22 extending from one side edge of the fixing portion SS21 and inserted into the third linear motion guide rail LMGR3, and the other side extension portion SS23 extending from the other side edge of the fixing portion SS21 and inserted into the third linear motion guide rail LMGR3. The third linear motion slider LMSL3 of the second bracket 52A may be positioned between one side extension portion SS22 and the other side extension portion SS23. One side extension portion SS22 and the other side extension portion SS23 may support an inner surface of the third linear motion guide rail LMGR3 and elastically press the third linear motion slider LMSL3.

According to the embodiment, the first hinge module 5A may include the fourth linear motion guide LMG4 (see FIG. 7) so that the fourth part 840 and the second bracket 52A may mutually slide (e.g., mutually linearly move) in the fourth linear direction LD4. The fourth linear motion guide LMG4 (see FIG. 7) may include the fourth linear motion guide rail LMGR4 included in the second bracket 52A, and the fourth linear motion slider LMSL4 included in the fourth part 840. The fourth linear motion guide rail LMGR4 may be a slit of the second bracket 52A into which the fourth linear motion slider LMSL4 of the fourth part 840 is inserted, and the fourth linear motion guide rail LMGR4 may provide a route extending in the fourth linear direction LD4 when viewed in the direction (e.g., the y-axis direction) of the fourth rotation axis C4. The fourth linear motion slider LMSL4 may be included in a portion of the fourth part 840 extending from the third shaft connection part 841 and the fourth shaft connection part 842. The fourth linear motion slider LMSL4 may be the fourth protruding portion of the fourth part 840 inserted into the fourth linear motion guide rail LMGR4 of the second bracket 52A. When the angle between the first frame 211 (see FIG. 4), to which the first bracket 51A is fixed, and the second frame 221 (see FIG. 4), to which the second bracket 52A is fixed, is changed, the fourth linear motion guide rail LMGR4 of the second bracket 52A and the fourth linear motion slider LMSL4 of the fourth part 840 may be mutually guided in the fourth linear direction LD4, and the relative position between the fourth linear motion guide rail LMGR4 and the fourth linear motion slider LMSL4 may be changed. With a combination (e.g., a sliding pair) of the fourth linear motion guide rail LMGR4 and the fourth linear motion slider LMSL4, the second bracket 52A and the fourth part 840 may be stably connected to each other and configured to be slidable in the fourth linear direction LD4. The combination of the fourth linear motion guide rail LMGR4 and the fourth linear motion slider LMSL4 may enable the mutual linear motion between the second bracket 52A and the fourth part 840 but substantially hinder the mutual rotational motion between the second bracket 52A and the fourth part 840.

According to the embodiment, the first part 810 including the first rotational motion guide rail RMGR1 and the first linear motion guide rail LMGR1 may be provided substantially symmetrically with the third part 830 including the second rotational motion guide rail RMGR2 and the third linear motion guide rail LMGR3 with respect to the centerline A (see FIG. 2) of the foldable electronic device 2. The first bracket 51A including the first linear motion slider LMSL1 and the second linear motion guide rail LMGR2 may be provided substantially symmetrically with the second bracket 52A including the third linear motion slider LMSL3 and the fourth linear motion guide rail LMGR4 with respect to the centerline A (see FIG. 2) of the foldable electronic device 2. The first sliding support element SS1 and the second sliding support element SS2 may be provided substantially symmetrically with respect to the centerline A (see FIG. 2) of the foldable electronic device 2.

According to the embodiment, the first pin P1 may be connected to the second linear motion slider LMSL2 of the second part 820. The second linear motion slider LMSL2 may include a first pinhole PH1 corresponding to the first pin P1, and the first pin P1 may be positioned to penetrate the first pinhole PH1. The first pin P1 coupled to the second linear motion slider LMSL2 of the second part 820 may be disposed and maintained to be substantially parallel to the first rotation axis C1 and the second rotation axis C2. The first part 810 includes the first pin rail PR1 with a slit shape. The first part 810 may include a first structure part including the first rotational motion slider RMSL1 and the first linear motion guide rail LMGR1, and a second structure part extending from the first structure part and configured to provide the first pin rail PR1. The first pin rail PR1 may have a route extending in a linear direction when viewed in the direction (e.g., the y-axis direction) of the second rotation axis C2. The first pin P1 may be positioned to penetrate the first pin rail PR1. The first part 810 and the second part 820 may be connected by the first pin rail PR1 and the first pin P1. The first pin P1 may include a first end including a head, and a second end extending from the first end. The fifth snap ring 1215 (e.g., a fifth E-ring) may be fastened to the second end of the first pin P1. The first end of the first pin P1, which includes the head, may be positioned between the first structure part and the second structure part. The second end, to which the fifth snap ring 1215 is fastened, may protrude in a direction (e.g., a +y-axis direction) from a first end toward a second end from a portion of the second part 820 that provides the second linear motion slider LMSL2. The fifth snap ring 1215, which is fastened to the head of the first end and the second end, may be positioned so that the first pin P1 does not depart from the first part 810 and the second part 820. The first pin P1 may be positioned to pass through the second linear motion guide rail LMGR2 of the first bracket 51A. A portion of the second part 820, which includes the second linear motion slider LMSL2, may be positioned between the second structure part of the first part 810, which includes the first pin rail PR1, and the portion of the first bracket 51A that includes the second linear motion guide rail LMGR2. When the angle between the first frame 211 (see FIG. 4), to which the first bracket 51A is fixed, and the second frame 221 (see FIG. 4), to which the second bracket 52A is fixed, is changed, the first mutual linear motion (or first mutual sliding) between the first part 810 and the first bracket 51A may be performed by means of the first linear motion guide LMG1 (see FIG. 7), and the second mutual linear motion (or second mutual sliding) between the second part 820 and the first bracket 51A may be performed by means of the second linear motion guide LMG2 (see FIG. 7). The first mutual linear motion and the second mutual linear motion may be performed in conjunction with each other by the transmission of a force or a motion made by the interaction between the first pin rail PR1 and the first pin P1. The conjunction of the first mutual linear motion and the second mutual linear motion may be interpreted as the transmission of the force or motion or the conjunction between the first part 810, the second part 820, and the first frame 211 (see FIG. 4) to which the first bracket 51A is fixed.

According to the embodiment, the third pin P3 may be connected to the fourth linear motion slider LMSL4 of the fourth part 840. The fourth linear motion slider LMSL4 may include a third pinhole PH3 corresponding to the third pin P3, and the third pin P3 may be positioned to penetrate the third pinhole PH3. The third pin P3 coupled to the fourth linear motion slider LMSL4 of the fourth part 840 may be disposed and maintained to be substantially parallel to the third rotation axis C3 and the fourth rotation axis C4. The third part 830 may include the third pin rail PR3 with a slit shape. The third part 830 may include a third structure part including the second rotational motion slider RMSL2 and the third linear motion guide rail LMGR3, and a fourth structure part extending from the third structure part and configured to provide the third pin rail PR3. The third pin rail PR3 may have a route extending in the linear direction when viewed in the direction (e.g., the y-axis direction) of the fourth rotation axis C4. The third pin P3 may be positioned to penetrate the third pin rail PR3. The third part 830 and the fourth part 840 may be connected by the third pin rail PR3 and the third pin P3. The third pin P3 may include a third end including a head, and a fourth end extending from the third end. The sixth snap ring 1216 (e.g., a sixth E-ring) may be fastened to the third end of the third pin P3. The third end of the third pin P3, which includes the head, may be positioned between the third structure part and the fourth structure part. The fourth end, to which the sixth snap ring 1216 is fastened, may protrude in a direction (e.g., the +y-axis direction) from a third end toward a fourth end from a portion of the fourth part 840 that provides the fourth linear motion slider LMSL4. The sixth snap ring 1216, which is fastened to the head of the third end and the fourth end, may be positioned so that the third pin P3 does not depart from the third part 830 and the fourth part 840. The third pin P3 may be positioned to penetrate the fourth linear motion guide rail LMGR4 of the second bracket 52A. A portion of the fourth part 840, which includes the fourth linear motion slider LMSL4, may be positioned between the fourth structure part of the third part 830, which includes the third pin rail PR3, and the portion of the second bracket 52A that includes the fourth linear motion guide rail LMGR4. The pin-rail structure including the third pin P3 and the third pin rail PR3 corresponding to the third pin P3 may be provided substantially symmetrically with the pin-rail structure including the first pin P1 and the first pin rail PR1 with respect to the centerline A (see FIG. 2) of the foldable electronic device 2. When the angle between the first frame 211 (see FIG. 4), to which the first bracket 51A is fixed, and the second frame 221 (see FIG. 4), to which the second bracket 52A is fixed, is changed, the third mutual linear motion (or third mutual sliding) between the third part 830 and the second bracket 52A may be performed by means of the third linear motion guide LMG3 (see FIG. 7), and the fourth mutual linear motion (or fourth mutual sliding) between the fourth part 840 and the second bracket 52A may be performed by means of the fourth linear motion guide LMG4 (see FIG. 7). The third mutual linear motion and the fourth mutual linear motion may be performed in conjunction with each other by the transmission of a force or a motion made by the interaction between the third pin rail PR3 and the third pin P3. The conjunction of the third mutual linear motion and the fourth mutual linear motion may be interpreted as the transmission of the force or motion or the conjunction between the third part 830, the fourth part 840, and the second frame 221 to which the second bracket 52A is fixed.

According to the embodiment, the pin-rail structure including the first pin P1 and the first pin rail PR1 and the pin-rail structure including the third pin P3 and the third pin rail PR3 enable smooth and soft operations between the first bracket 51A, the bracket connection part 53A, the second bracket 52A, and the bracket connection part 53A when the angle between the first frame 211 (see FIG. 4) and the second frame 221 (see FIG. 4) is changed, which may improve the switching operability when the user allows the foldable electronic device 2 to switch between the folded state and the unfolded state.

According to the embodiment, the first pin support element PS1 may be coupled to the first bracket 51A. A portion of the first bracket 51A, which includes the second linear motion guide rail LMGR2, may include an opening 511 provided to correspond to the second linear motion guide rail LMGR2. The first pin support element PS1 may be a metal plate having a bent shape and capable of providing elasticity. For example, the first pin support element PS1 may include a fixing portion PS11 coupled to the first bracket 51A, and an extension portion PS12 extending from the fixing portion PS11 and inserted into the second linear motion guide rail LMGR2 of the first bracket 51A through the opening 511. The extension portion PS12, which is supported on the fixing portion PS11 coupled to the first bracket 51A, may elastically support the first pin P1 that passes through the second linear motion guide rail LMGR2. The first pin support element PS1 may reduce a clearance between the first bracket 51A and the first pin P1 disposed on the second part 820, thereby contributing to organic and/or mechanical connectivity or organic and/mechanical operability.

According to the embodiment, the third pin support element PS3 may be coupled to the second bracket 52A. A portion of the second bracket 52A, which includes the fourth linear motion guide rail LMGR4, may include an opening 521 provided to correspond to the fourth linear motion guide rail LMGR4. The third pin support element PS3 may be a metal plate having a bent shape and capable of providing elasticity. For example, the third pin support element PS3 may include a fixing portion PS31 coupled to the second bracket 52A, and an extension portion PS32 extending from the fixing portion PS31 and inserted into the fourth linear motion guide rail LMGR4 of the second bracket 52A through the opening 521. The extension portion PS32, which is supported on the fixing portion PS31 coupled to the second bracket 52A, may elastically support the third pin P3 that passes through the fourth linear motion guide rail LMGR4. The third pin support element PS3 may reduce a clearance between the second bracket 52A and the third pin P3 disposed on the fourth part 840, thereby contributing to organic and/or mechanical connectivity or organic and/mechanical operability.

According to the embodiment, the first connection part 1001 may connect the first bracket 51A and the first part 810. The first connection part 1001 may be positioned to be spaced apart from the second part 820 in the direction (e.g., the y-axis direction) of the first rotation axis C1 (or the second rotation axis C2), and the first part 810 may be positioned between the first connection part 1001 and the second part 820. The first connection part 1001 may be connected to the first part 810 and configured to be rotatable relative to the first part 810 about the fifth rotation axis C5 (see FIG. 7) parallel to the first rotation axis C1. The first bracket 51A may include the second pin rail PR2 with a recess or slit shape. The second pin P2 (see FIG. 7), which is disposed in the first connection part 1001 or included in the first connection part 1001, may be positioned (or inserted) into the second pin rail PR2. When the angle between the first frame 211 (see FIG. 4), to which the first bracket 51A is fixed, and the second frame 221, to which the second bracket 52A is fixed, is changed, the first part 810 may be moved in the first linear direction LD1 relative to the first bracket 51A, and the first connection part 1001 may be rotated about the fifth rotation axis C5 relative to the first part 810 by the interaction between the second pin P2 (see FIG. 7) and the second pin rail PR2. When the angle between the first frame 211 (see FIG. 4) and the second frame 221 (see FIG. 4) is changed, the position of the second pin P2 with respect to the second pin rail PR2 may vary depending on the linear motion of the first part 810 relative to the first bracket 51A.

According to the embodiment, the second connection part 1002 may connect the second bracket 52A and the third part 830. The second connection part 1002 may be positioned to be spaced apart from the fourth part 840 in the direction (e.g., the y-axis direction) of the third rotation axis C3 (or the fourth rotation axis C4), and the third part 830 may be positioned between the second connection part 1002 and the fourth part 840. The second connection part 1002 may be connected to the third part 830 and configured to be rotatable relative to the third part 830 about the sixth rotation axis C6 (see FIG. 7) parallel to the third rotation axis C3. The second bracket 52A may include the fourth pin rail PR4 with a recess or slit shape. The fourth pin P4 (see FIG. 7), which is disposed in the second connection part 1002 or included in the second connection part 1002, may be positioned (or inserted) into the fourth pin rail PR4. When the angle between the first frame 211 (see FIG. 4), to which the first bracket 51A is fixed, and the second frame 221, to which the second bracket 52A is fixed, is changed, the third part 830 may be moved in the third linear direction LD3 relative to the second bracket 52A, and the second connection part 1002 may be rotated about the sixth rotation axis C6 relative to the third part 830 by the interaction between the fourth pin P4 (see FIG. 7) and the fourth pin rail PR4. When the angle between the first frame 211 (see FIG. 4) and the second frame 221 (see FIG. 4) is changed, the position of the fourth pin P4 with respect to the fourth pin rail PR4 may vary depending on the linear motion of the third part 830 relative to the second bracket 52A. The pin-rail structure including the fourth pin P4 and the fourth pin rail PR4 corresponding to the fourth pin P4 may be provided substantially symmetrically with the pin-rail structure including the second pin P2 and the second pin rail PR2 corresponding to the second pin P2 with respect to the centerline A (see FIG. 2) of the foldable electronic device 2. The first connection part 1001 may be provided substantially symmetrically with the second connection part 1002 with respect to the centerline A (see FIG. 2) of the foldable electronic device 2.

According to the embodiment, the first plate 71 may be coupled to the first connection part 1001. The second plate 72 may be coupled to the second connection part 1002. When the foldable electronic device 2 switches from the unfolded state to the folded state, the first plate 71, which is coupled to the first connection part 1001, may be disposed to be inclined with respect to the first bracket 51A by the retraction of the first part 810 relative to the first bracket 51A and the motion of the first connection part 1001 connecting the first part 810 and the first bracket 51A so as not to interfere with the third display area ③ (see FIG. 4) of the flexible display module 24 in comparison with the unfolded state of the foldable electronic device 2. When the foldable electronic device 2 switches from the unfolded state to the folded state, the second plate 72, which is coupled to the second connection part 1002, may be disposed to be inclined with respect to the second bracket 52A by the retraction of the third part 830 relative to the second bracket 52A and the motion of the second connection part 1002 connecting the third part 830 and the second bracket 52A so as not to interfere with the third display area ③ of the flexible display module 24 in comparison with the unfolded state of the foldable electronic device 2. When the foldable electronic device 2 switches from the folded state to the unfolded state, the first surface 71A (see FIG. 10) of the first plate 71 and the second surface 72A of the second plate 72 may be positioned to support the third display area ③ (see FIG. 4) of the flexible display module 24 by the change in relative position between the first frame 211 and the second frame 221 and by the first hinge module 5A and the second hinge module 5B that operate to correspond to the change in relative position between the first frame 211 and the second frame 221.

According to the embodiment, with reference to FIG. 11, in the unfolded state of the foldable electronic device 2 (see FIG. 3), the cover 1050 may not substantially overlap the first plate 71 and the second plate 72 when viewed from above the flexible display module 24 (e.g., when viewed in a -z-axis direction). In various embodiments, the cover 1050 may support a part of the third display area ③ (see FIG. 4) of the flexible display module 24 that corresponds to a portion between the first plate 71 and the second plate 72. A surface of the cover 1050, which supports the third display area ③ (see FIG. 4) of the flexible display module 24, may be disposed without a substantial height difference from the first surface 71A of the first plate 71 and the second surface 72A of the second plate 72. In substantially the same manner as the first hinge module 5A, the second hinge module 5B may support the third display area ③ of the flexible display module 24 in the unfolded state of the foldable electronic device 2. The cover 1050 may reduce creases of the flexible display module 24.

According to the embodiment, with reference to FIG. 11, in the unfolded state of the foldable electronic device 2 (see FIG. 3), the guide rail assembly 6 may support a part of the third display area ③ (see FIG. 4) of the flexible display module 24 that corresponds to the portion between the first plate 71 and the second plate 72 when viewed from above the flexible display module 24 (e.g., when viewed in the -z-axis direction). A surface of the guide rail assembly 6, which supports the third display area ③ (see FIG. 4) of the flexible display module 24, may be disposed without a substantial height difference from the first surface 71A of the first plate 71 and the second surface 72A of the second plate 72.

According to various embodiments, the first part 810 may be referred to as a 'first rotator', and the third part 830 may be referred to as a 'second rotator'. The second part 820 may be referred to as a 'first hinge arm' or a 'first arm', and the fourth part 840 may be referred to as a 'second hinge arm' or a 'second arm'. The first plate 71 may be referred to as a 'first wing plate', and the second plate 72 may be referred to as a 'second wing plate'. The first connection part 1001 may be referred to as a 'first wing plate rotator', and the second connection part 1002 may be referred to as a 'second wing plate rotator'. The cover 1050 may be referred to as a 'center plate'.

According to various embodiments, in order to reduce a frictional force, a loss of motion transmission, or a loss of force transmission between two constituent elements included in the first hinge module 5A, a lubricant (e.g., grease) may be disposed (e.g., applied) between the constituent elements. In various embodiments, in order to reduce a frictional force, a loss of motion transmission, or a loss of force transmission between constituent elements, lubrication coating (e.g., coating using various lubricating materials such as Teflon) may be provided to surfaces of the constituent elements.

According to various embodiments, the constituent elements included in the first hinge module 5A may be made of a material (e.g., metal or engineering plastic) having rigidity or durability that prevents substantial deformation of the first housing 21 and the second housing 22 while corresponding to a force applied to the mutual rotational motion between the first housing 21 and the second housing 22.

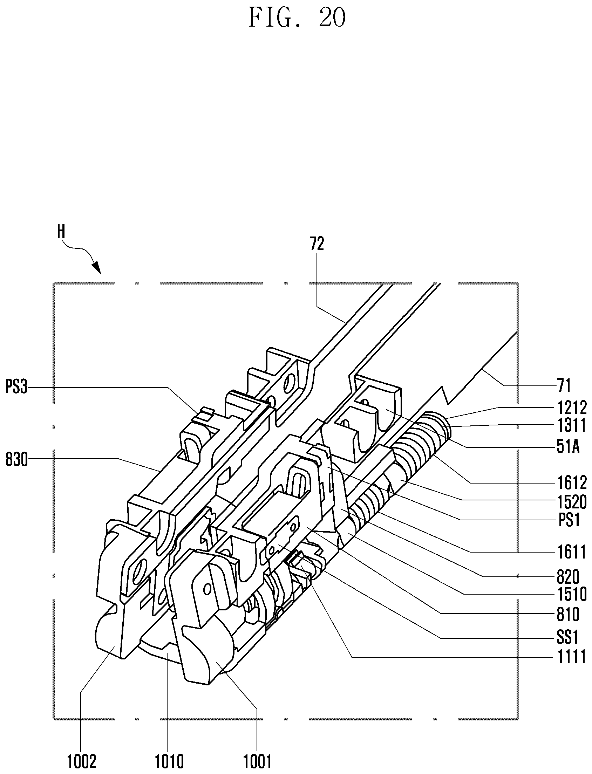

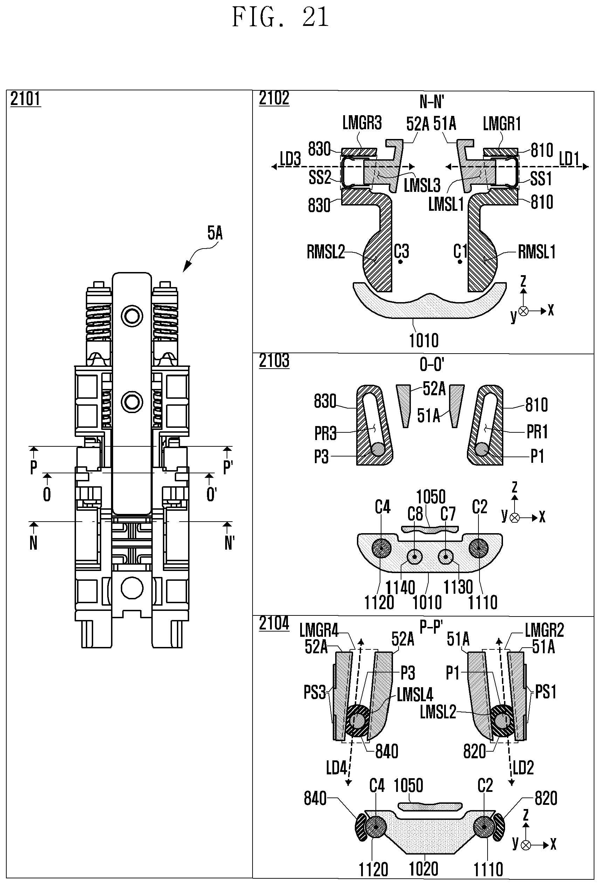

FIG. 19 is a view 1901 illustrating the first hinge module 5A in the unfolded state (see FIG. 2) of the foldable electronic device 2, a cross-sectional view 1902 taken along line J-J' and illustrating the first hinge module 5A, a cross-sectional view 1903 taken along line K-K' and illustrating the first hinge module 5A, a cross-sectional view 1904 taken along line L-L' and illustrating the first hinge module 5A, and a cross-sectional view 1905 taken along line M-M' and illustrating the first hinge module 5A according to the embodiment of the present disclosure. FIG. 20 is a partial perspective view of the hinge part H in the folded state (see FIG. 3) of the foldable electronic device 2 according to the embodiment of the present disclosure. FIG. 21 is a view 2101 illustrating the first hinge module 5A, a cross-sectional view 2102 taken along line N-N' and illustrating the first hinge module 5A, a cross-sectional view 2103 taken along line O-O' and illustrating the first hinge module 5A, and a cross-sectional view 2104 taken along line P-P' and illustrating the first hinge module 5A according to the embodiment of the present disclosure.

With reference to FIGS. 19, 20, and 21, in the embodiment, when the angle between the first frame 211 (see FIG. 4), to which the first bracket 51A is fixed, and the second frame 221 (see FIG. 4), to which the second bracket 52A is fixed, is changed, the rotational motion of the first part 810 may be performed about the first rotation axis C1, and the rotational motion of the second part 820 may be performed about the second rotation axis C2. When the angle between the first frame 211 (see FIG. 4), to which the first bracket 51A is fixed, and the second frame 221 (see FIG. 4), to which the second bracket 52A is fixed, is changed, the linear motion between the first part 810 and the first bracket 51A may be performed in the first linear direction LD1 by means of the first linear motion guide rail LMGR1 and the first linear motion slider LMSL1. When the angle between the first frame 211 (see FIG. 4), to which the first bracket 51A is fixed, and the second frame 221 (see FIG. 4), to which the second bracket 52A is fixed, is changed, the linear motion between the second part 820 and the first bracket 51A may be performed in the second linear direction LD2 by means of the second linear motion guide rail LMGR2 and the second linear motion slider LMSL2. When the angle between the first frame 211 (see FIG. 4), to which the first bracket 51A is fixed, and the second frame 221 (see FIG. 4), to which the second bracket 52A is fixed, is changed, a force or motion may be transmitted between the first part 810 and the second part 820 by means of the first pin rail PR1 and the first pin P1. When the angle between the first frame 211 (see FIG. 4), to which the first bracket 51A is fixed, and the second frame 221 (see FIG. 4), to which the second bracket 52A is fixed, is changed, the motion of the first connection part 1001, which connects the first part 810 and the first bracket 51A, may be performed by means of the second pin P2 (see FIG. 7) and the second pin rail PR2 (see FIG. 7).

According to the embodiment, when the angle between the first frame 211 (see FIG. 4), to which the first bracket 51A is fixed, and the second frame 221 (see FIG. 4), to which the second bracket 52A is fixed, is changed, the rotational motion of the third part 830 may be performed about the third rotation axis C3, and the rotational motion of the fourth part 840 may be performed about the fourth rotation axis C4. When the angle between the first frame 211 (see FIG. 4), to which the first bracket 51A is fixed, and the second frame 221 (see FIG. 4), to which the second bracket 52A is fixed, is changed, the linear motion between the third part 830 and the second bracket 52A may be performed in the third linear direction LD3 by means of the third linear motion guide rail LMGR3 and the third linear motion slider LMSL3. When the angle between the first frame 211 (see FIG. 4), to which the first bracket 51A is fixed, and the second frame 221 (see FIG. 4), to which the second bracket 52A is fixed, is changed, the linear motion between the fourth part 840 and the second bracket 52A may be performed in the fourth linear direction LD4 by means of the fourth linear motion guide rail LMGR4 and the fourth linear motion slider LMSL4. When the angle between the first frame 211 (see FIG. 4), to which the first bracket 51A is fixed, and the second frame 221 (see FIG. 4), to which the second bracket 52A is fixed, is changed, a force or motion may be transmitted between the third part 830 and the fourth part 840 by means of the third pin rail PR3 and the third pin P3. When the angle between the first frame 211 (see FIG. 4), to which the first bracket 51A is fixed, and the second frame 221 (see FIG. 4), to which the second bracket 52A is fixed, is changed, the motion of the second connection part 1002, which connects the third part 830 and the second bracket 52A, may be performed by means of the fourth pin P4 (see FIG. 7) and the fourth pin rail PR4 (see FIG. 7).

According to the embodiment, when the foldable electronic device 2 switches from the unfolded state (see FIG. 2) to the folded state (see FIG. 3), the first rotation axis C1 and the second rotation axis C2 may be positioned to be further spaced apart from the first frame 211 (see FIG. 4), to which the first bracket 51A is fixed, than in the unfolded state of the foldable electronic device 2. When the foldable electronic device 2 switches from the unfolded state to the folded state, the first part 810 may be retracted and positioned with respect to the first bracket 51A in a direction opposite to the direction toward the third display area ③ (see FIG. 7) of the flexible display module 24. When the foldable electronic device 2 switches from the unfolded state to the folded state, the third rotation axis C3 and the fourth rotation axis C4 may be positioned to be further spaced apart from the second frame 221 (see FIG. 4), to which the second bracket 52A is fixed, than in the unfolded state of the foldable electronic device 2. When the foldable electronic device 2 switches from the unfolded state to the folded state, the third part 830 may be retracted and positioned with respect to the second bracket 52A in the direction opposite to the direction toward the third display area ③ (see FIG. 7) of the flexible display module 24. When the foldable electronic device 2 switches from the unfolded state to the folded state, the first plate 71 and the second plate 72 may be positioned to face each other and be spaced apart from each other. When the foldable electronic device 2 switches from the unfolded state to the folded state, the first plate 71, which is coupled to the first connection part 810, may be disposed to be inclined with respect to the first bracket 51A by the retraction of the first part 810 relative to the first bracket 51A and the motion of the first connection part 1001 connecting the first part 810 and the first bracket 51A so as not to interfere with the third display area ③ (see FIG. 7) of the flexible display module 24 in comparison with the unfolded state of the foldable electronic device 2. When the foldable electronic device 2 switches from the unfolded state to the folded state, the second plate 72, which is coupled to the second connection part 1002, may be disposed to be inclined with respect to the second bracket 52A by the retraction of the third part 830 relative to the second bracket 52A and the motion of the second connection part 1002 connecting the third part 830 and the second bracket 52A so as not to interfere with the third display area ③ (see FIG. 7) of the flexible display module 24 in comparison with the unfolded state of the foldable electronic device 2.

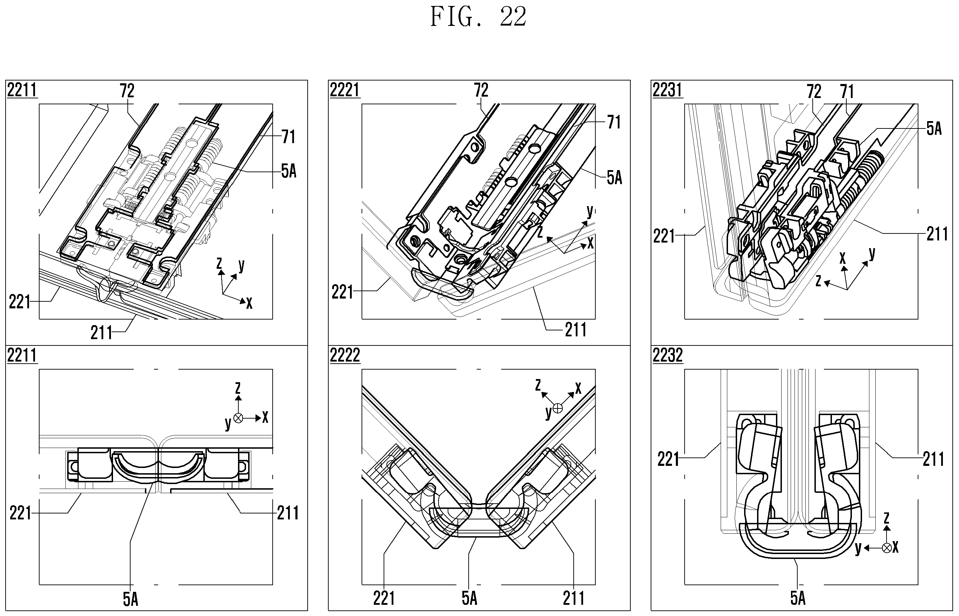

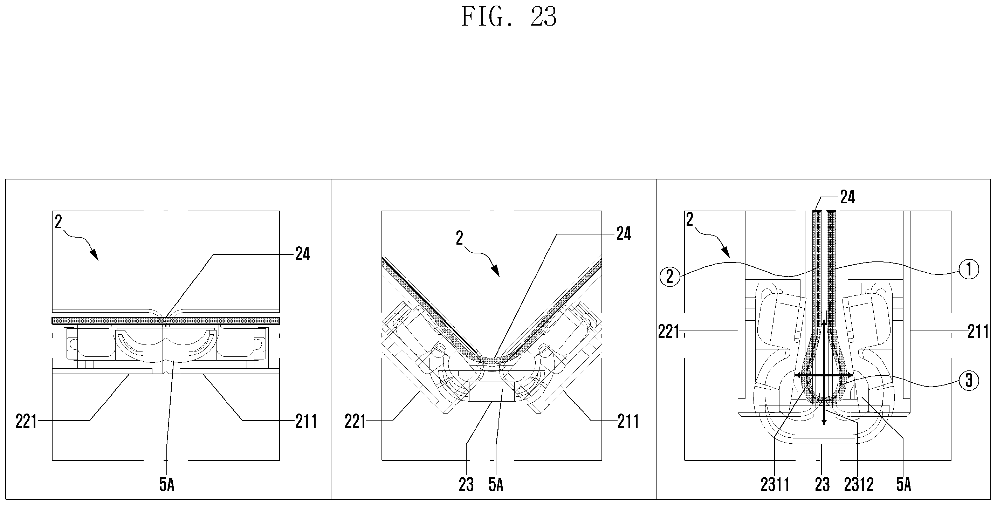

FIG. 22 is a perspective view 2211 illustrating the foldable housing 20 and a view 2212 illustrating the foldable housing 20 in the foldable electronic device 2 in the unfolded state, a perspective view 2221 of the foldable housing 20 and a view 2222 illustrating the foldable housing 20 in the foldable electronic device 2 in the intermediate state, and a perspective view 2231 of the foldable housing 20 and a view 2232 illustrating the foldable housing 20 in the foldable electronic device 2 in the folded state according to the embodiment of the present disclosure. FIG. 23 is a cross-sectional view 2301 of the foldable electronic device 2 in the unfolded state, a cross-sectional view 2302 of the foldable electronic device 2 in the intermediate state, and a cross-sectional view 2303 of the foldable electronic device 2 in the folded state according to the embodiment of the present disclosure.

With reference to FIGS. 22 and 23, when the foldable electronic device 2 switches from the unfolded state to the folded state, a space width in a first direction 2311 between the first plate 71 and the second plate 72 may be provided by the operation of the first hinge module 5A described with reference to FIGS. 19, 20, and 21 to allow the third display area ③ to be disposed in a bent shape that may reduce bending stress and/or buckling. In the folded state of the foldable electronic device 2, the space between the first plate 71 and the second plate 72 may be provided in a shape widened toward the hinge housing 23. When the foldable electronic device 2 switches from the unfolded state to the folded state, the first rotation axis C1 (see FIG. 21) and the second rotation axis C2 (see FIG. 21) become distant from the first frame 211 on which the first display area ① is disposed, and the third rotation axis C3 (see FIG. 21) and the fourth rotation axis C4 (see FIG. 21) become distant from the second frame 221 on which the second display area ② is disposed, such that the bracket connection part 53A (see FIG. 4) may be positioned to be distant from the structure, in which the first frame 211 and the second frame 221 face each other, in a second direction 2312 perpendicular to the first direction 2311. For example, when the foldable electronic device 2 switches from the unfolded state to the folded state, the cover 1050 (e.g., the center plate) (see FIG. 21) may be positioned to be distant from the structure, in which the first frame 211 and the second frame 221 face each other, in the second direction 2312. When the foldable electronic device 2 switches from the unfolded state to the folded state, the bracket connection part 53A is positioned to be distant from the structure, in which the first frame 211 and the second frame 221 face each other, in the second direction 2312, such that the space width in the second direction 2312 may be provided to allow the third display area ③ to be disposed in a bent shape that may reduce bending stress and/or buckling.

According to the embodiment, when the foldable electronic device 2 switches from the unfolded state to the folded state, the bracket connection part 53A (see FIG. 4) is positioned to be distant from the structure, in which the first frame 211 and the second frame 221 face each other, in the second direction 2312, such that the hinge housing 23 coupled to the bracket connection part 53A may be exposed to the outside through the opened gap between the first housing 21 and the second housing 22 while reducing a gap between the hinge housing 23 and the first housing 21 (see FIG. 3) and a gap between the hinge housing 23 and the second housing 22 (see FIG. 3), as illustrated in FIG. 3.

According to the embodiment, when the foldable electronic device 2 switches from the folded state to the unfolded state, the first plate 71 and the second plate 72 may be positioned to support the third display area ③ of the flexible display module 24 by the change in relative position between the first frame 211 and the second frame 221 and by the first hinge module 5A that operates to correspond to the change in relative position between the first frame 211 and the second frame 221. When the foldable electronic device 2 switches from the folded state to the unfolded state, the cover 1050 (e.g., the center plate) (see FIG. 21) may be positioned to support the third display area ③ of the flexible display module 24 by the change in relative position between the first frame 211 and the second frame 221 and by the first hinge module 5A that operates to correspond to the change in relative position between the first frame 211 and the second frame 221.

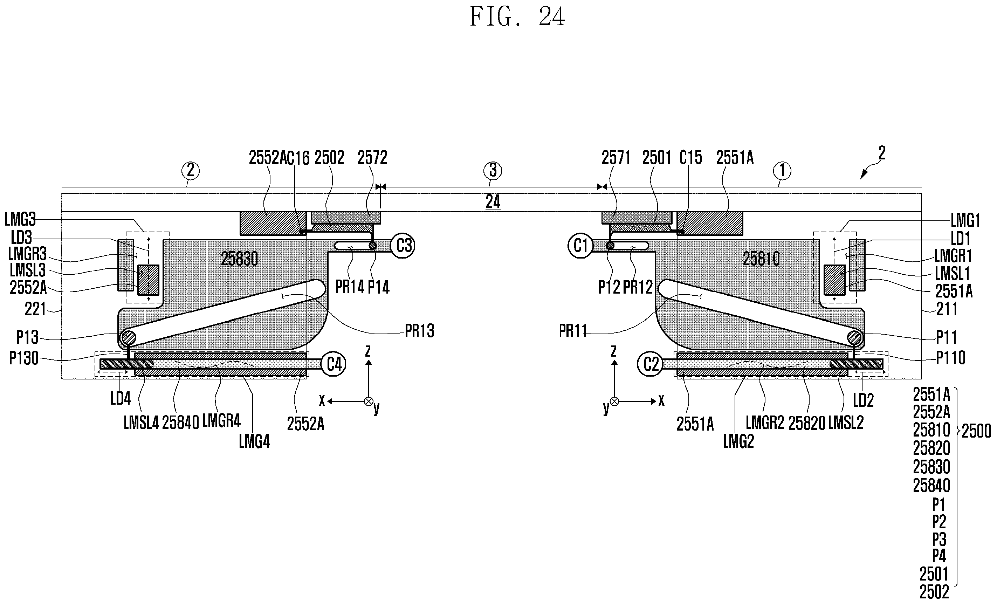

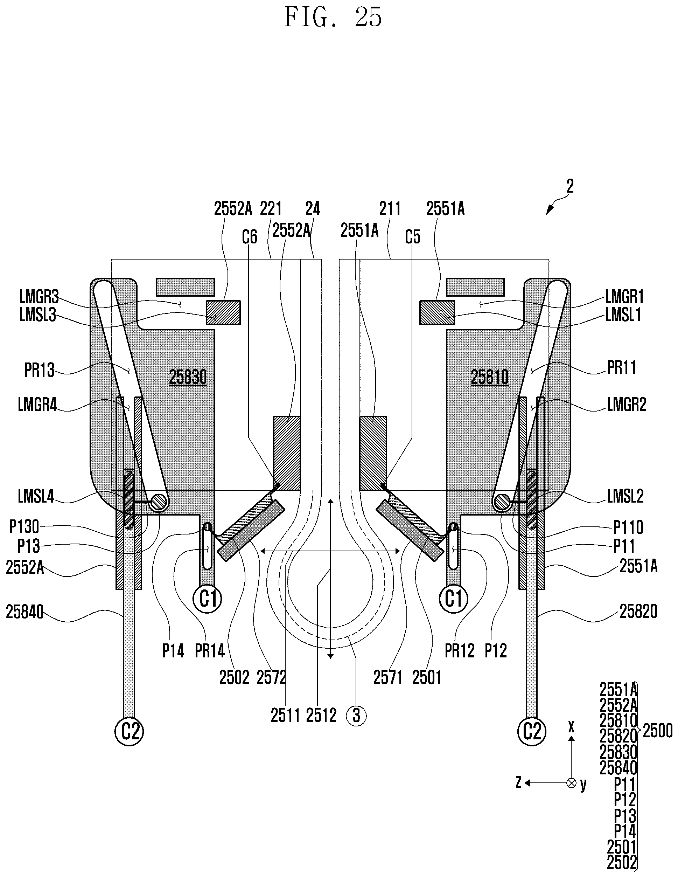

FIG. 24 is a cross-sectional view illustrating the unfolded state of the foldable electronic device 2 according to various embodiments of the present disclosure. FIG. 25 is a cross-sectional view illustrating the folded state of the foldable electronic device 2 according to various embodiments of the present disclosure.

With reference to FIGS. 24 and 25, the foldable electronic device 2 may include the first frame 211, the second frame 221, a hinge module 2500, a first plate 2571, a second plate 2572, and/or the flexible display module 24. In the embodiment, the hinge module 2500 may include a first bracket 2551A (e.g., the first bracket 51A in FIG. 7), a second bracket 2552A (e.g., the second bracket 52A in FIG. 7), a first part 25810 (e.g., the first part 810 in FIG. 7), a second part 25820 (e.g., the second part 820 in FIG. 7), a third part 25830 (e.g., the third part 830 in FIG. 7), a fourth part 25840 (e.g., the fourth part 840 in FIG. 7), the first pin P11 (e.g., the first pin P1 in FIG. 7), a second pin P12, a third pin P13 (e.g., the third pin P3 in FIG. 7), a fourth pin P14, a first connection part 2501, and/or a second connection part 2502. The first hinge module 5A or the second hinge module 5B according to the embodiment in FIG. 4 may be substituted with the hinge module 2500 according to the embodiment in FIG. 24.

According to the embodiment, the first part 25810 may be configured to be rotatable about the first rotation axis C1. The first part 25810 and the first bracket 2551A may be connected to each other and configured to be slidable in the first linear direction LD1 by means of the first linear motion guide LMG1. The second part 25820 may be configured to be rotatable about the second rotation axis C2. The second part 25820 and the first bracket 2551A may be connected to each other and configured to be slidable by means of the second linear motion guide LMG2 in the second linear direction LD2 different from the first linear direction LD1. The third part 25830 may be configured to be rotatable about the third rotation axis C3. The third part 25830 and the second bracket 2552A may be connected to each other and configured to be slidable in the third linear direction LD3 by means of the third linear motion guide LMG3. The fourth part 25840 may be configured to be rotatable about the fourth rotation axis C4. The fourth part 25840 and the second bracket 2552A may be connected to each other and configured to be slidable by means of the fourth linear motion guide LMG4 in the fourth linear direction LD4 different from the third linear direction LD3. The first rotation axis C1 may be positioned substantially symmetrically with the third rotation axis C3 with respect to the centerline A (see FIG. 2) of the foldable electronic device 2. The second rotation axis C2 may be positioned substantially symmetrically with the fourth rotation axis C4 with respect to the centerline A (see FIG. 2) of the foldable electronic device 2. The first linear motion guide LMG1 may be provided substantially symmetrically with the third linear motion guide LMG3 with respect to the centerline A (see FIG. 2) of the foldable electronic device 2. The second linear motion guide LMG2 may be provided substantially symmetrically with the fourth linear motion guide LMG4 with respect to the centerline A (see FIG. 2) of the foldable electronic device 2. The first part 25810 may be provided substantially symmetrically with the third part 25830 with respect to the centerline A (see FIG. 2) of the foldable electronic device 2. The second part 25820 may be provided substantially symmetrically with the fourth part 25840 with respect to the centerline A (see FIG. 2) of the foldable electronic device 2.

According to the embodiment, the first pin P11 may be connected to the second linear motion slider LMSL2 of the second part 25820. The first pin P11 coupled to the second linear motion slider LMSL2 of the second part 25820 may be disposed and maintained to be substantially parallel to the first rotation axis C1. In order to assist in understanding the embodiment, reference numeral 'P110' refers to a state in which the first pin P11 and the second linear motion slider LMSL2 are connected. The first part 25810 may include the first pin rail PR11 with a slit shape. The first pin P11 may be positioned (or inserted) into the first pin rail PR11. The first part 25810 and the second part 25820 may be connected by the first pin rail PR11 and the first pin P11. When an angle between the first frame 211 and the second frame 221 is changed, a first mutual linear motion (or first mutual sliding) between the first part 25810 and the first bracket 2551A may be performed by means of the first linear motion guide LMG1, and a second mutual linear motion (or second mutual sliding) between the second part 25820 and the first bracket 2551A may be performed by means of the second linear motion guide LMG2. The first mutual linear motion and the second mutual linear motion may be performed in conjunction with each other by the transmission of a force or a motion made by the interaction between the first pin rail PR11 and the first pin P11. The conjunction of the first mutual linear motion and the second mutual linear motion may be interpreted as the transmission of the force or motion or the conjunction between the first part 25810, the second part 25820, and the first frame 211 to which the first bracket 2551A is fixed.

According to the embodiment, the third pin P13 may be connected to the fourth linear motion slider LMSL4 of the fourth part 25840. The third pin P13 coupled to the fourth linear motion slider LMSL4 of the fourth part 25840 may be disposed and maintained to be substantially parallel to the third rotation axis C3. In order to assist in understanding the embodiment, reference numeral 'P130' refers to a state in which the third pin P130 and the fourth linear motion slider LMSL4 are connected. The third part 25830 may include the third pin rail PR13 with a slit shape. The third pin P13 may be positioned (or inserted) into the third pin rail PR13. The third part 25830 and the fourth part 25840 may be connected by the third pin rail PR13 and the third pin P13. When the angle between the first frame 211 and the second frame 221 is changed, a third mutual linear motion (or third mutual sliding) between the third part 25830 and the second bracket 2552A may be performed by means of the third linear motion guide LMG3, and a fourth mutual linear motion (or fourth mutual sliding) between the fourth part 25840 and the second bracket 2552A may be performed by means of the fourth linear motion guide LMG4. The third mutual linear motion and the fourth mutual linear motion may be performed in conjunction with each other by the transmission of a force or a motion made by the interaction between the third pin rail PR13 and the third pin P13. The conjunction of the third mutual linear motion and the fourth mutual linear motion may be interpreted as the transmission of the force or motion or the conjunction between the third part 25830, the fourth part 25840, and the second frame 221 to which the second bracket 2552A is fixed.

According to the embodiment, the first connection part 2501 may connect the first bracket 2551A and the first part 25810. The first connection part 2501 may rotate relative to the first bracket 2551A about a fifth rotation axis C15 parallel to the first rotation axis C1. For example, the fifth rotation axis C15 may be provided by a pin that connects the first connection part 2501 and the first bracket 2551A. The second pin P12 may be disposed in the first connection part 2501. In various embodiments, the first connection part 2501 may be provided in a shape further including a portion corresponding to the second pin P12. In this case, the second pin P12 may be excluded. The second pin P12 coupled to the first connection part 2501 may be disposed and maintained to be substantially parallel to the fifth rotation axis C15 (or the first rotation axis C1). The second pin P12 may be substantially parallel to the fifth rotation axis C15 and positioned to be spaced apart from the fifth rotation axis C15. A first part 2510 may include a second pin rail PR12 with a recess or slit shape while corresponding to the second pin P12. The second pin P12 may be positioned (or inserted) into the second pin rail PR12. When the angle between the first frame 211 and the second frame 221 is changed, the first part 2510 may be moved in the first linear direction LD1 relative to the first bracket 2551A, and the first connection part 2501 may be rotated about the fifth rotation axis C15 by the interaction between the second pin P12 and the second pin rail PR12. When the angle between the first frame 211 and the second frame 221 is changed, the position of the second pin P12 with respect to the second pin rail PR12 may vary depending on the linear motion of the first part 25810 relative to the first bracket 2551A.

According to the embodiment, the second connection part 2502 may connect the second bracket 2552A and the third part 25830. The second connection part 2502 may rotate relative to the second bracket 2552A about a sixth rotation axis C16 parallel to the third rotation axis C3. For example, the sixth rotation axis C16 may be provided by a pin that connects the second connection part 2502 and the second bracket 2552A. The fourth pin P14 may be disposed in the second connection part 2502. In various embodiments, the second connection part 2502 may be provided in a shape further including a portion corresponding to the fourth pin P14. In this case, the fourth pin P14 may be excluded. The fourth pin P14 coupled to the second connection part 2502 may be disposed and maintained to be substantially parallel to the sixth rotation axis C16 (or the third rotation axis C3). The fourth pin P14 may be substantially parallel to the sixth rotation axis C16 and positioned to be spaced apart from the sixth rotation axis C16. A third part 2530 may include a fourth pin rail PR14 with a recess or slit shape while corresponding to the fourth pin P14. The fourth pin P14 may be positioned (or inserted) into the fourth pin rail PR14. When the angle between the first frame 211 and the second frame 221 is changed, the third part 2530 may be moved in the third linear direction LD3 relative to the second bracket 2552A, and the second connection part 2502 may be rotated about the sixth rotation axis C16 by the interaction between the fourth pin P14 and the fourth pin rail PR14. When the angle between the first frame 211 and the second frame 221 is changed, the position of the fourth pin P14 with respect to the fourth pin rail PR14 may vary depending on the linear motion of the third part 25830 relative to the second bracket 2552A.

According to the embodiment, the first plate 2571 may be coupled to the first connection part 2501. The second plate 2572 may be coupled to the second connection part 2502. When the foldable electronic device 2 switches between the unfolded state and the folded state, the rotational motion of the first part 25810 about the first rotation axis C1, the linear motion between the first part 25810 and the first bracket 2551A, the rotational motion of the second part 25820 about the second rotation axis C2, the linear motion between the second part 25820 and the first bracket 2551A, the transmission of the force or motion between the first part 25810 and the second part 25820 by means of the pin-rail structure including the first pin P11 and the first pin rail PR11, and the motion of the first connection part 2501, which connects the first part 25810 and the first bracket 2551A, may be performed. When the foldable electronic device 2 switches between the unfolded state and the folded state, the rotational motion of the third part 25830 about the third rotation axis C3, the linear motion between the third part 25830 and the second bracket 2552A, the rotational motion of the fourth part 25840 about the fourth rotation axis C4, the linear motion between the fourth part 25840 and the second bracket 2552A, the transmission of the force or motion between the third part 25830 and the fourth part 25840 by means of the pin-rail structure including the third pin P13 and the third pin rail PR13, and the motion of the second connection part 2502, which connects the third part 25830 and the second bracket 2552A, may be performed.

According to the embodiment, when the foldable electronic device 2 switches from the unfolded state to the folded state, the first rotation axis C1 and the second rotation axis C2 may be positioned to be further spaced apart from the first frame 211, to which the first bracket 2551A is fixed, than in the unfolded state of the foldable electronic device 2. When the foldable electronic device 2 switches from the unfolded state to the folded state, the first part 25810 may be retracted and positioned with respect to the first bracket 2551A in a direction opposite to the direction toward the third display area ③ of the flexible display module 24. When the foldable electronic device 2 switches from the unfolded state to the folded state, the third rotation axis C3 and the fourth rotation axis C4 may be positioned to be further spaced apart from the second frame 221, to which the second bracket 2552A is fixed, than in the unfolded state of the foldable electronic device 2. When the foldable electronic device 2 switches from the unfolded state to the folded state, the third part 25830 may be retracted and positioned with respect to the second bracket 2552A in the direction opposite to the direction toward the third display area ③ of the flexible display module 24. When the foldable electronic device 2 switches from the unfolded state to the folded state, the first plate 71 and the second plate 72 may be positioned to face each other and be spaced apart from each other. When the foldable electronic device 2 switches from the unfolded state to the folded state, the first plate 2571, which is coupled to the first connection part 2501, may be disposed to be inclined with respect to the first bracket 2551A by the retraction of the first part 25810 relative to the first bracket 2551A and the motion of the first connection part 2501 connecting the first part 25810 and the first bracket 2551A so as not to interfere with the third display area ③ of the flexible display module 24 in comparison with the unfolded state of the foldable electronic device 2. When the foldable electronic device 2 switches from the unfolded state to the folded state, the second plate 2572, which is coupled to the second connection part 2502, may be disposed to be inclined with respect to the second bracket 2552A by the retraction of the third part 25830 relative to the second bracket 2552A and the motion of the second connection part 2502 connecting the third part 25830 and the second bracket 2552A so as not to interfere with the third display area ③ of the flexible display module 24 in comparison with the unfolded state of the foldable electronic device 2. When the foldable electronic device 2 switches from the unfolded state to the folded state, a space width in a first direction 2511 between the first plate 2571 and the second plate 2572 may be provided to allow the third display area ③ to be disposed in a bent shape that may reduce bending stress and/or buckling. In the folded state of the foldable electronic device 2, the space between the first plate 2571 and the second plate 2572 may be provided in a shape widened in a direction toward the hinge housing 23 (see FIG. 4). When the foldable electronic device 2 switches from the unfolded state to the folded state, the first rotation axis C1 and the second rotation axis C2 become distant from the first frame 211 on which the first display area ① is disposed, and the third rotation axis C3 and the fourth rotation axis C4 become distant from the second frame 221 on which the second display area ② is disposed, such that the center plate of the hinge module 2500 (e.g., the cover 1050 in FIG. 9 facing the third display area ③) may be positioned to be distant from the structure, in which the first frame 211 and the second frame 221 face each other, in a second direction 2512 perpendicular to the first direction 2511. When the foldable electronic device 2 switches from the unfolded state to the folded state, the center plate is positioned to be distant from the structure, in which the first frame 211 and the second frame 221 face each other, in the second direction 2512, such that the space width in the second direction 2512 may be provided to allow the third display area ③ to be disposed in a bent shape that may reduce bending stress and/or buckling.

According to the embodiment, when the foldable electronic device 2 switches from the unfolded state to the folded state, the portion of the hinge module 2500, which is connected to the hinge housing 23 (see FIG. 4), is positioned to be distant from the structure, in which the first frame 211 and the second frame 221 face each other, in the second direction 2512, such that the hinge housing 23 may be exposed to the outside through an opened gap between the first housing 21 and the second housing 22 while reducing a gap between the hinge housing 23 and the first housing 21 and a gap between the hinge housing 23 and the second housing 22, as illustrated in FIG. 3. The portion of the hinge module 2500, which is connected to the hinge housing 23 (see FIG. 4), may be a central portion including the constituent elements of the bracket connection part 53A (see FIG. 4) to which the first part 25810, the second part 25820, the third part 25830, and the fourth part 25840 are connected.

According to the embodiment, when the foldable electronic device 2 switches from the folded state to the unfolded state, the first plate 2571 and the second plate 2572 may be positioned to support the third display area ③ of the flexible display module 24 by the change in relative position between the first frame 211 and the second frame 221 and by the hinge module 2500 that operates to correspond to the change in relative position between the first frame 211 and the second frame 221. When the foldable electronic device 2 switches from the folded state to the unfolded state, the center plate (e.g., the cover 1050 in FIG. 9 facing the third display area ③) may be positioned to support the third display area ③ of the flexible display module 24 by the change in relative position between the first frame 211 and the second frame 221 and by the hinge module 2500 that operates to correspond to the change in relative position between the first frame 211 and the second frame 221. The center plate (e.g., the cover 1050 in FIG. 9 facing the third display area ③) may reduce creases of the flexible display module 24.

According to the exemplary embodiment of the present disclosure, the foldable electronic device (e.g., the foldable electronic device 2 in FIG. 2) may include the first housing (e.g., the first housing 21 in FIG. 2) and the second housing (e.g., the second housing 22 in FIG. 2). The foldable electronic device may include the hinge module (e.g., the first hinge module 5A or the second hinge module 5B in FIG. 6) that connects the first housing and the second housing. The hinge module may include the first part (e.g., the first part 810 in FIG. 7) configured to be rotatable about the first rotation axis (e.g., the first rotation axis C1 in FIG. 7). The first part may include the first pin rail (e.g., the first pin rail PR1 in FIG. 7). The hinge module may include the second part (e.g., the second part 820 in FIG. 7) configured to be rotatable about the second rotation axis. The second rotation axis may be parallel to the first rotation axis and positioned to be spaced apart from the first rotation axis. The hinge module may include the first bracket (e.g., the first bracket 51A in FIG. 7) connected to the first part and the second part. The first bracket may be fixed to the first housing. The hinge module may include the first pin (e.g., the first pin P1 in FIG. 7) disposed in the second part and provided in parallel with the second rotation axis. The first pin may be inserted into the first pin rail. The first part and the first bracket may be connected to each other and configured to be slidable in the first linear direction. The second part and the first bracket may be connected to each other and configured to be slidable in the second linear direction different from the first linear direction. When the angle between the first housing and the second housing is changed, the first part and the first bracket may mutually slide, and the second part and the first bracket may mutually slide. When the angle between the first housing and the second housing is changed, a force or motion may be transmitted between the first part and the second part by the interaction between the first pin rail and the first pin.

According to the exemplary embodiment of the present disclosure, the hinge module may include the first linear motion guide (e.g., the first linear motion guide LMG1 in FIG. 7) so that the first part and the first bracket are connected to each other and configured to be slidable in the first linear direction. The first linear motion guide may include the first linear motion guide rail (e.g., the first linear motion guide rail LMGR1 in FIG. 7) included in the first part. The first linear motion guide may include the first linear motion slider (e.g., the first linear motion slider LMSL1 in FIG. 7). The first linear motion slider may be included in the first bracket and inserted into the first linear motion guide rail.

According to the exemplary embodiment of the present disclosure, the hinge module may include the second linear motion guide (e.g., the second linear motion guide LMG2 in FIG. 7) so that the second part and the first bracket are connected to each other and configured to be slidable in the second linear direction. The second linear motion guide may include the second linear motion guide rail (e.g., the second linear motion guide rail LMGR2 in FIG. 7) included in the first bracket. The second linear motion guide may include the second linear motion slider (e.g., the second linear motion slider LMSL2 in FIG. 7). The second linear motion slider may be included in the second part and inserted into the second linear motion guide rail.

According to the exemplary embodiment of the present disclosure, the hinge module may include the second linear motion guide (e.g., the second linear motion guide LMG2 in FIG. 7) so that the second part and the first bracket are connected to each other and configured to be slidable in the second linear direction. The second linear motion guide may include the second linear motion guide rail (e.g., the second linear motion guide rail LMGR2 in FIG. 7) included in the first bracket. The second linear motion guide may include the second linear motion slider (e.g., the second linear motion slider LMSL2 in FIG. 7). The second linear motion slider may be included in the second part and inserted into the second linear motion guide rail. The first pin (e.g., the first pin P1 in FIG. 7) may be coupled to the second linear motion slider.

According to the exemplary embodiment of the present disclosure, the hinge module may include the first linear motion guide (e.g., the first linear motion guide LMG1 in FIG. 7) so that the first part and the first bracket are connected to each other and configured to be slidable in the first linear direction. The first linear motion guide may include the first linear motion guide rail (e.g., the first linear motion guide rail LMGR1 in FIG. 7) included in the first part. The first linear motion guide may include the first linear motion slider (e.g., the first linear motion slider LMSL1 in FIG. 7). The first linear motion slider may be included in the first bracket and inserted into the first linear motion guide rail. The hinge module may further include the sliding support element (e.g., the first sliding support element SS1 in FIG. 9). The sliding support element may be positioned in the first linear motion guide rail and elastically support the first linear motion slider.

According to the exemplary embodiment of the present disclosure, the foldable electronic device may further include the flexible display module (e.g., the flexible display module 24 in FIG. 7). The flexible display module may include the third display area (e.g., the third display area ③ in FIG. 7) positioned to correspond to the hinge module, the first display area (e.g., the first display area ① in FIG. 7) extending from the third display area and disposed in the first housing, and the second display area (e.g., the second display area ② in FIG. 7) extending from the third display area and disposed in the second housing.

According to the exemplary embodiment of the present disclosure, the foldable electronic device may further include the flexible display module (e.g., the flexible display module 24 in FIG. 7). The flexible display module may include the third display area (e.g., the third display area ③ in FIG. 7) positioned to correspond to the hinge module, the first display area (e.g., the first display area ① in FIG. 7) extending from the third display area and disposed in the first housing, and the second display area (e.g., the second display area ② in FIG. 7) extending from the third display area and disposed in the second housing. The hinge module may further include the first connection part (e.g., the first connection part 1001 in FIG. 7) configured to connect the first bracket and the first part. The foldable electronic device may further include the first plate (e.g., the first plate 71 in FIG. 7) coupled to the first connection part while corresponding to one side area of the third display area based on the centerline (e.g., the centerline A in FIG. 2) of the foldable electronic device. The first connection part may be connected to the first part and configured to be rotatable about the rotation axis (e.g., the fifth rotation axis C5 in FIG. 7) parallel to the first rotation axis. The first connection part may include the second pin (e.g., the second pin P2 in FIG. 7) inserted into the second pin rail (e.g., the second pin rail PR2 in FIG. 7) provided in the first bracket.

According to the exemplary embodiment of the present disclosure, the hinge module may further include the center plate (e.g., the cover 1050 in FIG. 9) positioned to correspond to the centerline of the foldable electronic device. The first plate (e.g., the first plate 71 in FIG. 9) and the center plate may define an angle of 180 degrees when the foldable electronic device switches from the folded state to the unfolded state.

According to the exemplary embodiment of the present disclosure, the foldable electronic device may further include the flexible display module (e.g., the flexible display module 24 in FIG. 24). The flexible display module may include the third display area (e.g., the third display area ③ in FIG. 24) positioned to correspond to the hinge module, the first display area (e.g., the first display area ① in FIG. 24) extending from the third display area and disposed in the first housing, and the second display area (e.g., the second display area ② in FIG. 24) extending from the third display area and disposed in the second housing. The hinge module may further include the first connection part (e.g., the first connection part 2501 in FIG. 24) configured to connect the first bracket and the first part. The foldable electronic device may further include the first plate (e.g., the first plate 2571 in FIG. 24) coupled to the first connection part while corresponding to one side area of the third display area based on the centerline (e.g., the centerline A in FIG. 2) of the foldable electronic device. The first connection part may be connected to the first bracket and configured to be rotatable about the rotation axis (e.g., the fifth rotation axis C15 in FIG. 24) parallel to the first rotation axis. The first connection part may include the second pin (e.g., the second pin P12 in FIG. 24) inserted into the second pin rail (e.g., the second pin rail PR12 in FIG. 24) provided in the first part.

According to the exemplary embodiment of the present disclosure, the first part may include the rotational motion slider (e.g., the first rotational motion slider RMSL1 in FIG. 9) positioned in the rotational motion guide rail (e.g., the first rotational motion guide rail RMGR1 in FIG. 9) included in the hinge module. The first rotation axis may be provided by the combination of the rotational motion guide rail and the rotational motion slider.

According to the exemplary embodiment of the present disclosure, the second part may be connected to the shaft (e.g., the first shaft 1110 in FIG. 9) included in the hinge module. The second rotation axis may be provided by the shaft.

According to the exemplary embodiment of the present disclosure, the hinge module may include the elastically supported cam gear (e.g., the first cam 1510 or the second cam 1520 in FIG. 9). The second part may be connected to the cam gear corresponding to the second rotation axis.

According to the exemplary embodiment of the present disclosure, the hinge module may further include the third part (e.g., the third part 830 in FIG. 7) configured to be rotatable about the third rotation axis (e.g., the third rotation axis C3 in FIG. 7). The third part may include the third pin rail (e.g., the third pin rail PR3 in FIG. 7). The hinge module may further include the fourth part (e.g., the fourth part 840 in FIG. 7) configured to be rotatable about the fourth rotation axis (e.g., the fourth rotation axis C4 in FIG. 7). The hinge module may further include the second bracket (e.g., the second bracket 52A in FIG. 7) connected to the third part and the fourth part. The second bracket may be fixed to the second housing. The hinge module may further include the third pin (e.g., the third pin P3 in FIG. 7) disposed in the fourth part and provided in parallel with the fourth rotation axis. The third pin may be inserted into the third pin rail. The third rotation axis may be positioned symmetrically with the first rotation axis with respect to the centerline (e.g., the centerline A in FIG. 2) of the foldable electronic device. The third part may be provided symmetrically with the first part with respect to the centerline of the foldable electronic device. The fourth rotation axis may be positioned symmetrically with the second rotation axis with respect to the centerline of the foldable electronic device. The fourth part may be provided symmetrically with the second part with respect to the centerline of the foldable electronic device. The third part and the second bracket may be connected to each other and configured to be slidable in the third linear direction symmetric with the first linear direction with respect to the centerline of the foldable electronic device. The fourth part and the second bracket may be connected to each other and configured to be slidable in the fourth linear direction symmetric with the second linear direction with respect to the centerline of the foldable electronic device. When the angle between the first housing and the second housing is changed, the third part and the second bracket may mutually slide, and the fourth part and the second bracket may mutually slide. When the angle between the first housing and the second housing is changed, a force or motion may be transmitted between the third part and the fourth part by the interaction between the third pin rail and the third pin.

According to the exemplary embodiment of the present disclosure, the hinge module may include the first linear motion guide (e.g., the first linear motion guide LMG1 in FIG. 7) so that the first part and the first bracket are connected to each other and configured to be slidable in the first linear direction. The hinge module may include the second linear motion guide (e.g., the second linear motion guide LMG2 in FIG. 7) so that the second part and the first bracket are connected to each other and configured to be slidable in the second linear direction. The hinge module may include the third linear motion guide (e.g., the third linear motion guide LMG3 in FIG. 7) so that the third part and the second bracket are connected to each other and configured to be slidable in the third linear direction. The hinge module may include the fourth linear motion guide (e.g., the fourth linear motion guide LMG4 in FIG. 7) so that the fourth part and the second bracket are connected to each other and configured to be slidable in the fourth linear direction. The first linear motion guide may include the first linear motion guide rail (e.g., the first linear motion guide rail LMGR1 in FIG. 7) included in the first part, and the first linear motion slider (e.g., the first linear motion slider LMSL1 in FIG. 7) included in the first bracket and inserted into the first linear motion guide rail. The second linear motion guide may include the second linear motion guide rail (e.g., the second linear motion guide rail LMGR2 in FIG. 7) included in the first bracket, and the second linear motion slider (e.g., the second linear motion slider LMSL2 in FIG. 7) included in the second part and inserted into the second linear motion guide rail. The third linear motion guide may include the third linear motion guide rail (e.g., the third linear motion guide rail LMGR3 in FIG. 7) included in the third part, and the third linear motion slider (the third linear motion slider LMSL3 in FIG. 7) included in the second bracket and inserted into the third linear motion guide rail. The fourth linear motion guide may include the fourth linear motion guide rail (e.g., the fourth linear motion guide rail LMGR4 in FIG. 7) included in the second bracket, and the fourth linear motion slider (e.g., the fourth linear motion slider LMSL4 in FIG. 7) included in the fourth part and inserted into the fourth linear motion guide rail.

According to the exemplary embodiment of the present disclosure, the hinge module may include the first sliding support element (e.g., the first sliding support element SS1 in FIG. 9) and the second sliding support element (e.g., the second sliding support element SS2 in FIG. 9). The first sliding support element may be positioned in the first linear motion guide rail and elastically support the first linear motion slider. The second sliding support element may be positioned in the third linear motion guide rail and elastically support the third linear motion slider.

According to the exemplary embodiment of the present disclosure, the foldable electronic device may further include the flexible display module (e.g., the flexible display module 24 in FIG. 7). The flexible display module may include the third display area (e.g., the third display area ③ in FIG. 7) positioned to correspond to the hinge module, the first display area (e.g., the first display area ① in FIG. 7) extending from the third display area and disposed in the first housing, and the second display area (e.g., the second display area ② in FIG. 7) extending from the third display area and disposed in the second housing. The hinge module may further include the first connection part (e.g., the first connection part 1001 in FIG. 7) configured to connect the first bracket and the first part, and the second connection part (e.g., the second connection part 1002 in FIG. 7) configured to connect the second bracket and the third part. The foldable electronic device may further include the first plate (e.g., the first plate 71 in FIG. 7) coupled to the first connection part while corresponding to one side area of the third display area based on the centerline of the foldable electronic device, and the second plate (e.g., the second plate 72 in FIG. 7) coupled to the second connection part while corresponding to the other side area of the third display area based on the centerline of the foldable electronic device. The first connection part may include the second pin (e.g., the second pin P2 in FIG. 7) connected to the first part, configured to be rotatable about the rotation axis (e.g., the fifth rotation axis C5 in FIG. 7) parallel to the first rotation axis, and inserted into the second pin rail (e.g., the second pin rail PR2 in FIG. 7) provided in the first bracket. The second connection part may include the fourth pin (e.g., the fourth pin P4 in FIG. 7) connected to the third part, configured to be rotatable about the rotation axis (e.g., the sixth rotation axis C6 in FIG. 7) parallel to the third rotation axis, and inserted into the fourth pin rail (e.g., the fourth pin rail PR4 in FIG. 7) provided in the second bracket.

According to the exemplary embodiment of the present disclosure, the foldable electronic device may further include the flexible display module (e.g., the flexible display module 24 in FIG. 24). The flexible display module may include the third display area (e.g., the third display area ③ in FIG. 24) positioned to correspond to the hinge module, the first display area (e.g., the first display area ① in FIG. 24) extending from the third display area and disposed in the first housing, and the second display area (e.g., the second display area ② in FIG. 24) extending from the third display area and disposed in the second housing. The hinge module may further include the first connection part (e.g., the first connection part 2501 in FIG. 24) configured to connect the first bracket and the first part, and the second connection part (e.g., the second connection part 2502 in FIG. 24) configured to connect the second bracket and the third part. The foldable electronic device may further include the first plate (e.g., the first plate 2571 in FIG. 24) coupled to the first connection part while corresponding to one side area of the third display area based on the centerline of the foldable electronic device, and the second plate (e.g., the second plate 2572 in FIG. 24) coupled to the second connection part while corresponding to the other side area of the third display area based on the centerline of the foldable electronic device. The first connection part may include the second pin (e.g., the second pin P12 in FIG. 24) connected to the first bracket, configured to be rotatable about the rotation axis (e.g., the fifth rotation axis C15 in FIG. 24) parallel to the first rotation axis, and inserted into the second pin rail (e.g., the second pin rail PR2 in FIG. 24) provided in the first part. The second connection part may include the fourth pin (e.g., the fourth pin P14 in FIG. 24) connected to the second bracket, configured to be rotatable about the rotation axis (e.g., the sixth rotation axis C6 in FIG. 24) parallel to the third rotation axis, and inserted into the fourth pin rail (e.g., the fourth pin rail PR4 in FIG. 24) provided in the third part.

According to the exemplary embodiment of the present disclosure, the hinge module may include the first shaft (e.g., the first shaft 1110 in FIG. 9), the second shaft (e.g., the second shaft 1120 in FIG. 9), the third circular gear (e.g., the third circular gear 1410 in FIG. 9), and the fourth circular gear (e.g., the fourth circular gear 1420 in FIG. 9). The first shaft may be connected to the second part and provide the second rotation axis. The second shaft may be connected to the fourth part and provide the fourth rotation axis. The third circular gear may engage with the first circular gear included in the first shaft. The fourth circular gear may engage with the second circular gear and the third circular gear included in the second shaft.

According to the exemplary embodiment of the present disclosure, the hinge module may include the elastically supported cam gear (e.g., the first cam 1510 and/or the second cam 1520 in FIG. 9). The first shaft and the second shaft may be connected to the cam gear.

According to the exemplary embodiment of the present disclosure, the foldable electronic device may further include the hinge housing (e.g., the hinge housing 23 in FIG. 4) coupled to the hinge module. The hinge housing may provide a part of the outer surface of the foldable electronic device by being exposed to the outside through the portion between the first housing and the second housing when the foldable electronic device switches from the unfolded state to the folded state.

The embodiments of the present disclosure disclosed in the present disclosure and illustrated in the drawings are provided as particular examples for more easily explaining the technical contents according to the present disclosure and helping understand the present disclosure, but not intended to limit the scope of the present disclosure. Accordingly, the scope of the various embodiments of the present disclosure should be interpreted as including alterations or modifications in addition to the disclosed embodiments. Additionally, it will be understood that any embodiment(s) described herein may be used in conjunction with any other embodiment(s) described herein.

## Claims

1. A foldable electronic device (2) comprising:
a flexible display module (24) disposed in a foldable housing (20) comprising first and second housings (21, 22); and
a hinge module configured to connect the first and second housings (21, 22), wherein the hinge module comprises:
a first part (810) configured to be rotatable about a first rotation axis (C1) and comprising a first pin rail (PR1);
a second part (820) configured to be rotatable about a second rotation axis (C2) parallel to the first rotation axis (C1) and spaced apart from the first rotation axis (C1);
a first bracket (51A) connected to the first and second parts (810, 820) and fixed to the first housing (21); and a first pin (P1) provided in parallel with the second rotation axis (C2), disposed in the second part (820),
and inserted into the first pin rail (PR1),
wherein the first part (810) and the first bracket (51A) are connected to each other and configured to be slidable in a first linear direction (LD1),
wherein the second part (820) and the first bracket (51A) are connected to each other and configured to be slidable in a second linear direction (LD2) different from the first linear direction (LD1),
wherein the first part (810) and the first bracket (51A) mutually slide and the second part (820) and the first bracket (51A) mutually slide when an angle between the first and second housings (21, 22) is changed, and
wherein a force or motion is transmitted between the first and second parts (810, 820) by an interaction between the first pin rail (PR1) and the first pin (P1) when the angle between the first and second housings (21, 22) is changed,
wherein the hinge module comprises:
a third part (830) configured to be rotatable about a third rotation axis (C3) and comprising a third pin rail (PR3);
a fourth part (840) configured to be rotatable about a fourth rotation axis (C4);
a second bracket (52A) connected to the third part (830) and the fourth part (840) and fixed to the second housing (22); and
a third pin (P3) provided in parallel with the fourth rotation axis (C4), disposed in the fourth part (840), and inserted into the third pin rail (PR3),
wherein the third rotation axis (C3) is positioned symmetrically with the first rotation axis (C1) with respect to a centerline (A) of the foldable electronic device (2),
wherein the third part (830) is provided symmetrically with the first part (810) with respect to the centerline (A) of the foldable electronic device (2),
wherein the fourth rotation axis (C4) is positioned symmetrically with the second rotation axis (C2) with respect to the centerline (A) of the foldable electronic device (2),
wherein the fourth part (840) is provided symmetrically with the second part (820) with respect to the centerline (A) of the foldable electronic device (2),
wherein the third part (830) and the second bracket (52A) are connected to each other and configured to be slidable in a third linear direction (LD3) symmetric with the first linear direction (LD1) with respect to the centerline (A) of the foldable electronic device (2),
wherein the fourth part (840) and the second bracket (52A) are connected to each other and configured to be slidable in a fourth linear direction (LD4) symmetric with the second linear direction (LD2) with respect to the centerline (A) of the foldable electronic device (2),
wherein the third part (830) and the second bracket (52A) mutually slide and the fourth part (840) and the second bracket (52A) mutually slide when an angle between the first and second housings (21, 22) is changed, and
wherein a force or motion is transmitted between the third part (830) and the fourth part (840) by an interaction between the third pin rail (PR3) and the third pin (P3) when the angle between the first and second housings (21, 22) is changed.

2. The foldable electronic device (2) of claim 1, wherein the hinge module comprises:
a first linear motion guide (LMG1) configured such that the first part (810) and the first bracket (51A) are connected to each other and configured to be slidable in the first linear direction (LD1); and
a second linear motion guide (LMG2) configured such that the second part (820) and the first bracket (51A) are connected to each other and configured to be slidable in the second linear direction (LD2),
wherein the first linear motion guide (LMG1) comprises:
a first linear motion guide rail (LMGR1) included in the first part (810); and
a first linear motion slider (LMSL1) included in the first bracket (51A) and inserted into the first linear motion guide rail (LMGR1), and
wherein the first pin (P1)is coupled to a second linear motion slider (LMSL2).

3. The foldable electronic device (2) of claim 1, wherein the hinge module comprises a first linear motion guide (LMG1) configured such that the first part (810) and the first bracket (51A) are connected to each other and configured to be slidable in the first linear direction (LD1),
wherein the first linear motion guide (LMG1) comprises:
a first linear motion guide rail (LMGR1) included in the first part (810); and
a first linear motion slider (LMSL1) included in the first bracket (51A) and inserted into the first linear motion guide rail (LMGR1) , and
wherein the hinge module comprises a sliding support element positioned in the first linear motion guide rail and (LMGR1) configured to elastically support the first linear motion slider (LMSL1).

4. The foldable electronic device (2) of claim 1,
wherein the flexible display module (24) comprises:
a third display area positioned to correspond to the hinge module;
a first display area extending from the third display area and disposed in the first housing (21); and
a second display area extending from the third display area and disposed in the second housing (22).

5. The foldable electronic device (2) of claim 1,
wherein the flexible display module (24) comprises:
a third display area positioned to correspond to the hinge module;
a first display area extending from the third display area and disposed in the first housing (21); and
a second display area extending from the third display area and disposed in the second housing (22),
wherein the hinge module comprises a first connection part (1001) configured to connect the first bracket (51A) and the first part,
wherein the foldable electronic device (2) comprises a first plate (71) coupled to the first connection part while corresponding to one side area of the third display area based on a centerline (A) of the foldable electronic device (2), and
wherein the first connection part (1001) comprises a second pin (P2) connected to the first part (810), configured to be rotatable about a rotation axis parallel to the first rotation axis (C1), and inserted into a second pin rail (PR2) provided in the first bracket (51A).

6. The foldable electronic device (2) of claim 1,
wherein the flexible display module (24) comprises:
a third display area positioned to correspond to the hinge module;
a first display area extending from the third display area and disposed in the first housing (21); and
a second display area extending from the third display area and disposed in the second housing (22),
wherein the hinge module comprises a first connection part (1001) configured to connect the first bracket (51A) and the first part (810),
wherein the foldable electronic device (2) comprises a first plate (71) coupled to the first connection part (1001) while corresponding to one side area of the third display area based on a centerline (A) of the foldable electronic device (2), and
wherein the first connection part (1001) comprises a second pin (P2) connected to the first bracket (51A), configured to be rotatable about a rotation axis parallel to the first rotation axis (C1), and inserted into a second pin rail (PR2) provided in the first part (810).

7. The foldable electronic device (2) of claim 1, wherein the first part (810) comprises a rotational motion slider (RMSL1) positioned in a rotational motion guide rail (RMGR1) included in the hinge module, and
wherein the first rotation axis (C1) is provided by a combination of the rotational motion guide rail (RMGR1) and the rotational motion slider (RMSL1).

8. The foldable electronic device (2) of claim 1, wherein the second part (820) is connected to a shaft included in the hinge module, and the second rotation axis (C2) is provided by the shaft.

9. The foldable electronic device (2) of claim 1, wherein the hinge module comprises an elastically supported cam gear, and the second part (820) is connected to the cam gear corresponding to the second rotation axis (C2).

10. The foldable electronic device (2) of claim 1, wherein the hinge module comprises:
a first linear motion guide (LMG1) configured such that the first part (810) and the first bracket (51A) are connected to each other and configured to be slidable in the first linear direction (LD1);
a second linear motion guide (LMG2) configured such that the second part(820) and the first bracket (51A) are connected to each other and configured to be slidable in the second linear direction (LD2);
a third linear motion guide (LMG3) configured such that the third part (830) and the second bracket (52A) are connected to each other and configured to be slidable in the third linear direction (LD3); and
a fourth linear motion guide (LMG4) configured such that the fourth part (840) and the second bracket (52A) are connected to each other and configured to be slidable in the fourth linear direction (LD4),
wherein the first linear motion guide (LMG1) comprises:
a first linear motion guide rail (LMGR1) included in the first part (810); and
a first linear motion slider (LMSL1) included in the first bracket (51A) and inserted into the first linear motion guide rail (LMGR1),
wherein the second linear motion guide (LMG2) comprises:
a second linear motion guide rail (LMGR2) included in the first bracket (51A); and
a second linear motion slider (LMSL2) included in the second part (820) and inserted into the second linear motion guide rail (LMGR2),
wherein the third linear motion guide (LMG3) comprises:
a third linear motion guide rail (LMGR3) included in the third part (830); and
a third linear motion slider (LMSL3) included in the second bracket (52A) and inserted into the third linear motion guide rail (LMGR3),
wherein the fourth linear motion guide (LMG4) comprises:
a fourth linear motion guide rail (LMGR4) included in the second bracket (52A); and
a fourth linear motion slider (LMSL4) included in the fourth part (840) and inserted into the fourth linear motion guide rail (LMGR4),
wherein the first pin (P1) is coupled to the second linear motion slider
(LMSL2), and wherein the third pin (P3) is coupled to the fourth linear
motion slider(LMSL4).

11. The foldable electronic device (2) of claim 10, wherein the hinge module comprises:
a first sliding support element (SS1) positioned in the first linear motion guide rail (L M G R 1) and configured to elastically support the first linear motion slider (LMSL1); and
a second sliding support element (SS2) positioned in the third linear motion guide rail (LMGR3) and configured to elastically support the third linear motion slider (LMSL3).

12. The foldable electronic device (2) of claim 1,
wherein the flexible display module (24) comprises:
a third display area positioned to correspond to the hinge module;
a first display area extending from the third display area and disposed in the first housing (21); and
a second display area extending from the third display area and disposed in the second housing (22),
wherein the hinge module comprises:
a first connection part (1001) configured to connect the first bracket (51A) and the first part (810); and
a second connection part (1002) configured to connect the second bracket (52A) and
the third part (830), wherein the foldable electronic device (2) comprises:
a first plate (71) coupled to the first connection part (1001) while corresponding to one side area of the third display area based on the centerline (A) of the foldable electronic device (2); and
a second plate (72) coupled to the second connection part (1002) while corresponding to the other side area of the third display area based on the centerline (A) of the foldable electronic device (2),
wherein the first connection part (1001) comprises a second pin (P2) connected to the first part (810), configured to be rotatable about a rotation axis parallel to the first rotation axis (C1), and inserted into a second pin rail (PR2) provided in the first bracket (51A), and
wherein the second connection part (1002)comprises a fourth pin (P4) connected to the third part (830), configured to be rotatable about a rotation axis parallel to the third rotation axis (C3), and inserted into a fourth pin rail (PR4) provided in the second bracket (52A).

13. The foldable electronic device (2) of claim 1,
wherein the flexible display module (24) comprises:
a third display area positioned to correspond to the hinge module;
a first display area extending from the third display area and disposed in the first housing (21); and
a second display area extending from the third display area and disposed in the second housing (22),
wherein the hinge module comprises:
a first connection part (1001) configured to connect the first bracket (51A) and the first part (810); and
a second connection part (1002) configured to connect the second bracket (52A) and the third part (830),
wherein the foldable electronic device (2) comprises:
a first plate (71) coupled to the first connection part (1001) while corresponding to one side area of the third display area based on the centerline (A) of the foldable electronic device (2); and
a second plate (72) coupled to the second connection part (1002) while corresponding to the other side area of the third display area based on the centerline (A) of the foldable electronic device (2),
wherein the first connection part (1001) comprises a second pin (P2) connected to the first bracket (51A), configured to be rotatable about a rotation axis (C5) parallel to the first rotation axis (C1), and inserted into a second pin rail (PR2) provided in the first part (810), and
wherein the second connection part (1002) comprises a fourth pin (P4) connected to the second bracket (52A), configured to be rotatable about a rotation axis (C6) parallel to the third rotation axis (C3), and inserted into a fourth pin rail (PR4) provided in the third part (830).

14. The foldable electronic device (2) of claim 1, wherein the hinge module comprises:
a first shaft (1110) connected to the second part (820) and configured to provide the second rotation axis (C2);
a second shaft (1120) connected to the fourth part (840) and configured to provide the fourth rotation axis (C4);
a third circular gear (1410) configured to engage with a first circular gear (1111) included in the first shaft (1110);
a fourth circular gear (1420) configured to engage with a second circular gear (1121) and the third circular gear (1410) included in the second shaft (1120); and
an elastically supported cam gear, and
wherein the first shaft (1110) and the second shaft (1120) are connected to the cam gear.

## Patentansprüche

1. Faltbare elektronische Vorrichtung (2), umfassend:
ein flexibles Anzeigemodul (24), das in einem faltbaren Gehäuse (20) angeordnet ist, das ein erstes und zweites Gehäuse (21, 22) umfasst; und
ein Scharniermodul, das dazu konfiguriert ist, das erste und zweite Gehäuse (21, 22) zu verbinden, wobei das Scharniermodul Folgendes umfasst:
einen ersten Teil (810), der dazu konfiguriert ist, um eine erste Drehachse (C1) drehbar zu sein, und eine erste Stiftleiste (PR1) umfasst;
einen zweiten Teil (820), der dazu konfiguriert ist, um eine zweite Drehachse (C2) drehbar zu sein, die parallel zu der ersten Drehachse (C1) ist und von der ersten Drehachse (C1) beabstandet ist;
eine erste Halterung (51A), die mit dem ersten und zweiten Teil (810, 820) verbunden und an dem ersten Gehäuse (21) befestigt ist; und einen ersten Stift (P1), der parallel zu der zweiten Drehachse (C2) bereitgestellt ist und in dem zweiten Teil (820) angeordnet
und in die erste Stiftleiste (PR1) eingesetzt ist,
wobei der erste Teil (810) und die erste Halterung (51A) miteinander verbunden und dazu konfiguriert sind, in einer ersten Linearrichtung (LD1) verschiebbar zu sein,
wobei der zweite Teil (820) und die erste Halterung (51A) miteinander verbunden und dazu konfiguriert sind, in einer zweiten Linearrichtung (LD2), die sich von der ersten Linearrichtung (LD1) unterscheidet, verschiebbar zu sein,
wobei der erste Teil (810) und die erste Halterung (51A) sich zueinander verschieben und der zweite Teil (820) und die erste Halterung (51A) sich zueinander verschieben, wenn ein Winkel zwischen dem ersten und zweiten Gehäuse (21, 22) geändert wird, und
wobei eine Kraft oder Bewegung zwischen dem ersten und zweiten Teil (810, 820) durch eine Wechselwirkung zwischen der ersten Stiftleiste (PR1) und dem ersten Stift (P1) übertragen wird, wenn der Winkel zwischen dem ersten und zweiten Gehäuse (21, 22) geändert wird,
wobei das Scharniermodul Folgendes umfasst:
einen dritten Teil (830), der dazu konfiguriert ist, um eine dritte Drehachse (C3) drehbar zu sein, und eine dritte Stiftleiste (PR3) umfasst;
einen vierten Teil (840), der dazu konfiguriert ist, um eine vierte Drehachse (C4) drehbar zu sein;
eine zweite Halterung (52A), die mit dem dritten Teil (830) und dem vierten Teil (840) verbunden und an dem zweiten Gehäuse (22) befestigt ist; und
einen dritten Stift (P3), der parallel zu der vierten Drehachse (C4) bereitgestellt, in dem vierten Teil (840) angeordnet und in die dritte Stiftleiste (PR3) eingesetzt ist,
wobei die dritte Drehachse (C3) in Bezug auf eine Mittellinie (A) der faltbaren elektronischen Vorrichtung (2) symmetrisch zu der ersten Drehachse (C1) positioniert ist,
wobei der dritte Teil (830) in Bezug auf die Mittellinie (A) der faltbaren elektronischen Vorrichtung (2) symmetrisch zu dem ersten Teil (810) bereitgestellt ist,
wobei die vierte Drehachse (C4) in Bezug auf die Mittellinie (A) der faltbaren elektronischen Vorrichtung (2) symmetrisch zu der zweiten Drehachse (C2) positioniert ist,
wobei der vierte Teil (840) in Bezug auf die Mittellinie (A) der faltbaren elektronischen Vorrichtung (2) symmetrisch zu dem zweiten Teil (820) bereitgestellt ist,
wobei der dritte Teil (830) und die zweite Halterung (52A) miteinander verbunden und dazu konfiguriert sind, in einer dritten Linearrichtung (LD3) in Bezug auf die Mittellinie (A) der faltbaren elektronischen Vorrichtung (2) symmetrisch zu der ersten Linearrichtung (LD1) verschiebbar zu sein,
wobei der vierte Teil (840) und die zweite Halterung (52A) miteinander verbunden und dazu konfiguriert sind, in einer vierten Linearrichtung (LD4) in Bezug auf die Mittellinie (A) der faltbaren elektronischen Vorrichtung (2) symmetrisch zu der zweiten Linearrichtung (LD2) verschiebbar zu sein,
wobei der dritte Teil (830) und die zweite Halterung (52A) sich zueinander verschieben und der vierte Teil (840) und die zweite Halterung (52A) sich zueinander verschieben, wenn ein Winkel zwischen dem ersten und zweiten Gehäuse (21, 22) geändert wird, und
wobei eine Kraft oder Bewegung zwischen dem dritten Teil (830) und dem vierten Teil (840) durch eine Wechselwirkung zwischen der dritten Stiftleiste (PR3) und dem dritten Stift (P3) übertragen wird, wenn der Winkel zwischen dem ersten und zweiten Gehäuse (21, 22) geändert wird.

2. Faltbare elektronische Vorrichtung (2) nach Anspruch 1, wobei das Scharniermodul Folgendes umfasst:
eine erste Linearbewegungsführung (LMG1), die derart konfiguriert ist, dass der erste Teil (810) und die erste Halterung (51A) miteinander verbunden und dazu konfiguriert sind, in der ersten Linearrichtung (LD1) verschiebbar zu sein; und
eine zweite Linearbewegungsführung (LMG2), die derart konfiguriert ist, dass der zweite Teil (820) und die erste Halterung (51A) miteinander verbunden und dazu konfiguriert sind, in der zweiten Linearrichtung (LD2) verschiebbar zu sein,
wobei die erste Linearbewegungsführung (LMG1) Folgendes umfasst:
eine erste Linearbewegungsführungsleiste (LMGR1), die in dem ersten Teil (810) beinhaltet ist; und
einen ersten Linearbewegungsschieber (LMSL1), der in der ersten Halterung (51A) beinhaltet und in die erste Linearbewegungsführungsleiste (LMGR1) eingeführt ist, und
wobei der erste Stift (P1) an einen zweiten Linearbewegungsschieber (LMSL2) gekoppelt ist.

3. Faltbare elektronische Vorrichtung (2) nach Anspruch 1, wobei das Scharniermodul eine erste Linearbewegungsführung (LMG1) umfasst, die derart konfiguriert ist, dass der erste Teil (810) und die erste Halterung (51A) miteinander verbunden und dazu konfiguriert sind, in der ersten Linearrichtung (LD1) verschiebbar zu sein,
wobei die erste Linearbewegungsführung (LMG1) Folgendes umfasst:
eine erste Linearbewegungsführungsleiste (LMGR1), die in dem ersten Teil (810) beinhaltet ist; und
einen ersten Linearbewegungsschieber (LMSL1), der in der ersten Halterung (51A) beinhaltet und in die erste Linearbewegungsführungsleiste (LMGR1) eingeführt ist, und
wobei das Scharniermodul ein Schiebestützelement umfasst, das in der ersten Linearbewegungsführungsleiste (LMGR1) positioniert und dazu konfiguriert ist, den ersten Linearbewegungsgleiter (LMSL1) elastisch zu stützen.

4. Faltbare elektronische Vorrichtung (2) nach Anspruch 1,
wobei das flexible Anzeigemodul (24) Folgendes umfasst:
einen dritten Anzeigebereich, der so positioniert ist, dass er dem Scharniermodul entspricht;
einen ersten Anzeigebereich, der sich von dem dritten Anzeigebereich erstreckt und in dem ersten Gehäuse (21) angeordnet ist; und
einen zweiten Anzeigebereich, der sich von dem dritten Anzeigebereich erstreckt und in dem zweiten Gehäuse (22) angeordnet ist.

5. Faltbare elektronische Vorrichtung (2) nach Anspruch 1,
wobei das flexible Anzeigemodul (24) Folgendes umfasst:
einen dritten Anzeigebereich, der so positioniert ist, dass er dem Scharniermodul entspricht;
einen ersten Anzeigebereich, der sich von dem dritten Anzeigebereich erstreckt und in dem ersten Gehäuse (21) angeordnet ist; und
einen zweiten Anzeigebereich, der sich von dem dritten Anzeigebereich erstreckt und in dem zweiten Gehäuse (22) angeordnet ist,
wobei das Scharniermodul einen ersten Verbindungsteil (1001) umfasst, der dazu konfiguriert ist, die erste Halterung (51A) und den ersten Teil zu verbinden,
wobei die faltbare elektronische Vorrichtung (2) eine erste Platte (71) umfasst, die an den ersten Verbindungsteil gekoppelt ist, während sie basierend auf einer Mittellinie (A) der faltbaren elektronischen Vorrichtung (2) einem Seitenbereich des dritten Anzeigebereichs entspricht, und
wobei der erste Verbindungsteil (1001) einen zweiten Stift (P2) umfasst, der mit dem ersten Teil (810) verbunden ist, dazu konfiguriert ist, um eine Drehachse parallel zu der ersten Drehachse (C1) drehbar zu sein, und in eine zweite Stiftleiste (PR2) eingesetzt ist, die in der ersten Halterung (51A) bereitgestellt ist.

6. Faltbare elektronische Vorrichtung (2) nach Anspruch 1,
wobei das flexible Anzeigemodul (24) Folgendes umfasst:
einen dritten Anzeigebereich, der so positioniert ist, dass er dem Scharniermodul entspricht;
einen ersten Anzeigebereich, der sich von dem dritten Anzeigebereich erstreckt und in dem ersten Gehäuse (21) angeordnet ist; und
einen zweiten Anzeigebereich, der sich von dem dritten Anzeigebereich erstreckt und in dem zweiten Gehäuse (22) angeordnet ist,
wobei das Scharniermodul einen ersten Verbindungsteil (1001) umfasst, der dazu konfiguriert ist, die erste Halterung (51A) und den ersten Teil (810) zu verbinden,
wobei die faltbare elektronische Vorrichtung (2) eine erste Platte (71) umfasst, die an den ersten Verbindungsteil (1001) gekoppelt ist, während sie basierend auf einer Mittellinie (A) der faltbaren elektronischen Vorrichtung (2) einem Seitenbereich des dritten Anzeigebereichs entspricht, und
wobei der erste Verbindungsteil (1001) einen zweiten Stift (P2) umfasst, der mit der ersten Halterung (51A) verbunden ist, dazu konfiguriert ist, um eine Drehachse (C1) parallel zu der ersten Drehachse drehbar zu sein, und in eine zweite Stiftleiste (PR2) eingesetzt ist, die in dem ersten Teil (810) bereitgestellt ist.

7. Faltbare elektronische Vorrichtung (2) nach Anspruch 1, wobei der erste Teil (810) einen Drehbewegungsschieber (RMSL1) umfasst, der in einer Drehbewegungsführungsleiste (RMGR1) positioniert ist, die in dem Scharniermodul beinhaltet ist, und
wobei die erste Drehachse (C1) durch eine Kombination der Drehbewegungsführungsleiste (RMGR1) und des Drehbewegungsschiebers (RMSL1) bereitgestellt ist.

8. Faltbare elektronische Vorrichtung (2) nach Anspruch 1, wobei der zweite Teil (820) mit einer Welle verbunden ist, die in dem Scharniermodul beinhaltet ist, und die zweite Drehachse (C2) durch die Welle bereitgestellt ist.

9. Faltbare elektronische Vorrichtung (2) nach Anspruch 1, wobei das Scharniermodul ein elastisch gestütztes Nockenzahnrad umfasst und der zweite Teil (820) entsprechend der zweiten Drehachse (C2) mit dem Nockenzahnrad verbunden ist.

10. Faltbare elektronische Vorrichtung (2) nach Anspruch 1, wobei das Scharniermodul Folgendes umfasst:
eine erste Linearbewegungsführung (LMG1), die derart konfiguriert ist, dass der erste Teil (810) und die erste Halterung (51A) miteinander verbunden und dazu konfiguriert sind, in der ersten Linearrichtung (LD1) verschiebbar zu sein;
eine zweite Linearbewegungsführung (LMG2), die derart konfiguriert ist, dass der zweite Teil (820) und die erste Halterung (51A) miteinander verbunden und dazu konfiguriert sind, in der zweiten Linearrichtung (LD2) verschiebbar zu sein;
eine dritte Linearbewegungsführung (LMG3), die derart konfiguriert ist, dass der dritte Teil (830) und die zweite Halterung (52A) miteinander verbunden und dazu konfiguriert sind, in der dritten Linearrichtung (LD3) verschiebbar zu sein; und
eine vierte Linearbewegungsführung (LMG4), die derart konfiguriert ist, dass der vierte Teil (840) und die zweite Halterung (52A) miteinander verbunden und dazu konfiguriert sind, in der vierten Linearrichtung (LD4) verschiebbar zu sein,
wobei die erste Linearbewegungsführung (LMG1) Folgendes umfasst:
eine erste Linearbewegungsführungsleiste (LMGR1), die in dem ersten Teil (810) beinhaltet ist; und
einen ersten Linearbewegungsschieber (LMSL1), der in der ersten Halterung (51A) beinhaltet und in die erste Linearbewegungsführungsleiste (LMGR1) eingeführt ist,
wobei die zweite Linearbewegungsführung (LMG2) Folgendes umfasst:
eine zweite Linearbewegungsführungsleiste (LMGR2), die in der ersten Halterung (51A) beinhaltet ist; und
einen zweiten Linearbewegungsschieber (LMSL2), der in dem zweiten Teil (820) beinhaltet und in die zweite Linearbewegungsführungsleiste (LMGR2) eingeführt ist,
wobei die dritte Linearbewegungsführung (LMG3) Folgendes umfasst:
eine dritte Linearbewegungsführungsleiste (LMGR3), die in dem dritten Teil (830) beinhaltet ist; und
einen dritten Linearbewegungsschieber (LMSL3), der in der zweiten Halterung (52A) beinhaltet und in die dritte Linearbewegungsführungsleiste (LMGR3) eingesetzt ist,
wobei die vierte Linearbewegungsführung (LMG4) Folgendes umfasst:
eine vierte Linearbewegungsführungsleiste (LMGR4), die in der zweiten Halterung (52A) beinhaltet ist; und
einen vierten Linearbewegungsschieber (LMSL4), der in dem vierten Teil (840) beinhaltet und in die vierte Linearbewegungsführungsleiste (LMGR4) eingesetzt ist,
wobei der erste Stift (P1) an den zweiten Linearbewegungsschieber (LMSL2) gekoppelt ist und wobei der dritte Stift (P3) an den vierten Linearbewegungsschieber (LMSL4) gekoppelt ist.

11. Faltbare elektronische Vorrichtung (2) nach Anspruch 10, wobei das Scharniermodul Folgendes umfasst:
ein erstes Gleitstützelement (SS1), das in der ersten Linearbewegungsführungsleiste (LMGR1) positioniert und dazu konfiguriert ist, den ersten Linearbewegungsschieber (LMSL1) elastisch zu stützen; und
ein zweites Gleitstützelement (SS2), das in der dritten Linearbewegungsführungsleiste (LMGR3) positioniert und dazu konfiguriert ist, den dritten Linearbewegungsschieber (LMSL3) elastisch zu stützen.

12. Faltbare elektronische Vorrichtung (2) nach Anspruch 1,
wobei das flexible Anzeigemodul (24) Folgendes umfasst:
einen dritten Anzeigebereich, der so positioniert ist, dass er dem Scharniermodul entspricht;
einen ersten Anzeigebereich, der sich von dem dritten Anzeigebereich erstreckt und in dem ersten Gehäuse (21) angeordnet ist; und
einen zweiten Anzeigebereich, der sich von dem dritten Anzeigebereich erstreckt und in dem zweiten Gehäuse (22) angeordnet ist,
wobei das Scharniermodul Folgendes umfasst:
einen ersten Verbindungsteil (1001), der dazu konfiguriert ist, die erste Halterung (51A) und den ersten Teil (810) zu verbinden; und
einen zweiten Verbindungsteil (1002), der dazu konfiguriert ist, die zweite Halterung (52A) und den dritten Teil (830) zu verbinden, wobei die faltbare elektronische Vorrichtung (2) Folgendes umfasst:
eine erste Platte (71), die an den ersten Verbindungsteil (1001) gekoppelt ist, während sie basierend auf der Mittellinie (A) der faltbaren elektronischen Vorrichtung (2) einem Seitenbereich des dritten Anzeigebereichs entspricht; und
eine zweite Platte (72), die an den zweiten Verbindungsteil (1002) gekoppelt ist, während sie basierend auf der Mittellinie (A) der faltbaren elektronischen Vorrichtung (2) dem anderen Seitenbereich des dritten Anzeigebereichs entspricht,
wobei der erste Verbindungsteil (1001) einen zweiten Stift (P2) umfasst, der mit dem ersten Teil (810) verbunden ist, dazu konfiguriert ist, um eine Drehachse parallel zu der ersten Drehachse (C1) drehbar zu sein, und in eine zweite Stiftleiste (PR2) eingesetzt ist, die in der ersten Halterung (51A) bereitgestellt ist, und
wobei der zweite Verbindungsteil (1002) einen vierten Stift (P4) umfasst, der mit dem dritten Teil (830) verbunden ist, dazu konfiguriert ist, um eine Drehachse parallel zu der dritten Drehachse (C3) drehbar zu sein, und in eine vierte Stiftleiste (PR4) eingesetzt ist, die in der zweiten Halterung (52A) bereitgestellt ist.

13. Faltbare elektronische Vorrichtung (2) nach Anspruch 1,
wobei das flexible Anzeigemodul (24) Folgendes umfasst:
einen dritten Anzeigebereich, der so positioniert ist, dass er dem Scharniermodul entspricht;
einen ersten Anzeigebereich, der sich von dem dritten Anzeigebereich erstreckt und in dem ersten Gehäuse (21) angeordnet ist; und
einen zweiten Anzeigebereich, der sich von dem dritten Anzeigebereich erstreckt und in dem zweiten Gehäuse (22) angeordnet ist,
wobei das Scharniermodul Folgendes umfasst:
einen ersten Verbindungsteil (1001), der dazu konfiguriert ist, die erste Halterung (51A) und den ersten Teil (810) zu verbinden; und
einen zweiten Verbindungsteil (1002), der dazu konfiguriert ist, die zweite Halterung (52A) und den dritten Teil (830) zu verbinden,
wobei die faltbare elektronische Vorrichtung (2) Folgendes umfasst:
eine erste Platte (71), die an den ersten Verbindungsteil (1001) gekoppelt ist, während sie basierend auf der Mittellinie (A) der faltbaren elektronischen Vorrichtung (2) einem Seitenbereich des dritten Anzeigebereichs entspricht; und
eine zweite Platte (72), die an den zweiten Verbindungsteil (1002) gekoppelt ist, während sie basierend auf der Mittellinie (A) der faltbaren elektronischen Vorrichtung (2) dem anderen Seitenbereich des dritten Anzeigebereichs entspricht,
wobei der erste Verbindungsteil (1001) einen zweiten Stift (P2) umfasst, der mit der ersten Halterung (51A) verbunden ist, dazu konfiguriert ist, um eine Drehachse (C5) parallel zu der ersten Drehachse (C1) drehbar zu sein, und in eine zweite Stiftleiste (PR2) eingesetzt ist, die in dem ersten Teil (810) bereitgestellt ist, und
wobei der zweite Verbindungsteil (1002) einen vierten Stift (P4) umfasst, der mit der zweiten Halterung (52A) verbunden ist, dazu konfiguriert ist, um eine Drehachse (C6) parallel zu der dritten Drehachse (C3) drehbar zu sein, und in eine vierte Stiftleiste (PR4) eingesetzt ist, die in dem dritten Teil (830) bereitgestellt ist.

14. Faltbare elektronische Vorrichtung (2) nach Anspruch 1, wobei das Scharniermodul Folgendes umfasst:
eine erste Welle (1110), die mit dem zweiten Teil (820) verbunden und dazu konfiguriert ist, die zweite Drehachse (C2) bereitzustellen;
eine zweite Welle (1120), die mit dem vierten Teil (840) verbunden und dazu konfiguriert ist, die vierte Drehachse (C4) bereitzustellen;
ein drittes kreisförmiges Zahnrad (1410), das dazu konfiguriert ist, mit einem ersten kreisförmigen Zahnrad (1111), das in der ersten Welle (1110) beinhaltet ist, in Eingriff zu treten;
ein viertes kreisförmiges Zahnrad (1420), das dazu konfiguriert ist, mit einem zweiten kreisförmigen Zahnrad (1121) und dem dritten kreisförmigen Zahnrad (1410), das in der zweiten Welle (1120) beinhaltet ist, in Eingriff zu treten; und
ein elastisch gestütztes Nockenzahnrad und
wobei die erste Welle (1110) und die zweite Welle (1120) mit dem Nockenzahnrad verbunden sind.

## Revendications

1. Dispositif électronique pliable (2) comprenant :
un module d'affichage souple (24) disposé dans un boîtier pliable (20) comprenant des premier et second boîtiers (21, 22) ; et
un module de charnière conçu pour raccorder les premier et second boîtiers (21, 22), ledit module de charnière comprenant :
une première pièce (810) conçue pour pouvoir tourner autour d'un premier axe de rotation (C1) et comprenant une première glissière de broche (PR1) ;
une deuxième pièce (820) conçue pour pouvoir tourner autour d'un deuxième axe de rotation (C2) parallèle au premier axe de rotation (C1) et espacé du premier axe de rotation (C1) ;
un premier support (51A) relié aux première et deuxième pièces (810, 820) et fixé au premier boîtier (21) ; et une première broche (P1) disposée en parallèle avec le deuxième axe de rotation (C2), disposée dans la deuxième pièce (820),
et insérée dans la première glissière de broche (PR1),
ladite première pièce (810) et ledit premier support (51A) étant reliés l'un à l'autre et conçus pour être coulissants suivant une première direction linéaire (LD1),
ladite deuxième pièce (820) et ledit premier support (51A) étant reliés l'un à l'autre et conçus pour être coulissants suivant une deuxième direction linéaire (LD2) différente de la première direction linéaire (LD1),
ladite première pièce (810) et ledit premier support (51A) coulissant mutuellement et ladite deuxième pièce (820) et ledit premier support (51A) coulissant mutuellement lorsque l'angle entre les premier et second boîtiers (21, 22) est modifié, et
une force ou un mouvement étant transmis entre les première et deuxième pièces (810, 820) par une interaction entre la première glissière de broche (PR1) et la première broche (P1) lorsque l'angle entre les premier et second boîtiers (21, 22) est modifié,
ledit module de charnière comprenant :
une troisième pièce (830) conçue pour pouvoir tourner autour d'un troisième axe de rotation (C3) et comprenant un troisième glissière de broche (PR3) ;
une quatrième pièce (840) conçue pour pouvoir tourner autour d'un quatrième axe de rotation (C4) ;
un second support (52A) relié à la troisième pièce (830) et à la quatrième pièce (840) et fixé au second boîtier (22) ; et
une troisième broche (P3) disposée en parallèle avec le quatrième axe de rotation (C4), disposée dans la quatrième pièce (840), et insérée dans la troisième glissière de broche (PR3),
ledit troisième axe de rotation (C3) étant positionné symétriquement avec le premier axe de rotation (C1) par rapport à la ligne centrale (A) du dispositif électronique pliable (2),
ladite troisième pièce (830) étant disposée symétriquement avec la première pièce (810) par rapport à la ligne centrale (A) du dispositif électronique pliable (2),
ledit quatrième axe de rotation (C4) étant positionnée symétriquement par rapport au deuxième axe de rotation (C2) par rapport à la ligne centrale (A) du dispositif électronique pliable (2),
ladite quatrième pièce (840) étant disposée symétriquement par rapport à la deuxième pièce (820) par rapport à la ligne centrale (A) du dispositif électronique pliable (2),
ladite troisième pièce (830) et ledit second support (52A) étant reliés l'un à l'autre et conçus pour être coulissants suivant une troisième direction linéaire (LD3) symétrique avec la première direction linéaire (LD1) par rapport à la ligne centrale (A) du dispositif électronique pliable (2),
ladite quatrième pièce (840) et ledit second support (52A) étant reliés l'un à l'autre et conçus pour être coulissants suivant une quatrième direction linéaire (LD4) symétrique avec la deuxième direction linéaire (LD2) par rapport à la ligne centrale (A) du dispositif électronique pliable (2),
ladite troisième pièce (830) et ledit second support (52A) coulissant mutuellement et ladite quatrième pièce (840) et ledit second support (52A) coulissant mutuellement lorsque l'angle entre les premier et second boîtiers (21, 22) est modifié, et
une force ou un mouvement étant transmis entre la troisième pièce (830) et la quatrième pièce (840) par une interaction entre la troisième glissière de broche (PR3) et la troisième broche (P3) lorsque l'angle entre les premier et second boîtiers (21, 22) est modifié.

2. Dispositif électronique pliable (2) selon la revendication 1, ledit module de charnière comprenant :
un premier guide de mouvement linéaire (LMG1) conçu de sorte que la première pièce (810) et le premier support (51A) soient reliés l'un à l'autre et conçus pour être coulissants suivant la première direction linéaire (LD1) ; et
un deuxième guide de mouvement linéaire (LMG2) conçu de sorte que la deuxième pièce (820) et le premier support (51A) soient reliés l'un à l'autre et conçus pour être coulissants suivant la seconde direction linéaire (LD2),
ledit premier guide de mouvement linéaire (LMG1) comprenant :
une premier glissière de guidage de mouvement linéaire (LMGR1) comprise dans la première pièce (810) ; et
un premier coulisseau à mouvement linéaire (LMSL1) compris dans le premier support (51A) et inséré dans la première glissière de guidage de mouvement linéaire (LMGR1), et
ladite première broche (P1) étant couplée à un deuxième coulisseau à mouvement linéaire (LMSL2).

3. Dispositif électronique pliable (2) selon la revendication 1, ledit module de charnière comprenant un premier guide de mouvement linéaire (LMG1) conçu de sorte que la première pièce (810) et le premier support (51A) soient reliés l'un à l'autre et conçus pour être coulissants suivant la première direction linéaire (LD1),
ledit premier guide de mouvement linéaire (LMG1) comprenant :
une premier glissière de guidage de mouvement linéaire (LMGR1) comprise dans la première pièce (810) ; et
un premier coulisseau à mouvement linéaire (LMSL1) compris dans le premier support (51A) et inséré dans la première glissière de guidage de mouvement linéaire (LMGR1), et
ledit module de charnière comprenant un élément de support coulissant positionné dans la première glissière de guidage de mouvement linéaire (LMGR1) et conçu pour supporter élastiquement le premier coulisseau à mouvement linéaire (LMSL1).

4. Dispositif électronique pliable (2) selon la revendication 1,
ledit module d'affichage souple (24) comprenant :
une troisième zone d'affichage positionnée de manière à correspondre au module de charnière ;
une première zone d'affichage s'étendant à partir de la troisième zone d'affichage et disposée dans le premier boîtier (21) ; et
une deuxième zone d'affichage s'étendant à partir de la troisième zone d'affichage et disposée dans le second boîtier (22).

5. Dispositif électronique pliable (2) selon la revendication 1,
ledit module d'affichage souple (24) comprenant :
une troisième zone d'affichage positionnée de manière à correspondre au module de charnière ;
une première zone d'affichage s'étendant à partir de la troisième zone d'affichage et disposée dans le premier boîtier (21) ; et
une deuxième zone d'affichage s'étendant à partir de la troisième zone d'affichage et disposée dans le second boîtier (22),
ledit module de charnière comprenant une première pièce de raccordement (1001) conçue pour raccorder le premier support (51A) et la première pièce,
ledit dispositif électronique pliable (2) comprenant une première plaque (71) couplée à la première pièce de raccordement tout en correspondant à une zone latérale de la troisième zone d'affichage basée sur une ligne centrale (A) du dispositif électronique pliable (2), et
ladite première partie de raccordement (1001) comprenant une deuxième broche (P2) raccordée à la première pièce (810), conçue pour pouvoir tourner autour d'un axe de rotation parallèle au premier axe de rotation (C1), et insérée dans un deuxième glissière de broche (PR2) disposée dans le premier support (51A).

6. Dispositif électronique pliable (2) selon la revendication 1,
ledit module d'affichage souple (24) comprenant :
une troisième zone d'affichage positionnée de manière à correspondre au module de charnière ;
une première zone d'affichage s'étendant à partir de la troisième zone d'affichage et disposée dans le premier boîtier (21) ; et
une deuxième zone d'affichage s'étendant à partir de la troisième zone d'affichage et disposée dans le second boîtier (22),
ledit module de charnière comprenant une première pièce de raccordement (1001) conçue pour raccorder le premier support (51A) et la première pièce (810),
ledit dispositif électronique pliable (2) comprenant une première plaque (71) couplée à la première pièce de raccordement (1001) tout en correspondant à une zone latérale de la troisième zone d'affichage basée sur une ligne centrale (A) du dispositif électronique pliable (2), et
ladite première pièce de raccordement (1001) comprenant une deuxième broche (P2) raccordée au premier support (51A), conçue pour pouvoir tourner autour d'un axe de rotation parallèle au premier axe de rotation (C1), et insérée dans une deuxième glissière de broche (PR2) disposée dans la première pièce (810).

7. Dispositif électronique pliable (2) selon la revendication 1, ladite première pièce (810) comprenant un coulisseau à mouvement de rotation (RMSL1) positionnée dans une glissière de guidage de mouvement de rotation (RMGR1) compris dans le module de charnière, et
ledit premier axe de rotation (C1) étant fourni par une combinaison de la glissière de guidage de mouvement de rotation (RMGR1) et du coulisseau à mouvement de rotation (RMSL1).

8. Dispositif électronique pliable (2) selon la revendication 1, ladite deuxième pièce (820) étant reliée à un arbre compris dans le module de charnière, et ledit deuxième axe de rotation (C2) étant fourni par l'arbre.

9. Dispositif électronique pliable (2) selon la revendication 1, ledit module de charnière comprenant un engrenage à came supporté élastiquement, et ladite deuxième pièce (820) étant reliée à l'engrenage à came correspondant au deuxième axe de rotation (C2).

10. Dispositif électronique pliable (2) selon la revendication 1, ledit module de charnière comprenant :
un premier guide de mouvement linéaire (LMG1) conçu de sorte que la première pièce (810) et le premier support (51A) soient reliés l'un à l'autre et conçus pour être coulissants suivant la première direction linéaire (LD1) ;
un deuxième guide de mouvement linéaire (LMG2) conçu de sorte que la deuxième pièce (820) et le premier support (51A) soient reliés l'un à l'autre et conçus pour être coulissants suivant la seconde direction linéaire (LD2) ;
un troisième guide de mouvement linéaire (LMG3) conçu de sorte que la troisième pièce (830) et le second support (52A) soient reliés l'un à l'autre et conçus pour être coulissants suivant la troisième direction linéaire (LD3) ; et
un quatrième guide de mouvement linéaire (LMG4) conçu de sorte que la quatrième pièce (840) et le second support (52A) soient reliés l'un à l'autre et conçus pour être coulissants suivant la quatrième direction linéaire (LD4),
ledit premier guide de mouvement linéaire (LMG1) comprenant :
une premier glissière de guidage de mouvement linéaire (LMGR1) comprise dans la première pièce (810) ; et
un premier coulisseau à mouvement linéaire (LMSL1) compris dans le premier support (51A) et inséré dans la première glissière de guidage de mouvement linéaire (LMGR1),
ledit deuxième guide de mouvement linéaire (LMG2) comprenant :
une deuxième glissière de guidage de mouvement linéaire (LMGR2) comprise dans le premier support (51A) ; et
un deuxième coulisseau à mouvement linéaire (LMSL2) compris dans la deuxième pièce (820) et inséré dans la deuxième glissière de guidage de mouvement linéaire (LMGR2),
ledit troisième guide de mouvement linéaire (LMG3) comprenant :
une troisième glissière de guidage de mouvement linéaire (LMGR3) comprise dans la troisième pièce (830) ; et
un troisième coulisseau à mouvement linéaire (LMSL3) compris dans le second support (52A) et inséré dans la troisième glissière de guidage de mouvement linéaire (LMGR3),
ledit quatrième guide de mouvement linéaire (LMG4) comprenant :
une quatrième glissière de guidage de mouvement linéaire (LMGR4) comprise dans le second support (52A) ; et
un quatrième coulisseau à mouvement linéaire (LMSL4) compris dans la quatrième pièce (840) et inséré dans la quatrième glissière de guidage de mouvement linéaire (LMGR4),
ladite première broche (P1) étant couplée au deuxième coulisseau à mouvement linéaire (LMSL2), et ladite troisième broche (P3) étant couplée au quatrième coulisseau à mouvement linéaire (LMSL4).

11. Dispositif électronique pliable (2) selon la revendication 10, ledit module de charnière comprenant :
un premier élément de support coulissant (SS1) positionné dans la première glissière de guidage de mouvement linéaire (LMGR1) et conçu pour supporter élastiquement le premier coulisseau à mouvement linéaire (LMSL1) ; et
un second élément de support coulissant (SS2) positionné dans la troisième glissière de guidage de mouvement linéaire (LMGR3) et conçu pour supporter élastiquement le troisième coulisseau à mouvement linéaire (LMSL3).

12. Dispositif électronique pliable (2) selon la revendication 1,
ledit module d'affichage souple (24) comprenant :
une troisième zone d'affichage positionnée de manière à correspondre au module de charnière ;
une première zone d'affichage s'étendant à partir de la troisième zone d'affichage et disposée dans le premier boîtier (21) ; et
une deuxième zone d'affichage s'étendant à partir de la troisième zone d'affichage et disposée dans le second boîtier (22),
ledit module de charnière comprenant :
une première pièce de raccordement (1001) conçue pour raccorder le premier support (51A) et la première pièce (810) ; et
une seconde pièce de raccordement (1002) conçue pour raccorder le second support (52A) et la troisième pièce (830), ledit dispositif électronique pliable (2) comprenant :
une première plaque (71) couplée à la première pièce de raccordement (1001) tout en correspondant à une zone latérale de la troisième zone d'affichage basée sur la ligne centrale (A) du dispositif électronique pliable (2) ; et
une seconde plaque (72) couplée à la seconde pièce de raccordement (1002) tout en correspondant à l'autre zone latérale de la troisième zone d'affichage basée sur la ligne centrale (A) du dispositif électronique pliable (2),
ladite première pièce de raccordement (1001) comprenant une deuxième broche (P2) raccordée à la première pièce (810), conçue pour pouvoir tourner autour d'un axe de rotation parallèle au premier axe de rotation (C1), et insérée dans un deuxième glissière de broche (PR2) disposée dans le premier support (51A), et
ladite seconde pièce de raccordement (1002) comprenant une quatrième broche (P4) raccordée à la troisième pièce (830), conçue pour pouvoir tourner autour d'un axe de rotation parallèle au troisième axe de rotation (C3), et insérée dans une quatrième glissière de broche (PR4) disposée dans le second support (52A).

13. Dispositif électronique pliable (2) selon la revendication 1,
ledit module d'affichage souple (24) comprenant :
une troisième zone d'affichage positionnée de manière à correspondre au module de charnière ;
une première zone d'affichage s'étendant à partir de la troisième zone d'affichage et disposée dans le premier boîtier (21) ; et
une deuxième zone d'affichage s'étendant à partir de la troisième zone d'affichage et disposée dans le second boîtier (22),
ledit module de charnière comprenant :
une première pièce de raccordement (1001) conçue pour raccorder le premier support (51A) et la première pièce (810) ; et
une seconde pièce de raccordement (1002) conçue pour raccorder le second support (52A) et la troisième pièce (830),
ledit dispositif électronique pliable (2) comprenant :
une première plaque (71) couplée à la première pièce de raccordement (1001) tout en correspondant à une zone latérale de la troisième zone d'affichage basée sur la ligne centrale (A) du dispositif électronique pliable (2) ; et
une seconde plaque (72) couplée à la seconde pièce de raccordement (1002) tout en correspondant à l'autre zone latérale de la troisième zone d'affichage basée sur la ligne centrale (A) du dispositif électronique pliable (2),
ladite première partie de raccordement (1001) comprenant une deuxième broche (P2) raccordée au premier support (51A), conçue pour pouvoir tourner autour d'un axe de rotation (C5) parallèle au premier axe de rotation (C1), et insérée dans une deuxième glissière de broche (PR2) disposée dans la première pièce (810),
ladite seconde pièce de raccordement (1002) comprenant une quatrième broche (P4) raccordée au second support (52A), conçue pour pouvoir tourner autour d'un axe de rotation (C6) parallèle au troisième axe de rotation (C3), et insérée dans une quatrième glissière de broche (PR4) disposée dans la troisième pièce (830).

14. Dispositif électronique pliable (2) selon la revendication 1, ledit module de charnière comprenant :
un premier arbre (1110) relié à la deuxième pièce (820) et conçu pour fournir le deuxième axe de rotation (C2) ;
un second arbre (1120) relié à la quatrième pièce (840) et conçu pour fournir le quatrième axe de rotation (C4) ;
un troisième engrenage circulaire (1410) conçu pour s'engrener avec un premier engrenage circulaire (1111) compris dans le premier arbre (1110) ;
un quatrième engrenage circulaire (1420) conçu pour s'engrener avec un deuxième engrenage circulaire (1121) et le troisième engrenage circulaire (1410) compris dans le second arbre (1120) ; et
un engrenage à came supporté élastiquement, et
ledit premier arbre (1110) et ledit second arbre (1120) étant reliés à l'engrenage à came.
